# EUROPEAN PATENT APPLICATION

(11) **EP 4 227 095 A1**
(43) Date of publication of application: **16.08.2023**
(21) Application number: 20956693.4
(22) Date of filing: 06.10.2020
(51) Int. Cl.: B33Y 50/00, B29C 64/386, G06F 30/10

(54) **DATA GENERATION METHOD, MOLDING ACCEPTANCE METHOD, DATA GENERATION DEVICE, DISPLAY DEVICE, MOLDING METHOD, COMPUTER PROGRAM, AND RECORDING MEDIUM**

(71) Applicant: NIKON CORPORATION, Minato-ku Tokyo 108-6290 (JP)
(72) Inventor: SUGISHITA, Shigenori, Tokyo 108-6290 (JP); ISHIKAWA, Motofusa, Tokyo 108-6290 (JP); KURAMI, Toshimitsu, Tokyo 108-6290 (JP)
(74) Representative: Hoffmann Eitle
(86) International application number: PCT/JP2020/037905
(87) International publication number: WO 2022/074745

(57) **Abstract**

A data generation method includes: generating model data representing a three-dimensional model of a pipe based on a value of a parameter defining a shape of the pipe designated by a user using an input screen; and setting, as a value of a parameter defining a position of an intermediate part of the pipe, a value of a parameter defining a position away from a position of an edge part of the pipe by a first distance.

## Description

### Technical Field

The present invention relates to a technical field of a data generation method, a build contract method, a data generation apparatus, a display apparatus, a build method, a computer program, and a recording medium for generating model data representing a three-dimensional model of an object, for example.

### Background Art

A Patent Literature 1 discloses a manufacturing method of a three-dimensional object including: receiving digital information of the three-dimensional object; and building the three-dimensional object based on the received digital information. The manufacturing method disclosed in the Patent Literature 1 requires receiving the digital information of the three-dimensional object from a customer. Thus, the manufacturing method disclosed in the Patent Literature 1 has a technical problem that it is impossible to assist the customer to easily generate the digital information of the three-dimensional object.

### Citation List

### Patent Literature

Patent Literature 1: US2009/271323A1

### Summary of Invention

A first aspect provide a data generation method of generating model data representing a three-dimensional model of a pipe that is an object additively built by a build apparatus, wherein the data generation method includes: automatically setting, as a value of a parameter defining a position of an intermediate part of the pipe, a value of a parameter that is different from a value of a parameter defining a shape of the pipe designated by a user using an input screen displayed on a display apparatus and that defines a position away from a position of an edge part of the pipe by a first distance; providing a three-dimensional model to an output screen of the display apparatus based on the value of the parameter designated by the user using the input screen and the value of the parameter automatically set; and generating the model data based on the value of the parameter designated by the user using the input screen and the value of the parameter automatically set.

A second aspect provides a data generation method of generating model data representing a three-dimensional model of a pipe that is an object additively built by a build apparatus, wherein the data generation method includes: providing, to an output screen of a display apparatus, a three-dimensional model based on a value of a parameter defining a shape of the pipe designated by a user using an input screen displayed on the display apparatus; and changing the value of the parameter defining the shape of the pipe based on a change operation of the user to the output screen for changing a shape of the three-dimensional model displayed on the output screen, the three-dimensional model is a three-dimensional model represented in a three-dimensional coordinate system in which a first axis, a second axis, and a third axis are perpendicular to one another, the three-dimensional model viewed from the third axis is displayable on the output screen, on the output screen on which the three-dimensional model viewed from the third axis is displayed, the user is allowed to perform the change operation for changing a value of a parameter related to the first axis and a value of a parameter related to the first axis, a value of a parameter displayed on the input screen is changed, based on the change operation, to be the value of the parameter changed by the change operation and that defines a shape of the three-dimensional model, the model data is generated based on the value of the parameter displayed on the input screen.

A third aspect provides a data generation method of generating model data representing a three-dimensional model of a pipe that is an object additively built by a build apparatus, wherein the data generation method includes: providing, to an output screen of a display apparatus, a three-dimensional model based on a value of a parameter defining a shape of the pipe designated by a user using an input screen displayed on the display apparatus; changing the value of the parameter defining the shape of the pipe based on a change operation of the user to the output screen for changing a shape of the three-dimensional model displayed on the output screen; and generating the model data based on the value of the parameter designated by using the input screen and the value of the parameter changed by using the output screen, on the output screen, a part of the three-dimensional model at which the value of the parameter defining the shape of the pipe is changeable by the change operation is displayed.

A fourth aspect provides a data generation method of generating model data representing a three-dimensional model of a pipe that is an object additively built by a build apparatus, wherein the data generation method includes: generating the model data based on an outer diameter of the pipe and a length between an outer surface and an inner surface of the pipe that are designated as a value of a parameter defining a shape of the pipe by a user using an input screen displayed on a display apparatus; and setting the length between the outer surface and the inner surface of the pipe again so that an inner diameter of the pipe is maintained constant when the user re-designates the outer diameter by using the input screen.

A fifth aspect provides a data generation method of generating model data representing a three-dimensional model of a pipe that is an object additively built by a build apparatus, wherein the data generation method includes: generating the model data based on a length between an outer surface and an inner surface of the pipe that is designated as a value of a parameter defining a shape of the pipe by a user using an input screen displayed on a display apparatus; and setting an outer diameter of the pipe again so that an inner diameter of the pipe is maintained constant when the user re-designates the length between the outer surface and the inner surface by using the input screen.

A sixth aspect provides a data generation method of generating model data representing a three-dimensional model of a pipe that is an object additively built by a build apparatus, wherein the data generation method includes: automatically setting a value of other parameter when a value of one parameter out of an outer diameter of the pipe and a length between an outer surface and an inner surface of the pipe, which has been set as a value of a parameter defining a shape of the pipe by a user using an input screen displayed on a display apparatus, is set again by the user using the input screen; and generating the model data based on the value of the parameter set by the user and the value of the parameter automatically set.

A seventh aspect provides a data generation method of generating model data representing a three-dimensional model of an object that is additively built by a build apparatus, wherein the data generation method includes: generating the model data based on a value of a parameter defining a shape of the object designated by a user using an input screen displayed on a display apparatus; and setting a value of a parameter defining a position away from a position of a first part of the object by a first distance.

An eighth aspect provides a data generation method of generating model data representing a three-dimensional model of an object that is additively built by a build apparatus, wherein the data generation method includes: providing, to an output screen of a display apparatus, a three-dimensional model based on a value of a parameter defining a shape of the object designated by a user using an input screen displayed on the display apparatus; changing the value of the parameter defining the shape of the object based on a change operation of the user to the output screen for changing a shape of the three-dimensional model displayed on the output screen; and generating the model data based on the value of the parameter designated by using the input screen and the value of the parameter changed by using the output screen.

A ninth aspect provides a data generation method of generating model data representing a three-dimensional model of an object that is additively built by a build apparatus, wherein the data generation method includes: providing, to an output screen of a display apparatus, a three-dimensional model based on a value of a parameter defining a shape of the object designated by a user using an input screen displayed on the display apparatus; changing, based on a change operation of the user to the output screen for changing a shape of the three-dimensional model displayed on the output screen, a value of a parameter displayed on the input screen to be the value of the parameter changed by the change operation and that defines the shape of the three-dimensional model; and generating the model data based on the value of the parameter displayed on the input screen.

A tenth aspect provides a data generation method of generating model data representing a three-dimensional model of an object that is additively built by a build apparatus, wherein the data generation method includes: providing, to an output screen of a display apparatus, a three-dimensional model based on a value of a parameter defining a shape of the object designated by a user using an input screen displayed on the display apparatus; changing the value of the parameter defining the shape of the object based on a change operation of the user to the output screen for changing a shape of the three-dimensional model displayed on the output screen; and generating the model data based on the value of the parameter designated by using the input screen and the value of the parameter changed by using the output screen, on the output screen, a part of the three-dimensional model at which the value of the parameter defining the shape of the object is changeable by the change operation is displayed.

An eleventh aspect provides a data generation method of generating model data representing a three-dimensional model of an object that is additively built by a build apparatus, wherein the data generation method includes: generating the model data based on a first parameter and a second parameter, the first parameter is a parameter defining a shape of the object designated by a user using an input screen displayed on a display apparatus, the second parameter is a parameter defining the shape of the object; and setting the second parameter, which has been designated by the user, again so that a third parameter related to the shape of the object is maintained constant when the user re-designates the first parameter by using the input screen.

A twelfth aspect provides a build contract method of contracting to additively build a pipe, wherein the build contract method includes: providing a display content related to an input screen to a user; providing, to the input screen, a content of a value of a parameter defining a shape of the pipe designated by a user using an input screen displayed on a display apparatus; automatically setting, as a value of a parameter defining a position of an intermediate part of the pipe, a value of a parameter that is different from the value of the parameter defining the shape of the pipe designated by the user using the input screen and that defines a position away from a position of an edge part of the pipe by a first distance; providing a three-dimensional model to an output screen of the display apparatus based on the value of the parameter designated by the user using the input screen and the value of the parameter automatically set; and providing, to an output screen of the display apparatus, a three-dimensional model based on the value of the parameter designated by the user using the input screen and the value of the parameter automatically set.

A thirteenth aspect provides a build contract method of contracting to additively build a pipe, wherein the build contract method includes: providing a display content related to an input screen to a user; providing, to the input screen, a content of a value of a parameter defining a shape of the pipe designated by a user using an input screen displayed on a display apparatus; providing, to an output screen of the display apparatus, a three-dimensional model based on the value of the parameter designated by the user; and changing the value of the parameter defining the shape of the pipe based on a change operation of the user to the output screen for changing a shape of the three-dimensional model displayed on the output screen, the three-dimensional model is a three-dimensional model represented in a three-dimensional coordinate system in which a first axis, a second axis, and a third axis are perpendicular to one another, the three-dimensional model viewed from the third axis is displayable on the output screen, on the output screen on which the three-dimensional model viewed from the third axis is displayed, the user is allowed to perform the change operation for changing a value of a parameter related to the first axis and a value of a parameter related to the first axis, a value of a parameter displayed on the input screen is changed, based on the change operation, to be the value of the parameter changed by the change operation and that defines a shape of the three-dimensional model.

A fourteenth aspect provides a build contract method of contracting to additively build a pipe, wherein the build contract method includes: providing a display content related to an input screen to a user; providing, to the input screen, a content of a value of a parameter defining a shape of the pipe designated by a user using an input screen displayed on a display apparatus; providing, to an output screen of the display apparatus, a three-dimensional model based on the value of the parameter designated by the user; and changing the value of the parameter defining the shape of the pipe based on a change operation of the user to the output screen for changing a shape of the three-dimensional model displayed on the output screen, on the output screen, a part of the three-dimensional model at which the value of the parameter defining the shape of the pipe is changeable by the change operation is displayed.

A fifteenth aspect provides a build contract method of contracting to additively build a pipe, wherein the build contract method includes: providing a display content related to an input screen to a user; providing, to the input screen, a content of an outer diameter of the pipe and a length between an outer surface and an inner surface of the pipe that are designated as a value of a parameter defining a shape of the pipe by a user using an input screen displayed on a display apparatus; and setting the length between the outer surface and the inner surface of the pipe again so that an inner diameter of the pipe is maintained constant when the user re-designates the outer diameter by using the input screen.

A sixteenth aspect provides a build contract method of contracting to additively build a pipe, wherein the build contract method includes: providing a display content related to an input screen to a user; providing, to the input screen, a content of a length between an outer surface and an inner surface of the pipe that is designated as a value of a parameter defining a shape of the pipe by a user using an input screen displayed on a display apparatus; and setting an outer diameter of the pipe again so that an inner diameter of the pipe is maintained constant when the user re-designates the length between the outer surface and the inner surface by using the input screen.

A seventeenth aspect provides a build contract method of contracting to additively build a pipe, wherein the build contract method includes: providing a display content related to an input screen to a user; providing, to the input screen, a content of a value of a parameter defining a shape of the pipe designated by a user using an input screen displayed on a display apparatus; and automatically setting a value of other parameter when a value of one parameter out of an outer diameter of the pipe and a length between an outer surface and an inner surface of the pipe, which has been set as the value of the parameter defining the shape of the pipe by the user using the input screen, is set again by the user using the input screen.

An eighteenth aspect provides a build contract method of contracting to additively build an object, wherein the build contract method includes: providing a display content related to an input screen to a user; providing, to the input screen, a content of a value of a parameter defining a shape of the object designated by a user using an input screen displayed on a display apparatus; and setting a value of a parameter defining a position away from a position of a first part of the object by a first distance.

A nineteenth aspect provides a build contract method of contracting to additively build an object, wherein the build contract method includes: providing a display content related to an input screen to a user; providing, to the input screen, a content of a value of a parameter defining a shape of the object designated by a user using an input screen displayed on a display apparatus; providing, to an output screen of the display apparatus, a three-dimensional model based on the value of the parameter designated by the user; and changing the value of the parameter defining the shape of the object based on a change operation of the user to the output screen for changing a shape of the three-dimensional model displayed on the output screen.

A twentieth aspect provides a build contract method of contracting to additively build an object, wherein the build contract method includes: providing a display content related to an input screen to a user; providing, to the input screen, a content of a value of a parameter defining a shape of the object designated by a user using an input screen displayed on a display apparatus; providing, to an output screen of the display apparatus, a three-dimensional model based on the value of the parameter designated by the user; changing, based on a change operation of the user to the output screen for changing a shape of the three-dimensional model displayed on the output screen, a value of a parameter displayed on the input screen to be the value of the parameter changed by the change operation and that defines the shape of the three-dimensional model; and generating the model data based on the value of the parameter displayed on the input screen.

A twenty-first aspect provides a build contract method of contracting to additively build an object, wherein the build contract method includes: providing a display content related to an input screen to a user; providing, to the input screen, a content of a value of a parameter defining a shape of the object designated by a user using an input screen displayed on a display apparatus; providing, to an output screen of the display apparatus, a three-dimensional model based on the value of the parameter designated by the user; and changing the value of the parameter defining the shape of the object based on a change operation of the user to the output screen for changing a shape of the three-dimensional model displayed on the output screen, on the output screen, a part of the three-dimensional model at which the value of the parameter defining the shape of the object is changeable by the change operation is displayed.

A twenty-second aspect provides a build contract method of contracting to additively build an object, wherein the build contract method includes: providing a display content related to an input screen to a user; providing, to the input screen, a content of values of a first parameter and a second parameter, the first parameter is a parameter defining a shape of the object by a user using the input screen displayed on a display apparatus, the second parameter is a parameter defining the shape of the object; and setting the second parameter, which has been designated by the user, again so that a third parameter related to the shape of the object is maintained constant when the user re-designates the first parameter by using the input screen.

A twenty-third aspect provides a data generation apparatus configured to generate model data representing a three-dimensional model of a pipe that is an object additively built by a build apparatus, wherein the data generation apparatus is configured to: automatically set, as a value of a parameter defining a position of an intermediate part of the pipe, a value of a parameter that is different from a value of a parameter defining a shape of the pipe designated by a user using an input screen displayed on a display apparatus and that defines a position away from a position of an edge part of the pipe by a first distance; and provide a three-dimensional model to an output screen of the display apparatus based on the value of the parameter designated by the user using the input screen and the value of the parameter automatically set.

A twenty-fourth aspect provides a data generation apparatus configured to generate model data representing a three-dimensional model of a pipe that is an object additively built by a build apparatus, wherein the data generation apparatus is configured to: provide, to an output screen of a display apparatus, a three-dimensional model based on a value of a parameter defining a shape of the pipe designated by a user using an input screen displayed on the display apparatus; and change the value of the parameter defining the shape of the pipe based on a change operation of the user to the output screen for changing a shape of the three-dimensional model displayed on the output screen, the three-dimensional model is a three-dimensional model represented in a three-dimensional coordinate system in which a first axis, a second axis, and a third axis are perpendicular to one another, the three-dimensional model viewed from the third axis is displayable on the output screen, on the output screen on which the three-dimensional model viewed from the third axis is displayed, the user is allowed to perform the change operation for changing a value of a parameter related to the first axis and a value of a parameter related to the first axis, a value of a parameter displayed on the input screen is changed, based on the change operation, to be the value of the parameter changed by the change operation and that defines a shape of the three-dimensional model, the model data is generated based on the value of the parameter displayed on the input screen.

A twenty-fifth aspect provides a data generation apparatus configured to generate model data representing a three-dimensional model of a pipe that is an object additively built by a build apparatus, wherein the data generation apparatus is configured to: provide, to an output screen of a display apparatus, a three-dimensional model based on a value of a parameter defining a shape of the pipe designated by a user using an input screen displayed on the display apparatus; and change the value of the parameter defining the shape of the pipe based on a change operation of the user to the output screen for changing a shape of the three-dimensional model displayed on the output screen, on the output screen, a part of the three-dimensional model at which the value of the parameter defining the shape of the pipe is changeable by the change operation is displayed, the data generation apparatus is configured to generate the model data based on the value of the parameter designated by using the input screen and the value of the parameter changed by using the output screen.

A twenty-sixth aspect provides a data generation apparatus configured to generate model data representing a three-dimensional model of a pipe that is an object additively built by a build apparatus, wherein the data generation apparatus is configured to: generate the model data based on an outer diameter of the pipe and a length between an outer surface and an inner surface of the pipe that are designated as a value of a parameter defining a shape of the pipe by a user using an input screen displayed on a display apparatus; and set the length between the outer surface and the inner surface of the pipe again so that an inner diameter of the pipe is maintained constant when the user re-designates the outer diameter by using the input screen.

A twenty-seventh aspect provides a data generation apparatus configured to generate model data representing a three-dimensional model of a pipe that is an object additively built by a build apparatus, wherein the data generation apparatus is configured to: generate the model data based on a length between an outer surface and an inner surface of the pipe that is designated as a value of a parameter defining a shape of the pipe by a user using an input screen displayed on a display apparatus; and set an outer diameter of the pipe again so that an inner diameter of the pipe is maintained constant when the user re-designates the length between the outer surface and the inner surface by using the input screen.

A twenty-eighth aspect provides a data generation apparatus configured to generate model data representing a three-dimensional model of a pipe that is an object additively built by a build apparatus, wherein the data generation apparatus is configured to: automatically set a value of other parameter when a value of one parameter out of an outer diameter of the pipe and a length between an outer surface and an inner surface of the pipe, which has been set as a value of a parameter defining a shape of the pipe by a user using an input screen displayed on a display apparatus, is set again by the user using the input screen; and generate the model data based on the value of the parameter set by the user and the value of the parameter automatically set.

A twenty-ninth aspect provides a data generation apparatus configured to generate model data representing a three-dimensional model of an object that is additively built by a build apparatus, wherein the data generation apparatus is configured to: generate the model data based on a value of a parameter defining a shape of the object designated by a user using an input screen displayed on a display apparatus; and set a value of a parameter defining a position away from a position of a first part of the object by a first distance.

A thirtieth aspect provides a data generation apparatus configured to generate model data representing a three-dimensional model of an object that is additively built by a build apparatus, wherein the data generation apparatus is configured to: provide, to an output screen of a display apparatus, a three-dimensional model based on a value of a parameter defining a shape of the object designated by a user using an input screen displayed on the display apparatus; change the value of the parameter defining the shape of the object based on a change operation of the user to the output screen for changing a shape of the three-dimensional model displayed on the output screen; and generate the model data based on the value of the parameter designated by using the input screen and the value of the parameter changed by using the output screen.

A thirty-first aspect provides a data generation apparatus configured to generate model data representing a three-dimensional model of an object that is additively built by a build apparatus, wherein the data generation apparatus is configured to: provide, to an output screen of a display apparatus, a three-dimensional model based on a value of a parameter defining a shape of the object designated by a user using an input screen displayed on the display apparatus; change, based on a change operation of the user to the output screen for changing a shape of the three-dimensional model displayed on the output screen, a value of a parameter displayed on the input screen to be the value of the parameter changed by the change operation and that defines the shape of the three-dimensional model; and generate the model data based on the value of the parameter designated by using the input screen and the value of the parameter changed by using the output screen.

A thirty-second aspect provides a data generation apparatus configured to generate model data representing a three-dimensional model of an object that is additively built by a build apparatus, wherein the data generation apparatus is configured to: provide, to an output screen of a display apparatus, a three-dimensional model based on a value of a parameter defining a shape of the object designated by a user using an input screen displayed on the display apparatus; change the value of the parameter defining the shape of the object based on a change operation of the user to the output screen for changing a shape of the three-dimensional model displayed on the output screen; and generate the model data based on the value of the parameter designated by using the input screen and the value of the parameter changed by using the output screen, on the output screen, a part of the three-dimensional model at which the value of the parameter defining the shape of the object is changeable by the change operation is displayed.

A thirty-third aspect provides a data generation apparatus configured to generate model data representing a three-dimensional model of an object that is additively built by a build apparatus, wherein the data generation apparatus is configured to: generate the model data based on a first parameter and a second parameter, the first parameter is a parameter defining a shape of the object designated by a user using an input screen displayed on a display apparatus, the second parameter is a parameter defining the shape of the object; and set the second parameter, which has been designated by the user, again so that a third parameter related to the shape of the object is maintained constant when the user re-designates the first parameter by using the input screen.

A thirty-fourth aspect provides a display apparatus including: an obtaining unit configured to obtain information related to the input screen from the data generation apparatus provided by any one of the twenty-sixth aspect to the twenty-ninth aspect and the thirty-third aspect described above; and display unit configured to display the input screen based on the information obtained by the obtaining unit.

A thirty-fifth aspect provides a display apparatus including: an obtaining unit configured to obtain information related to the input screen and the output screen from the data generation apparatus provided by any one of the twenty-third aspect to the twenty-fifth aspect and the thirtieth aspect to the thirty-second aspect described above; and display unit configured to display the input screen and the output screen based on the information obtained by the obtaining unit.

A thirty-sixth aspect provides a build method of building an object, wherein the build method includes: generating the model data by using the data generation method provided by any one of the first aspect to the eleventh aspect described above; and controlling a build apparatus to build the object based on the model data.

A thirty-seventh aspect provides a build method of building an object, wherein the build method includes: generating the model data by using the data generation apparatus provided by the twenty-second aspect to the thirty-second aspect described above; and controlling a build apparatus to build the object based on the model data.

A thirty-eighth aspect provides a computer program that allows a computer to execute the data generation method provided by any one of the first aspect to the eleventh aspect described above.

A thirty-ninth aspect provides a computer program that allows a computer to execute the build contract method provided by any one of twelfth aspect to the twenty-second aspect described above.

A fortieth aspect provides a computer program that allows a computer to execute the build method provided by the thirty-sixth aspect or the thirty-seventh aspect described above.

A forty-first aspect provides a recording medium on which the computer program provided by the thirty-ninth aspect to the fortieth aspect described above is recorded.

An operation and other advantage of the present invention will be described in a below-described example embodiment.

### Brief Description of Drawings

[FIG. 1] FIG. 1 is a block diagram that illustrates a configuration of a build system in a present example embodiment.
[FIG. 2] FIG. 2 is a cross-sectional view that illustrates a configuration of the build apparatus in the present example embodiment.
[FIG. 3] FIG. 3 is a system configuration diagram that illustrates a system configuration of the build apparatus in the present example embodiment.
[FIG. 4] FIG. 4 is a block diagram that illustrates a configuration of a data generation server in the present example embodiment.
[FIG. 5] FIG. 5 is a block diagram that illustrates a configuration of a terminal apparatus in the present example embodiment.
[FIG. 6] FIG. 6 is a flowchart that illustrates a flow of a process (namely, a process for building a three-dimensional structural object, and for example, a build contract process) performed by the build system.
[FIG. 7] FIG. 7 is a planar view that illustrates one example of a setting GUI.
[FIG. 8] FIG. 8 is a planar view that illustrates one example of an input screen for setting shape information related to a shape of a pipe.
[FIG. 9] FIG. 9 is a planar view that illustrates a wire frame model of the pipe.
[FIG. 10] FIG. 10 is a planar view that illustrates a surface model of the pipe associated with a plurality of points through which the pipe passes.
[FIG. 11] FIG. 11 is a planar view that illustrates one example of an input screen for setting shape information related to a shape of a plate.
[FIG. 12] FIG. 12 is a planar view that illustrates a solid model of the plate.
[FIG. 13] FIG. 13 is a planar view that illustrates a wire frame model of the plate.
[FIG. 14] FIG. 14 is a schematic diagram that illustrates a plurality of points through which the pipe passes.
[FIG. 15] FIG. 15 is a cross-sectional view that illustrates a start edge part of the pipe.
[FIG. 16] FIG. 16 is a planar view that illustrates an input screen in a first modified example.
[FIG. 17] FIG. 17 is a planar view that illustrates a three-dimensional model displayed on an output screen.
[FIG. 18] FIG. 18 is a planar view that illustrates a three-dimensional model displayed on an output screen.
[FIG. 19] FIG. 19 is a cross-sectional view that illustrates a cross-section of the pipe.
[FIG. 20] FIG. 20 is a planar view that illustrates one example of a setting GUI including object information.
[FIG. 21] FIG. 21 is a planar view that illustrates another example of the input screen for setting the shape information related to the shape of the plate.
[FIG. 22] FIG. 22 is a planar view that illustrates one example of the output screen included in the setting GUI.

### Description of Example embodiments

Next, an example embodiment of a data generation method, a build contract method, a data generation apparatus, a display apparatus, a build method, a computer program and a recording medium will be described with reference to drawings. In the below-described description, the example embodiment of a data generation method, a build contract method, a data generation apparatus, a display apparatus, a build method, a computer program and a recording medium will be described by using a build system SYS.

### (1) Configuration of Build System SYS

Firstly, a configuration of the build system will be described.

### (1-1) Entire Configuration of Build System SYS

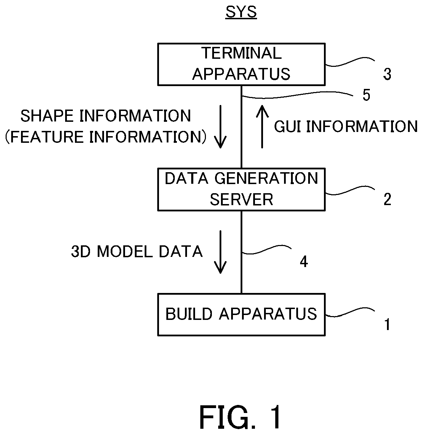

Firstly, with reference to FIG. 1, one example of an entire configuration of the build system SYS will be described. FIG. 1 is a block diagram that illustrates the entire configuration of the build system SYS.

The build system SYS includes a build apparatus 1 and a data generation server 2. The build apparatus 1 and the data generation server 2 are configured to communicate with each other through a communication network 4 that includes at least one of a wired communication network and a wireless communication network. The data generation server 2 is configured to communicate with a terminal apparatus 3 through a communication network 5 that includes at least one of a wired communication network and a wireless communication network. Note that the communication networks 4 and 5 may be separate communication networks or the same communication network. The terminal apparatus 3 may be an apparatus constitutes a part of the build system SYS. Namely, the build system SYS may include the terminal apparatus 3. Alternatively, the build system SYS may not include the terminal apparatus 3. In this case, any apparatus that is configured to communicate with the data generation server 3 of the build system SYS (for example, an information processing apparatus such as a computer of a below-described terminal user) may be used as the terminal apparatus 3.

The build apparatus 1 is an apparatus that is configured to build a three-dimensional structural object (namely, a three-dimensional object that has a magnitude (a size) in each of three-dimensional directions). Especially, in the present example embodiment, the build apparatus 1 builds the three-dimensional structural object by performing an additive processing. Namely, the build apparatus 1 additively builds the three-dimensional structural object.

The data generation server 2 is an apparatus that is configured to generate three-dimensional model data representing a three-dimensional model of the three-dimensional structural object to be additively built by the build apparatus 1. The data generation server 2 may be referred to as a data generating apparatus. The data generation server 2 transmits the generated three-dimensional model data to the build apparatus 1 through the communication network 4. The build apparatus 1 builds the three-dimensional structural object based on the three-dimensional model data transmitted from the data generation server 2.

The terminal apparatus 3 is an apparatus that is operable by a user to set (namely, designate) feature information related to a feature of the three-dimensional structural object to be additively built by the build apparatus 1. In the below-describe description, the user who is allowed to operate the terminal apparatus 3 is referred to as the "terminal user". The terminal user may be typically a person who wants to build the three-dimensional structural object by using the build apparatus 1. In the present example embodiment, an example in which the terminal apparatus 3 is an apparatus that is operable by the terminal user to set shape information related to a shape of the three-dimensional structural object to be additively built by the build apparatus 1 will be described as an example of the feature information.

The terminal apparatus 3 transmits the shape information set by the terminal user to the data generation server 2 through the communication network 5. The data generation server 2 generates the three-dimensional model data based on the shape information transmitted from the terminal apparatus 3. Namely, the data generation server 2 generates the three-dimensional model data representing the three-dimensional model of the three-dimensional structural object having the shape that is defined by the shape information set by the terminal user. As a result, the build apparatus 1 builds the three-dimensional structural object having the shape that is defined by the shape information set by the terminal user.

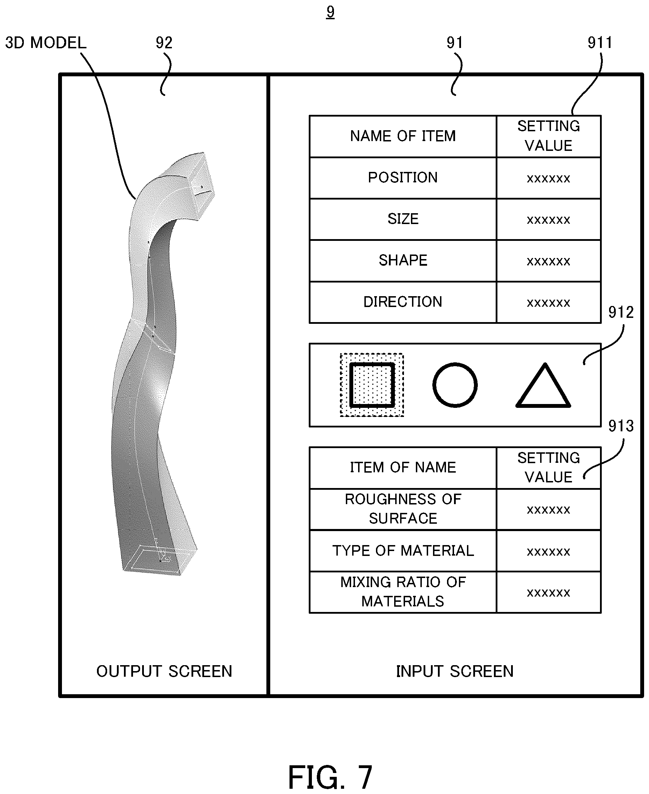

The terminal apparatus 3 may display a setting GUI (Graphical User Interface) 9 (see FIG. 7 and so on) that includes an input screen 22 that is operable by the user to set the shape information, as described in detail later. In this case, the data generation server 2 transmits GUI information related to the setting GUI 9 to the terminal apparatus 3 through the communication network 5. The terminal apparatus 3 displays the setting GUI 9 based on the GUI information. The terminal user sets the shape information by using the setting GUI 9 displayed by the terminal apparatus 3.

The terminal user may be the same as or different from a user who is allowed to operate the data generation server 2 (hereinafter, it is referred to as a "server user"). The terminal user may be the same as or different from a user who is allowed to operate the build apparatus 1 (hereinafter, it is referred to as a "build user"). When the terminal user is different from the build user, the build system SYS may be regarded to be equivalent to a build contract system in which the terminal user is a consignor who requires the build user to build the three-dimensional structural object and the build user is a consignee who is required to build the three-dimensional structural object required to be built by the terminal user. Namely, a following build process may be equivalent to a build contract process (a build contract method).

### (1-2) Configuration of Build Apparatus 1

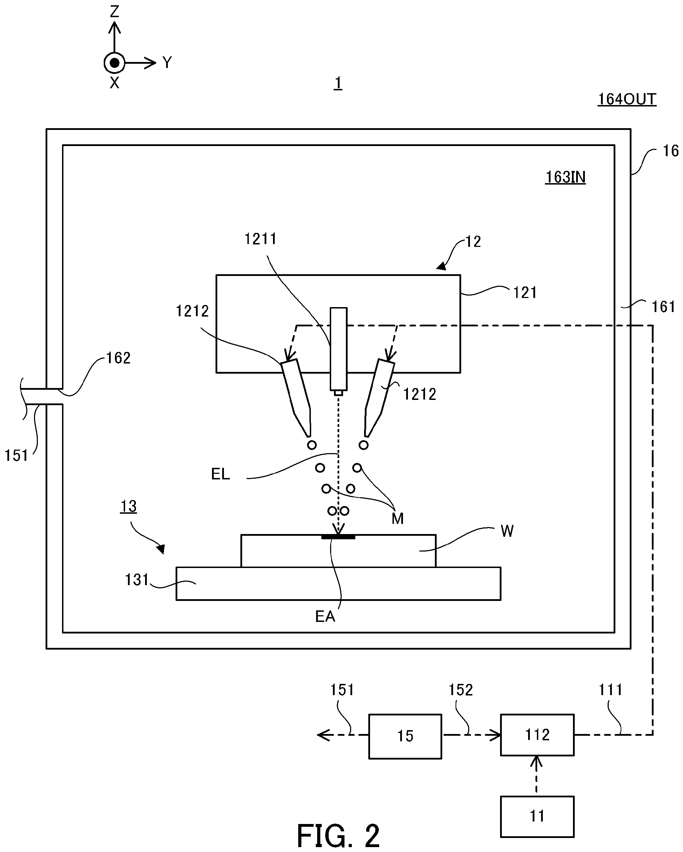

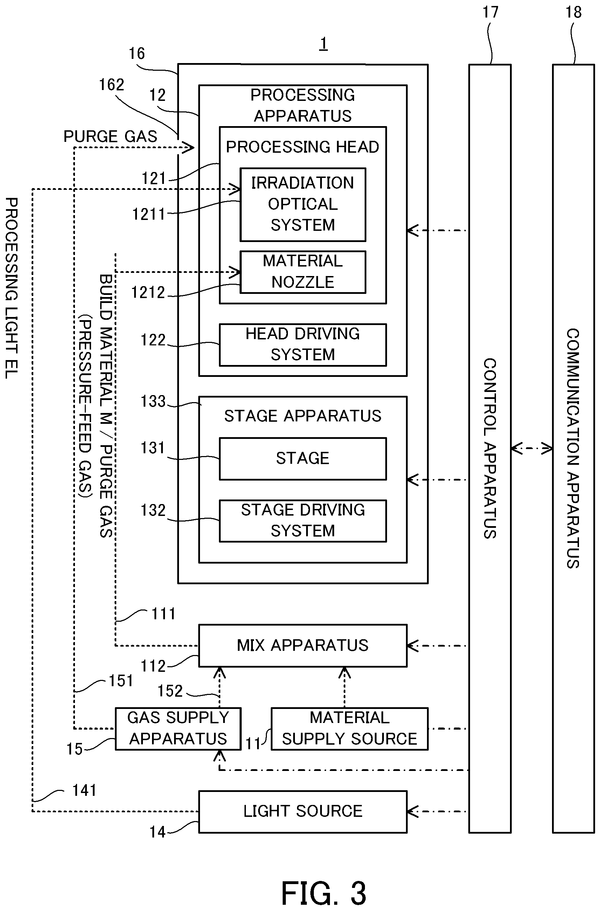

Next, with reference to FIG. 2 and FIG. 3, a configuration of the build apparatus 1 will be described. Firstly, with reference to FIG. 2 and FIG. 3, the configuration of the build apparatus 1 in the present example embodiment will be described. FIG. 2 is a cross-sectional view that illustrates one example of the configuration of the build apparatus 1 in the present example embodiment. FIG. 3 is a system configuration diagram that illustrates one example of a system configuration of the build apparatus 1 in the present example embodiment.

In the below-described description, a positional relationship of various components included in the build apparatus 1 will be described by using a build coordinate system corresponding to an XYZ rectangular coordinate system that is defined by a X-axis, a Y-axis and a Z-axis that are perpendicular to one another. Note that each of an X-axis direction and a Y-axis direction is assumed to be a horizontal direction (namely, a predetermined direction in a horizontal plane) and a Z-axis direction is assumed to be a vertical direction (namely, a direction that is perpendicular to the horizontal plane, and substantially a vertical direction or a gravity direction) in the below-described description, for convenience of the description. Moreover, rotational directions (in other words, inclination directions) around the X-axis, the Y-axis and the Z-axis are referred to as a θX direction, a θY direction and a θZ direction, respectively. Here, the Z-axis direction may be the gravity direction. Moreover, an XY plane may be a horizontal direction.

The build apparatus 1 is configured to perform a build operation for forming the three-dimensional structural object. The build apparatus 1 is configured to form the three-dimensional structural object on a workpiece W that is a base member for forming the three-dimensional structural object. When the workpiece W is a below-described stage 131, the build apparatus 1 is configured to form the three-dimensional structural object on the stage 131. When the workpiece W is an existing object placed on the stage 131 (alternatively, placed on the stage 131), the build apparatus 1 may be configured to form the three-dimensional structural object on the existing object. In this case, the build apparatus 1 may form the three-dimensional structural object that is integrated with the existing object. An operation for forming the three-dimensional structural object that is integrated with the existing object may be regarded to be equivalent to an operation for adding a new structural object to the existing object. Note that the existing structural object may be an item that needs to be repaired having a missing part, for example. The build apparatus 1 may form the three-dimensional structural object on the item that needs to be repaired to fill in the missing part of the item that needs to be repaired. Alternatively, the build apparatus 1 may form the three-dimensional structural object that is separable from the existing object. Note that FIG. 2 illustrates an example in which the workpiece W is the existing object held by the stage 131. Moreover, in the below-described description, the example in which the workpiece W is the existing object held by the stage 131 will be described.

In the present example embodiment, an example in which the build apparatus 1 build the three-dimensional structural object by performing the additive processing (the additive building) based on a Laser Metal Deposition (LMD). In this case, it can be said that the build apparatus 1 is a 3D printer that forms an object by using an Additive layer manufacturing technique. Note that the Additive layer manufacturing technique may be referred to as a Rapid Prototyping, a Rapid Manufacturing or an Additive Manufacturing. The Laser Metal Deposition may be referred to as a Direct Metal Deposition, a Direct Energy Deposition, a Laser Cladding, a Laser Engineered Net Shaping, a Direct Light Fabrication, a Laser Consolidation, a Shape Deposition Manufacturing, a Wire Feed Laser Deposition, a Gas Through Wire, a Laser Powder Fusion, a Laser Metal Forming, a Selective Laser Powder Re-melting, a Laser Direct Casting, a Laser Powder Deposition, a Laser Additive Manufacturing or a Laser Rapid Forming.

The build apparatus 1 forms the three-dimensional structural object by processing a build material M with a processing light EL. The build material M is a material that is molten by an irradiation with the processing light EL having a predetermined intensity or more intensity. At least one of a metal material and a resin material is usable as the build material M, for example. However, another material that is different from the metal material and the resin material may be used as the build material M. The build materials M are powder-like or grain-like materials. Namely, the build materials M are powdery materials. However, the build materials M may not be the powdery materials. For example, a wired-like build material or a gas-like build material may be used as the build material M, for example.

In order to perform the build operation, the build apparatus 1 includes a material supply source 11, a processing apparatus 12, a stage apparatus 13, a light source 14, a gas supply apparatus 15, a housing 16, a control apparatus 17, and a communication apparatus 18, as illustrated in FIG. 2 and FIG. 3. At least a part of each of the processing apparatus 12 and the stage apparatus 13 may be contained in a chamber space 163IN in the housing 16.

The material supply source 11 is configured to supply the build materials M to the processing apparatus 12. The material supply source 11 supplies, to the processing apparatus 12, the build materials M the amount of which is necessary for forming the three-dimensional structural object per unit time by supplying the build materials M the amount of which is based on the necessary amount.

The processing apparatus 12 forms the three-dimensional structural object by processing the build materials M supplied from the material supply source 11. In order to form the three-dimensional structural object, the processing apparatus 12 include a processing head 121 and a head driving system 122. Furthermore, the processing head 121 includes an irradiation optical system 1211 that is configured to emit the processing light EL and a material nozzle 1212 that is configured to supply the build materials M. The processing head 121 and the head driving system 122 are contained in the chamber space 163IN. However, at least a part of the processing head 121 and the head driving system 122 may be disposed in an external space 164OUT that is a space outside the housing 16. Note that the external space 164OUT may be a space into which the build user is allowed to enter.

The head driving system 122 is configured to move (namely, displace) the processing head 121. The head driving system 122 moves the processing head 121 along at least one of the X-axis, the Y-axis, the Z-axis, the θX direction, the θY direction and the θZ direction, for example. When the head driving system 122 moves the processing head 121, a relative position between the processing head 121 and the stage 131 (furthermore, the workpiece W placed on the stage 131) changes.

The build materials M supplied from the material nozzle 1212 are irradiated with the processing light EL emitted from the irradiation optical system 1211. As a result, the build materials M are molten. Namely, a melt pool including the molten build materials M is formed. When the melt pool is not irradiated with the processing light EL due to the movement of the processing head 121, the build materials M molten in the melt pool are solidified. Namely, a build object corresponding to a deposition of the solidified build materials M is formed. The build apparatus 1 repeats a series of the build process including the formation of the melt pool by the irradiation with the processing light EL and the solidification of the molten build materials M while relatively moving the processing head 121 along at least one of the X-axis direction and the Y-axis direction. As a result, a structural layer that is an aggregation of the build object formed in a pattern based on a moving trajectory of the melt pool is formed. The build apparatus 1 forms a plurality of structural layers in order so that the plurality of structural layers are laminated. As a result, the three-dimensional structural object that is an aggregation of the plurality of structural layers is formed.

The stage apparatus 13 includes the stage 131. The stage 131 is contained in the chamber space 163IN. The workpiece W may be placed on the stage 131. The stage 131 may be configured to hold the workpiece W placed on the stage 131. In this case, the stage 131 may include a mechanical chuck, an electro-static chuck, a vacuum chuck and the like in order to hold the workpiece W. Alternatively, the stage 131 may not be configured to hold the workpiece W placed on the stage 131. In this case, the workpiece W may be placed on the stage 131 without clamp.

The stage driving system 132 is configured to move (namely, displace) the stage 131. The stage driving system 132 moves the stage 131 along at least one of the X-axis, the Y-axis, the Z-axis, the θX direction, the θY direction and the θZ direction. When the stage driving system 132 moves the stage 131, a relative position between the processing head 121 and the stage 131 (furthermore, the workpiece W placed on the stage 131) changes.

The light source 14 is configured to emit at least one of an infrared light, a visible light and an ultraviolet light as the processing light EL, for example. However, other type of light may be used as the processing light EL. The processing light EL may include a plurality of pulsed lights (namely, a plurality of pulsed beams). The processing light EL may include a Continuous Wave (CW). The processing light EL may be a laser light. In this case, the light source 14 may include semiconductor laser such as a laser light source (for example, a Laser Diode (LD)). The laser light source may include at least one of a fiber laser, a CO₂ laser, a YAG laser, an Excimer laser and the like. However, the processing light EL may not be the laser light. The light source 14 may include any light source (for example, at least one of a LED (Light Emitting Diode), a discharge lamp and the like). The irradiation optical system 1211 is optically connected to the light source 14 through a light transmitting member 141 including at least one of an optical fiber, a light pipe and the like. The irradiation optical system 1211 emits the processing light EL transmitted from the light source 14 through the light transmitting member 141.

The gas supply apparatus 15 is a supply source of purge gas for purging the chamber space 163IN. The purge gas includes inert gas. At least one of Nitrogen gas and Argon gas is one example of the inert gas. The gas supply apparatus 15 is connected to the chamber space 163IN through a supply port 162 formed at a wall member 161 of the housing 16 and a supply pipe 151 that connects the gas supply apparatus 15 and the supply port 162. The gas supply apparatus 15 supplies the purge gas to the chamber space 163IN through the supply pipe 151 and the supply port 162. As a result, the chamber space 163IN is a space that is purged by the purge gas. The purge gas supplied to the chamber space 163IN may be discharged from a non-illustrated discharge port formed at the wall member 161. Note that the gas supply apparatus 15 may be a tank that stores the inert gas. When the purge gas is the Nitrogen gas, the gas supply apparatus 15 may be a Nitrogen gas generation apparatus that generates the Nitrogen gas by using air as material.

The gas supply apparatus 15 may supply the purge gas to a mix apparatus 112 to which the build materials M are supplied from the material supply source 11, in addition to the chamber space 163IN. Specifically, the gas supply apparatus 15 may be connected to the mix apparatus 112 through a supply pipe 152 that connects the gas supply apparatus 15 and the mix apparatus 112. As a result, the gas supply apparatus 15 supplies the purge gas to the mix apparatus 112 through the supply pipe 152. In this case, the build materials M from the material supply source 11 may be supplied (specifically, pressure-fed) to the material nozzle 1212 through the supply pipe 111 by the purge gas supplied from the gas supply apparatus 15 through the supply pipe 152. In this case, the material nozzle 1212 supplies, from a material supply port, the build materials M together with the purge gas for pressure-feeding the build materials M.

The housing 16 is a housing apparatus that is configured to contain at least a part of each of at least the processing apparatus 12 and the stage apparatus 13 in the chamber space 163IN that is an internal space of the housing 16. The housing 16 includes the wall member 161 that defines the chamber space 163IN. The wall member 161 is a member that separates the chamber space 163IN from the external space 164OUT at the outside of the housing 16. In this case, a space surrounded by the wall member 161 is the chamber space 163IN. Note that an openable and closable door may be disposed at the wall member 161. The door may be opened when the workpiece W is to be placed on the stage 131. The door may be opened when the workpiece W and / or the three-dimensional structural object is unloaded from the stage 131. The door may be closed during the build operation is performed. Note that an observation window (not illustrated) for visually observing the chamber space 163IN from the external space 164OUT of the housing 16 may be disposed at the wall member 61.

The control apparatus 17 is configured to control an operation of the build apparatus 1. The control apparatus 17 may include an arithmetic apparatus and a storage apparatus. The arithmetic apparatus may include at least one of a CPU (Central Processing Unit) and a GPU (Graphic Processing Unit), for example. The storage apparatus may include a memory. The control apparatus 17 serves as an apparatus for controlling the operation of the build apparatus 1 by means of the arithmetic apparatus executing a computer program. The computer program is a computer program that allows the arithmetic apparatus to execute (namely, to perform) a below-described operation that should be executed by the control apparatus 17. Namely, the computer program is a computer program that allows the control apparatus 17 to function so as to make the build apparatus 1 execute the below-described operation. The computer program executed by the arithmetic apparatus may be recorded in the storage apparatus (namely, a recording medium) of the control apparatus 17, or may be recorded in any recording medium (for example, a hard disk or a semiconductor memory) that is built in the control apparatus 17 or that is attachable to the control apparatus 17. Alternatively, the arithmetic apparatus may download the computer program that should be executed from an apparatus disposed at the outside of the control apparatus 17 through the communication apparatus 18.

The control apparatus 17 may control the operation of the build apparatus 1 to build the three-dimensional structural object (namely, the three-dimensional structural object having a shape set by the terminal user) based on the three-dimensional model data transmitted from the data generation server 2. For example, the control apparatus 17 may generate build control information that specifies a detail of the operation of the build apparatus 1 based on the three-dimensional model data. Specifically, the control apparatus 17 may generate, based on the three-dimensional model data, the build control information that specifies the detail of the operation of the build apparatus 1 for building the three-dimensional structural object represented by the three-dimensional model data (namely, the three-dimensional structural object having a shape defined by the shape information set by the terminal user). Then, the control apparatus 17 may control the operation of the build apparatus 1 to build the three-dimensional structural object (namely, the three-dimensional structural object having the shape set by the terminal user) based on the build control information.

The control apparatus 17 may not be disposed in the build apparatus 1. For example, the control apparatus 17 may be disposed at the outside of the build apparatus 1 as a server or the like. For example, the control apparatus 17 may be integrated with the data generation server 2. In this case, the control apparatus 17 may be connected to the build apparatus 1 through a wired and / or wireless network (for example, the communication network 4, alternatively, a data bus and / or a communication line). A network using a serial-bus-type interface such as at least one of IEEE1394, RS-232x, RS-422, RS-423, RS-485 and USB may be used as the wired network. A network using a parallel-bus-type interface may be used as the wired network. A network using an interface that is compatible to Ethernet such as at least one of 10-BASE-T, 100BASE-TX or 1000BASE-T may be used as the wired network. A network using an electrical wave may be used as the wireless network. A network that is compatible to IEEE802. 1x (for example, at least one of a wireless LAN and Bluetooth (registered trademark)) is one example of the network using the electrical wave. A network using an infrared ray may be used as the wireless network. A network using an optical communication may be used as the wireless network. In this case, the control apparatus 17 and the build apparatus 1 may be configured to transmit and receive various information through the communication network 4 or the like. Moreover, the control apparatus 17 may be configured to transmit information such as a command and a control parameter to the build apparatus 1 through the communication network 4 or the like. The communication apparatus 18 of the build apparatus 1 may serve as a reception apparatus that is configured to receive the information such as the command and the control parameter from the control apparatus 17 through the communication network 4 or the like. The communication apparatus 18 of the build apparatus 1 may serve as a transmission apparatus that is configured to transmit the information such as the command and the control parameter to the control apparatus 17 through the communication network 4 or the like. Alternatively, a first control apparatus that is configured to perform a part of the arithmetic processing performed by the control apparatus 17 may be disposed in the build apparatus 1 and a second control apparatus that is configured to perform another part of the arithmetic processing performed by the control apparatus 17 may be disposed at an outside of the build apparatus 1.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the control apparatus 17 may include. Moreover, the recording medium may include a device that is configured to record the computer program (for example, a device for a universal use or a device for an exclusive use in which the computer program is embedded to be executable in a form of at least one of a software, a firmware and the like). Moreover, various arithmetic processing or functions included in the computer program may be realized by a logical processing block that is realized in the control apparatus 17 by means of the control apparatus 17 (namely, a computer) executing the computer program, may be realized by a hardware such as a predetermined gate array (a FPGA, an ASIC) of the control apparatus 17, or may be realized in a form in which the logical process block and a partial hardware module that realizes a partial element of the hardware are combined.

The communication apparatus 18 is configured to communicate with the data generation server 2 through the communication network 4. In the present example embodiment, the communication apparatus 18 is configured to receive the three-dimensional model data generated by the data generation server 2 from the data generation server 2.

### (1-3) Configuration of Data Generation Server 2

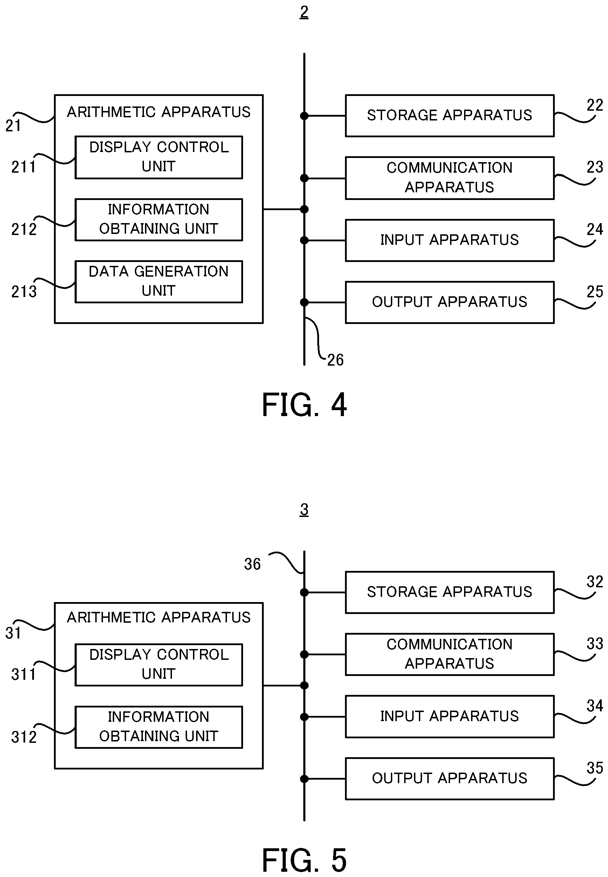

Next, with reference to FIG. 4, a configuration of the data generation server 2 will be described. FIG. 4 is a block diagram that illustrates the configuration of the data generation server 2.

As illustrated in FIG. 4, the data generation server 2 includes an arithmetic apparatus 21, a storage apparatus 22, and a communication apparatus 23. Furthermore, the data generation server 2 may include an input apparatus 24 and an output apparatus 25. However, the data generation server 2 may not include at least one of the input apparatus 24 and the output apparatus 25. The arithmetic apparatus 21, the storage apparatus 22, the communication apparatus 23, the input apparatus 24, and the output apparatus 25 may be connected through a data bus 26.

Note that the data generation server 2 and the terminal apparatus 3 may be an integrated apparatus (or an integrated system). At least two of the build apparatus 1, the data generation server 2, and the terminal apparatus 3 may be an integrated apparatus (or an integrated system). Here, the state in which "an apparatus X and an apparatus Y are the integrated apparatus" may include a state in which "the apparatus X and the apparatus Y are contained in the same housing and constitute an integrated apparatus". The state in which "the apparatus X and the apparatus Y are the integrated apparatus" may include a state in which "the apparatus X and the apparatus Y are contained in separate housings and constitute the integrated apparatus.

The arithmetic apparatus 21 may include at least one of a CPU and a GPU, for example. The arithmetic apparatus 21 reads a computer program. For example, the arithmetic apparatus 21 may read the computer program recorded in the storage apparatus 22. For example, the arithmetic apparatus 21 may read the computer program recorded in a non-transitory computer-readable recording medium by using a non-illustrated recording medium reading apparatus. The arithmetic apparatus 21 may obtain (namely, download or read) the computer program from a non-illustrated apparatus located outside the data generation server 2 through the communication apparatus 23. The arithmetic apparatus 21 executes the read computer program. As a result, a logical functional block for performing an operation that should be performed by the data generation server 2 (for example, an operation for generating the three-dimensional model data) is implemented in the arithmetic apparatus 21. In other words, the arithmetic apparatus 21 is configured to serve as a controller for implementing the logical functional block for performing the operation that should be performed by the data generation server 2.

FIG. 4 illustrates one example of the logical functional block that is implemented in the arithmetic apparatus 21 to generate the three-dimensional model data. As illustrated in FIG. 4, a display control unit 211, an information obtaining unit 212, and a data generation unit 213 are implemented in the arithmetic apparatus 21. The display control unit 211 generates GUI information for displaying the setting GUI 9. The information obtaining unit 212 obtains the shape information, which is set by the terminal user using the setting GUI, from the terminal apparatus 3 through the communication apparatus 23. The data generation unit 213 generates the three-dimensional model data representing the three-dimensional model of the three-dimensional structural object having a shape defined by the shape information set by the terminal user.

The storage apparatus 22 is configured to store desired data. For example, the storage apparatus 22 may temporarily store the computer program that is executed by the arithmetic apparatus 21. The storage apparatus 22 may temporarily store data temporarily used by the arithmetic apparatus 21 when the arithmetic apparatus 21 executes the computer program. The storage apparatus 22 may store data stored for a long term by the data generation server 2. The storage apparatus 22 may include at least one of a RAM (Random Access Memory), a ROM (Read Only Memory), a hard disk apparatus, a magneto-optical disc, a SSD (Solid State Drive) and a disk array apparatus. Namely, the storage apparatus 22 may include a non-transitory recording medium.

The communication apparatus 23 is configured to communicate with the build apparatus 1 through the communication network 4. In the present example embodiment, the communication apparatus 23 is configured to transmit the three-dimensional model data generated by the data generation unit 213 to the build apparatus 1. Furthermore, the communication apparatus 23 is configured to communicate with the terminal apparatus 3 through the communication network 5. In the present example embodiment, the communication apparatus 23 is configured to transmit the GUI information related to the setting GUI 9 generated by the display control unit 211 to the terminal apparatus 3, and to receive the shape information set by the terminal user using the setting GUI 9 from the terminal apparatus 3.

The input apparatus 24 is an apparatus that is configured to receive an input of information from an outside of the data generation server 2 to the data generation server 2. For example, the input apparatus 24 may include an operating apparatus (for example, at least one of a keyboard, a mouse, and a touch panel) that is operable by the server user. For example, the input apparatus 24 may include a reading apparatus that is configured to read information recorded as data on a recording medium that is attachable to the data generation server 2.

The output apparatus 25 is an apparatus that outputs information to the outside of the data generation server 2. For example, the output apparatus 25 may output the information as an image. Namely, the output apparatus 25 may include a display apparatus (a so-called display) that is configured to display an image indicating the information to be output. For example, the output apparatus 25 may output the information as audio. Namely, the output apparatus 25 may include an audio apparatus (so-called a speaker) that is configured output the audio. For example, the output apparatus 25 may output the information on a paper. Namely, the output apparatus 25 may include a printing apparatus (so-called a printer) that is configured to print desired information on the paper.

### (1-4) Configuration of Terminal Apparatus 4

Next, with reference to FIG. 5, a configuration of the terminal apparatus 3 will be described. FIG. 5 is a block diagram that illustrates the configuration of the terminal apparatus 3.

As illustrated in FIG. 5, the terminal apparatus 3 includes an arithmetic apparatus 31, a storage apparatus 32, a communication apparatus 33, an input apparatus 34, and a display apparatus 35. The arithmetic apparatus 31, the storage apparatus 32, the communication apparatus 33, the input apparatus 34, and the display apparatus 35 may be connected through a data bus 36. Note that the terminal apparatus 3 may not include the storage apparatus 32. In this case, the storage apparatus 22 of the data generation server 2 may be used as the storage apparatus 32.

The arithmetic apparatus 31 may include at least one of a CPU and a GPU, for example. The arithmetic apparatus 31 reads a computer program. For example, the arithmetic apparatus 31 may read the computer program recorded in the storage apparatus 32. For example, the arithmetic apparatus 31 may read the computer program recorded in a non-transitory computer-readable recording medium by using a non-illustrated recording medium reading apparatus. The arithmetic apparatus 31 may obtain (namely, download or read) the computer program from a non-illustrated apparatus located outside the terminal apparatus 3 through the communication apparatus 33. The arithmetic apparatus 31 executes the read computer program. As a result, a logical functional block for performing an operation that should be performed by the terminal apparatus 3 is implemented in the arithmetic apparatus 31. In other words, the arithmetic apparatus 31 is configured to serve as a controller for implementing the logical functional block for performing the operation that should be performed by the terminal apparatus 3.

FIG. 5 illustrates one example of the logical functional block that is implemented in the arithmetic apparatus 31. As illustrated in FIG. 5, a display control unit 311 and an information obtaining unit 312 are implemented in the arithmetic apparatus 31. The display control unit 311 controls the display apparatus 35 to display the setting GUI 9 based on the GUI information transmitted from the data generation server 2. The information obtaining unit 312 obtains the shape information set by the terminal user using the setting GUI 9.

The storage apparatus 32 is configured to store desired data. For example, the storage apparatus 32 may temporarily store the computer program that is executed by the arithmetic apparatus 31. The storage apparatus 32 may temporarily store data temporarily used by the arithmetic apparatus 31 when the arithmetic apparatus 31 executes the computer program. The storage apparatus 32 may store data stored for a long term by the terminal apparatus 3. The storage apparatus 32 may include at least one of a RAM, a ROM, a hard disk apparatus, a magneto-optical disc, a SSD and a disk array apparatus. Namely, the storage apparatus 32 may include a non-transitory recording medium.

The communication apparatus 33 is configured to communicate with the data generation server 2 through the communication network 5. In the present example embodiment, the communication apparatus 33 is configured to receive (namely, obtain) the GUI information related to the setting GUI 9 from the data generation server 2, and to transmit the shape information set by the terminal user using the setting GUI (namely, the shape information obtained by the information obtaining unit 312) to the data generation server 2.

The input apparatus 34 is an apparatus that is configured to receive an input of information from an outside of the terminal apparatus 3 to the terminal apparatus 3. For example, the input apparatus 34 may include an operating apparatus (for example, at least one of a keyboard, a mouse, and a touch panel) that is operable by the server user. For example, the input apparatus 34 may include a reading apparatus that is configured to read information recorded as data on a recording medium that is attachable to the terminal apparatus 3.

The display apparatus 35 is an apparatus that is configured to output information as an image. Namely, the display apparatus 35 is an apparatus that is configured to display the image indicating the information to be output. In the present example embodiment, the display apparatus 35 displays the setting GUI 9. The terminal user sets the shape information by using the setting GUI 9 displayed by the display apparatus 35. Namely, the terminal user sets the shape information by performing, through the setting GUI 9 displayed by the display apparatus 35, an operation for setting the shape information by using the input apparatus 34.

When the display apparatus 35 is configured to serve as an input apparatus (for example, the display apparatus 35 includes a touch panel), the display apparatus 35 may be referred to as an input apparatus. In this case, the terminal apparatus 3 may not include the input apparatus 34. The terminal user may operate the display apparatus 35 as the input apparatus 34. The terminal user may operate the input apparatus 34 while operating the display apparatus 35. Namely, the terminal user may use both of a function of inputting the information using the display apparatus 35 and a function of inputting the information using the input apparatus 34.

### (2) Process performed by Build System SYS

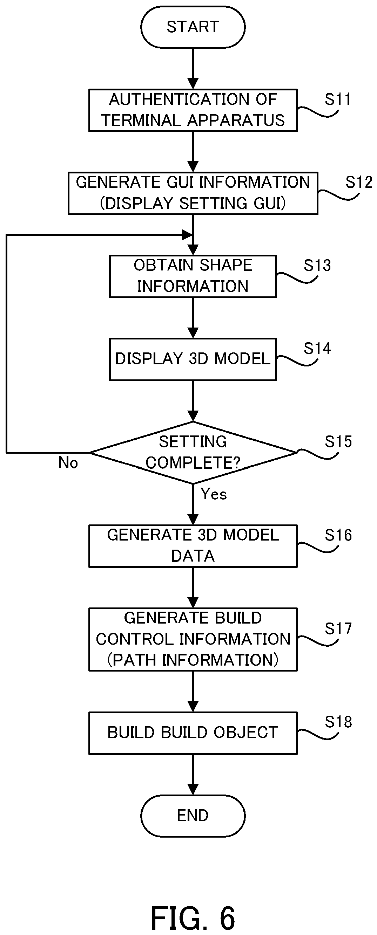

Next, with reference to FIG. 6, the process performed by the build system SYS (namely, a process for building the three-dimensional structural object, and for example, the build contract process) will be explained. FIG. 6 is a flowchart that illustrates a flow of the process performed by the build system SYS.

As illustrated in FIG. 6, when the process (for example, the build contract process) is started in the build system SYS, the data generation server 2 performs an authentication operation for authenticating the terminal apparatus 3 (a step S11). The data generation server 2 may perform the authentication operation by using a desired authentication method. For example, the data generation server 2 may perform the authentication operation by using an authentication method based on ID information and password information. In this case, for example, the terminal user may use the input apparatus 34 of the terminal apparatus 3 to input the ID information to identify the terminal user and a password unique to the terminal user. The communication apparatus 33 of the terminal apparatus 3 may transmit the ID information and the password inputted by the terminal user to the data generation server 2 through the communication network 5. The data generation server 2 may perform the authentication operation for authenticating the terminal apparatus 3 by using the ID information and the password transmitted from the terminal apparatus 3. Alternatively, for example, the data generation server 2 may perform the authentication operation by using another authentication method different from the authentication method based on the ID information and the password information. At least one of an authentication method using a token and an authentication method using biometric information of the terminal user is one example of another authentication method.

After the authentication operation is completed (namely, after the data generation server 2 confirms that the terminal apparatus 3 is authorized to access the data generation server 2), the display control unit 211 of the data generation server 2 generates the GUI information (display information) to display the setting GUI 9 on the display apparatus 35 of the terminal apparatus 3 (a step S12). Namely, the display control unit 211 provides the setting GUI 9 (display contents related to the setting GUI 9) to the terminal user. Then, the display control unit 211 transmits the generated GUI information to the terminal apparatus 3 by using the communication apparatus 23. The display apparatus 35 of the terminal apparatus 3 displays the setting GUI 9 based on the GUI information transmitted from the data generation server 2 (the step S12).

The display control unit 211 may generate the GUI information including information (for example, pixel information) related to a display screen constituting the setting GUI 9. In this case, the arithmetic apparatus 31 of the terminal apparatus 3 may control the display apparatus 35 to display the setting GUI 9 constituted by the display screen indicated by the GUI information. Alternatively, the display control unit 211 may generate the GUI information including information for controlling the display apparatus 35 of the terminal apparatus 3 to display the setting GUI 9. In this case, the display apparatus 35 of the terminal apparatus 3 may display the setting GUI 9 indicated by the GUI information under the control of the data generation server 2, independent of the control by the arithmetic apparatus 31. The display control unit 211 may control the display apparatus 35 to display the setting GUI 9.

An example of the setting GUI 9 is illustrated in FIG. 7. As illustrated in FIG. 7, the setting GUI 9 may include an input screen 91 and an output screen 92. Namely, the setting GUI 9 may constitute a display screen including the input screen 91 and the output screen 92.

The input screen 91 is a screen (in other words, an input part) including a GUI that is operable by the terminal user to set (designate, the same is applied to the below-described description) the shape information related to the shape of the three-dimensional structural object. The terminal user may operate the input screen 91 by using the input apparatus 34. Namely, the terminal user may perform the operation to set the shape information on the input screen 91 by using the input apparatus 34. As a result, the information obtaining unit 312 of the terminal apparatus 3 obtains the shape information set by the terminal user using the setting GUI 9 (a step S13 in FIG. 6). Then, the information obtaining unit 312 transmits the shape information set by the terminal user to the data generation server 2 through the communication network 5 by using the communication apparatus 33 of the terminal apparatus 3. As a result, the communication apparatus 23 of the data generation server 2 receives (namely, obtains) the shape information transmitted from the terminal apparatus 3 (step S13 in FIG. 6).

In order to set the shape information, the terminal user may use the input screen 91 to set (the same is applied to the below-described description) the values of a parameter that define the shape of the three-dimensional structural object. In this case, the input screen 91 may include a parameter setting GUI 911 that is operable by the terminal user to set the values of the parameters. The information obtaining unit 312 may obtain, as at least part of the shape information, parameter information related to the parameter set by using the parameter setting GUI 911. The parameters may include numerical parameters that quantitatively define the shape of the three-dimensional structural object. In this case, the parameter setting GUI 911 may include a label indicating a name of a setting item of the numerical parameter, and a text box in which a setting value of the numerical parameter can be inputted (alternatively, a combo box, a drop-down list, or a radio button in which the setting value of the numerical parameter can be designated among a plurality of candidate values). Alternatively, the parameter may include a flag parameter for setting the shape of the three-dimensional structural object. The flag parameter is used to set the shape of the three-dimensional structural object to be one shape corresponding to the value of the flag parameter. For example, when the flag value of the flag parameter is set to a flag value of 1, the shape of the three-dimensional structural object may be set to be a first shape corresponding to the flag value of 1, and when the flag value of the flag parameter is set to a flag value of 2, the shape of the three-dimensional structural object may be set to be a second shape corresponding to the flag value of 2. In this case, the parameter setting GUI 911 may include a label indicating a name of a setting item of the flag parameter, and a text box in which a setting value (the flag value) of the flag parameter can be inputted (alternatively, a combo box, a drop-down list, or a radio button in which the setting value of the flag parameter can be designated among a plurality of candidate values).

For example, when a position of at least a part of the three-dimensional structural object changes, the shape of the three-dimensional structural object changes. Thus, the parameter may include a parameter that defines the position of at least a part of the three-dimensional structural object. For example, when a size of at least a part of the three-dimensional structural object changes, the shape of the three-dimensional structural object changes. Thus, the parameter may include a parameter that defines the size of at least a part of the three-dimensional structural object. For example, when a shape of at least a part of the three-dimensional structural object changes, the shape of the three-dimensional structural object changes. Thus, the parameter may include a parameter that defines the shape of at least a part of the three-dimensional structural object. For example, when a direction of at least a part of the three-dimensional structural object (for example, a direction in which at least a part of the three-dimensional structural object faces or extends) changes, the shape of the three-dimensional structural object changes. Thus, the parameters may include a parameter that defines the direction of at least a part of the three-dimensional structural obj ect.

The setting value of the parameter set by the terminal user (namely, the value of the parameter that has been set) may be displayed in the parameter setting GUI 911. Namely, the input screen 91 including the parameter setting GUI 911 may display the value of the parameter that has been set. The value of the parameter that has been set may be provided to the input screen 91. The setting value of the parameter displayed in the parameter setting GUI 911 may be updated each time the terminal user sets the parameter again. The setting value of the parameter displayed in the parameter setting GUI 911 may be updated periodically or at random cycles. The setting value of the parameter displayed on the parameter setting GUI 911 may be updated based on the terminal user's instruction (for example, triggered by the terminal user pressing a button that is included in the setting GUI 9 and that is for updating the setting value of the parameter). As a result, the terminal user can recognize the latest setting value of the parameter set by the terminal user himself. Note that the updating of the setting value of the parameter displayed in the parameter setting GUI 911 may be performed under the control of the display control unit 211 of the data generation server 2. In this case, the display control unit 211 may generate the GUI information so that the setting value of the parameter displayed in the parameter setting GUI 911 based on the shape information obtained from the terminal apparatus 3. Alternatively, the updating of the setting value of the parameter displayed in the parameter setting GUI 911 may be performed under the control of the display control unit 311 of the terminal apparatus 3. In this case, the display control unit 311 may update the setting value of the parameter displayed in the parameter setting GUI 911 based on the shape information obtained by the information obtaining unit 312 of the terminal apparatus 3.

In order to set the shape information, the terminal user may select an icon that defines the shape of the three-dimensional structural object by using the input screen 91 in addition to or instead of setting the value of the parameter. The icon is associated with a specific shape that is allowed to be set as the shape of the three-dimensional structural object. In this case, the input screen 91 may include an icon selection GUI 912 including a plurality of icons (alternatively, at least one icon) that are selectable by the terminal user to set the shape of the three-dimensional structural object to be the specific shape. Each of the plurality of icons included in the icon selection GUI 912 is selectable by the terminal user. The terminal user may set the shape information by selecting, from among the plurality of icons included in the icon selection GUI 912, one icon associated with the shape of the three-dimensional structural object which the terminal user wants to build. The information obtaining unit 312 may obtain, as at least a part of the shape information, icon information related to the icon selected by using the icon selection GUI 912 (namely, information related to the shape associated with the selected icon).

In the icon setting GUI 912, the icon selected by the terminal user may be displayed in a display aspect that is different from that of the icon not selected by the terminal user. FIG. 7 illustrates an example in which the icon selected by the terminal user is overlaid on a hatched area and the icon not selected by the terminal user is not overlaid on the hatched area. However, a state in which the display aspect of the icon selected by the terminal user is different from the display aspect of the icon not selected by the terminal user is not limited to a state illustrated in FIG. 7. For example, the icon selected by the terminal user may be displayed in a gray out state and the icon not selected by the terminal user may not be displayed in the gray out state. As a result, the terminal user can recognize the icon selected by the terminal user himself (namely, the shape of the three-dimensional structural object set by the terminal user himself).

Note that the terminal user may set the shape information by drawing the shape of the three-dimensional structural object on the setting GUI 9 (for example, on the input screen 91) in addition to or instead of selecting one icon from the plurality of icons. In this case, the setting GUI 9 may include a drawing GUI that allows the terminal user to draw the shape of the three-dimensional structural obj ect.

The input screen 91 may include a feature setting GUI 913 that is operable by the terminal user to set the feature information related to any feature of the three-dimensional structural object that is different from the shape of the three-dimensional structural object. For example, as illustrated in FIG. 7, the feature setting GUI 913 may include a GUI that is operable by the terminal user to set roughness of a surface of the three-dimensional structural object. The feature setting GUI 913 may include a GUI that is operable by the terminal user to set a type of a material for building the three-dimensional structural object. When a plurality of types of materials are used to build the three-dimensional structural object, the feature setting GUI 913 may include a GUI that is operable by the terminal user to set a mixing ratio of the plurality of types of materials. The feature information set by using the feature setting GUI 913 may be transmitted from the terminal apparatus 3 to the data generation server 2, as with the shape information. The data generation server 2 may use the feature information transmitted from the terminal apparatus 3 to generate the build control information for controlling the build apparatus 1 so that the three-dimensional build object having the feature defined by the feature information is built. Namely, the build apparatus 1 may build the three-dimensional build object having the feature defined by the feature information based on the feature information set by using the feature setting GUI 913.

A setting value of the feature information set by the terminal user may be displayed in the feature setting GUI 913.. The setting value of the feature information displayed in the feature setting GUI 913 may be updated each time the terminal user sets the feature information again. The setting value of the feature information displayed in the feature setting GUI 913 may be updated periodically or at random cycles. The setting value of the feature information displayed in the feature setting GUI 913 may be updated based on the terminal user's instructions (for example, triggered by the terminal user pressing a button included in the setting GUI 9 to update the setting value of the feature information). As a result, the terminal user can recognize the latest setting value of the feature information set by the terminal user himself. A method of displaying the setting value of feature information may be the same as a method of displaying the setting value of the parameter described above, so a detailed description of this method is omitted.

Note that the shape information set by using the parameter setting GUI 911 may be set by using the icon selection GUI 912. Similarly, the shape information set by using the icon selection GUI 912 may be set by using the parameter setting GUI 911. In short, the method of setting the shape information is not limited as long as the shape information is set by using the input screen 91. The same is true for the feature information.

The output screen 92 is a screen (in other words, an output unit) that is capable of displaying a three-dimensional model (namely, model information) based on the shape information set by the terminal user using the input screen 91. For example, the output screen 92 may be capable of displaying a three-dimensional model based on the value of the parameter set by the terminal user using the parameter setting GUI 911 included in the input screen 91 (namely, a three-dimensional model of the three-dimensional structural object having the shape defined by the value of the parameter set by the terminal user). For example, the output screen 92 may be capable of displaying a three-dimensional model based on the icon selected by the terminal user using the icon selection GUI 912 included in the input screen 91 (namely, a three-dimensional model of the three-dimensional structural object having the specific shape associated with the icon selected by the terminal user). For example, the output screen 92 may be capable of displaying a three-dimensional model based on the feature information set by the terminal user using the feature setting GUI 913 included in the input screen 91 (namely, a three-dimensional model of the three-dimensional structural object having the feature defined by the feature information set by the terminal user).

The data generation server 2 provides the three-dimensional model based on the shape information set by the terminal user using the input screen 91 to the output screen 92 displayed by the display apparatus 35 of the terminal apparatus 3. Specifically, in order to generate the GUI information related to the setting GUI 9 including the output screen 92, the data generation unit 213 of the data generation server 2 generates, based on the shape information (furthermore, other feature information if necessary) obtained by the information obtaining unit 212 from the terminal apparatus 3, three-dimensional model data representing the three-dimensional model based on the shape information set by the terminal user. Then, the display control unit 211 generates the GUI information related to the setting GUI 9 including the output screen 92 on which the three-dimensional model represented by the three-dimensional model data generated by the data generation unit 213 is displayed. The, the GUI information generated by the display control unit 211 is transmitted to the terminal apparatus 3 by using the communication apparatus 23. The display apparatus 35 of the terminal apparatus 3 displays the setting GUI 9 based on the GUI information transmitted from the data generation server 2. Namely, the display apparatus 35 uses the output screen 92 to display the three-dimensional model based on the shape information set by the terminal user. Namely, the display apparatus 35 displays, on the output screen 92, the three-dimensional model based on the shape information set by the terminal user. As a result, the terminal user can recognize the shape and so on of the three-dimensional model based on the shape information set by the terminal user relatively easily.

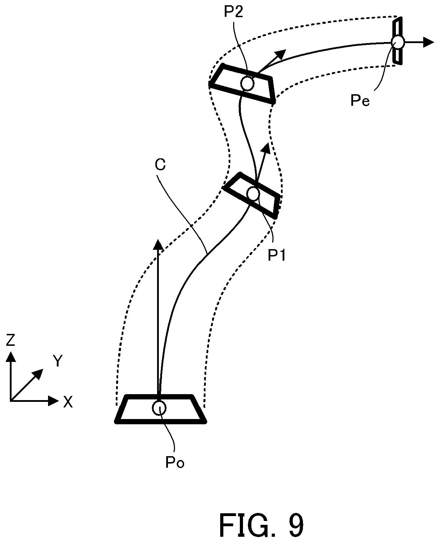

The three-dimensional model displayed on the output screen 92 may be a three-dimensional model in any format. For example, a three-dimensional model corresponding to a solid model or a surface model (see FIG. 7) may be displayed on the output screen 92. For example, a three-dimensional model corresponding to a wire frame model (see FIG. 9 below) may be displayed on the output screen 92.

The display control unit 211 may generate the GUI information related to the setting GUI 9, including the output screen 92 on which the three-dimensional model based on the newly obtained shape information is displayed, each time the information obtaining unit 212 newly obtains the shape information from the terminal apparatus 3. The display control unit 211 may generate the GUI information related to the setting GUI 9, including the output screen 92 on which the three-dimensional model based on the shape information newly set by the terminal user is displayed, each time the shape information is newly set (for example, changed or updated) by the terminal user using the setting GUI 9. The display control unit 211 may update the three-dimensional model displayed on the output screen 92 each time the shape information is newly set (for example, changed or updated) by the terminal user using the setting GUI 9. In this case, the three-dimensional model that reflects the shape information set by using the input screen 91 in real time is displayed on the output screen 92. As a result, the terminal user can relatively easily recognize the shape and so on of the three-dimensional model based on the latest shape information set by the terminal user himself. Alternatively, the display control unit 211 may generate the GUI information related to the setting GUI 9, including the output screen 92 on which the three-dimensional model reflecting the shape information set by using the input screen 91 is displayed, periodically or in a random cycle. In this case, the output screen 92 updates the three-dimensional model displayed on the output screen 92 periodically or at random cycles. Alternatively, the display control unit 211 may generate, based on the terminal user's instruction (for example, triggered by the terminal user pressing a button included in the setting GUI 9 to update the three-dimensional model displayed on the output screen 92), the GUI information related to the setting GUI 9, including the output screen 92 on which the three-dimensional model reflecting the shape information set by using the input screen 91. In this case, the output screen 92 updates the three-dimensional model displayed on the output screen 92 at a timing desired by the terminal user.

The display control unit 211 may generate the setting GUI 9 including the input screen 91 according to a type of the three-dimensional structural object so that the terminal user can set appropriate shape information according to the type of the three-dimensional structural object that is additively built by the build apparatus 1. Namely, the display control unit 211 may control the display apparatus 35 to display the setting GUI 9 including the input screen 91 according to the type of the three-dimensional structural object. In the present example embodiment, an example in which the build apparatus 1 builds the three-dimensional structural object that includes at least one of a pipe and a plate will be described, wherein the pipe corresponds to a member having a hollow structure (note that the pipe may be referred to as a tube), and the plate is a plate-like member, a size of the plate-like member in a direction perpendicular to a thickness direction is larger than a size of plate-like member in the thickness direction. Thus, in the below-described description, the input screen 91 that is displayed when the three-dimensional structural object includes the pipe and the input screen 91 that is displayed when the three-dimensional structural object includes the plate will be described in order. Namely, the input screen 91 for setting the shape information related to the shape of the pipe and the input screen 91 for setting the shape information related to the shape of the plate will be described in order.

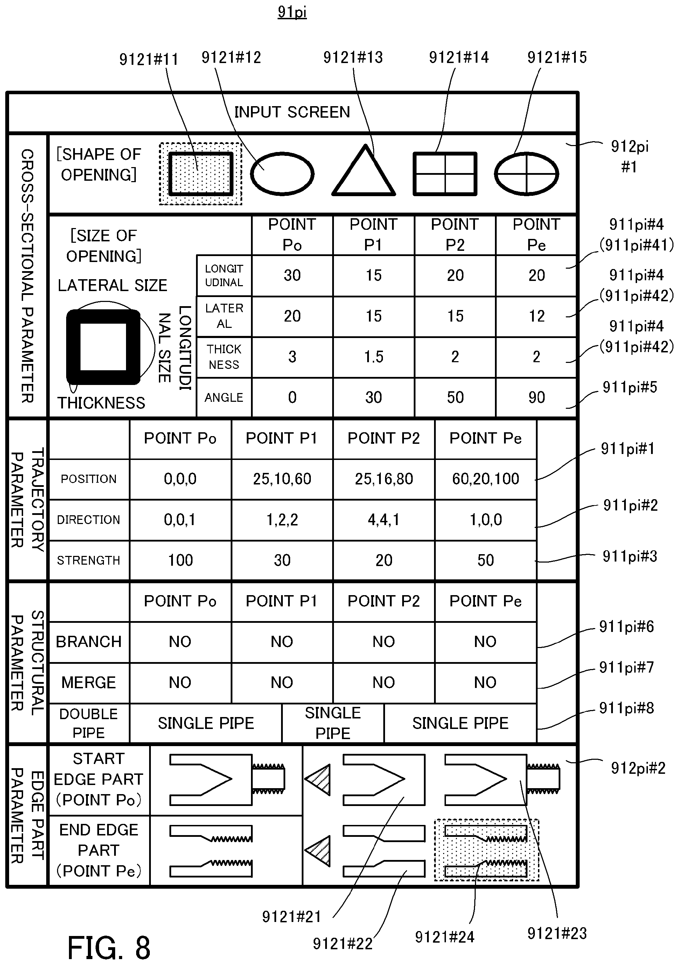

FIG. 8 illustrates an example of the input screen 91 for setting the shape information related to the shape of the pipe (hereinafter, it is referred to as an "input screen 91 pi").

As illustrated in FIG. 8, the input screen 91pi may include a parameter setting GUI 911pi (hereinafter, it is referred to as a "parameter setting GUI 911pi#1") for setting a value of a parameter that defines a position of at least a part of the pipe. Namely, the parameter that defines the shape of the pipe may include the parameter that defines the position of at least a part of the pipe. In the present example embodiment, the positions of a plurality of points P through which the pipe passes (for example, the position in a display coordinate system that is same as or different from the build coordinate system, the same is applied to the below-described description) are used as the parameters each of which defines the position of at least a part of the pipe. Specifically, when a centerline C of the pipe passes from a start point Po through intermediate points P1 and P2 in sequence to thereby reach an end point Pe as illustrated in FIG. 9, the input screen 91pi may include the parameter setting GUI 911pi#1 by which the values of the parameters that define the positions of the start point Po, the intermediate points P1 and P2 and the end point Pe can be set as illustrated in FIG. 8. Note that the number of points P is not limited to four illustrated in FIG. 9. Namely, the terminal user may set the position of the desired number of point P. The terminal user may add a new point P at a desired position or delete an existing point P by using the input screen 91pi. For example, in an example illustrated in FIG. 9, the terminal user may add other point P (for example, a point P located between the start point Po and the intermediate point P1) in addition to the start point Po, the intermediate points P1 and P2, and the end point Pe, and may set the position of the added other point P. For example, in the example illustrated in FIG. 9, the terminal user may not set the position of at least one of the start point Po, the intermediate points P1 and P2, and the end point Pe. Information related to the point P whose position is not set by the terminal user may not be displayed on the input screen 91.

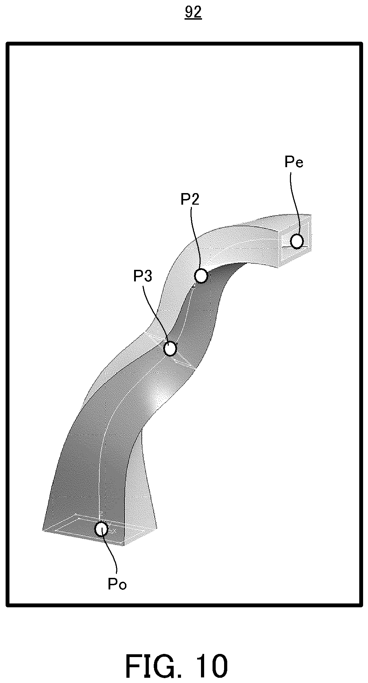

When the shape information is set by using the plurality of points P through which the pipe passes, the three-dimensional model with which the plurality of points P are associated may be displayed on the output screen 92, as illustrated in FIG. 10. In this case, the terminal user can relatively easily recognize how the shape of the three-dimensional model changes by setting the positions and so on of the plurality of points P.

Again in FIG. 8, the input screen 91pi may include a parameter setting GUI 911pi (hereinafter, it is referred to as a "parameter setting GUI 911pi#2") for setting a value of a parameter that defines a direction of at least a part of the pipe (namely, a direction along which at least a part of the pipe extends (advances)). Namely, the parameter that defines the shape of the pipe may include the parameter that defines the direction of at least a part of the pipe. In the present example embodiment, directions along which the pipe extends at the positions of the plurality of points P through which the pipe passes (for example, a direction along which the centerline C of the pipe at each point P extends, starting from point P) are used as the parameters each of which defines the direction of at least a part of the pipe. Specifically, when the pipe passes from the start point Po through the intermediate points P1 and P2 in sequence to thereby reach the end point Pe as illustrated in FIG. 9, the input screen 91pi may include the parameter setting GUI 911pi#2 by which the values of the parameters that define a direction along which the pipe extends at the start point Po, a direction along which the pipe extends at the intermediate point P1, a direction along which the pipe extends at the intermediate point P2, and a direction along which the pipe extends at the end point Pe can be set.

As illustrated in FIG. 8, the input screen 91pi may include a parameter setting GUI 911pi (hereinafter, it is referred to as a "parameter setting GUI 911pi#3") for setting a value of a parameter that defines a magnitude (a strength) of a curvature of at least a part of the pipe. Namely, the parameter that defines the shape of the pipe may include the parameter that defines the strength of the curvature of at least a part of the pipe. In the present example embodiment, the strengths of the curvature of the pipe at the positions of the plurality of points P through which the pipe passes are used as the parameters each of which defines the strength of the curvature of at least a part of the pipe. Specifically, when the pipe passes from the start point Po through the intermediate points P1 and P2 in sequence to thereby reach the end point Pe as illustrated in FIG. 9, the input screen 91pi may include the parameter setting GUI 911pi#3 by which the values of the parameters that define the strength of the curvature of the pipe at the start point Po, the strength of the curvature of the pipe at the intermediate point P1, the strength of the curvature of the pipe at the intermediate point P2, and the strength of the curvature of the pipe at the end point Pe can be set.

Incidentally, when each of the position, the direction, and the strength of the curvature of at least a part of the pipe changes, a trajectory along which the pipe extends changes. Thus, each of the parameter that defines the position of at least a part of the pipe, the parameter that defines the direction of at least a part of the pipe, and the parameter that defines the strength of the curvature of at least a part of the pipe may be referred to as a trajectory parameter that defines the trajectory along which the pipe extends.

As illustrated in FIG. 8, the input screen 91pi may include a parameter setting GUI 911pi (hereinafter, it is referred to as a "parameter setting GUI 911pi#4") for setting a value of a parameter that defines a size of at least a part of the pipe. Namely, the parameter that defines the shape of the pipe may include the parameter that defines the size of at least a part of the pipe. In the present example embodiment, the sizes of the pipe at the positions of the plurality of points P through which the pipe passes are used as the parameters each of which defines the size of at least a part of the pipe. Specifically, when the pipe passes from the start point Po through the intermediate points P1 and P2 in sequence to thereby reach the end point Pe as illustrated in FIG. 9, the input screen 91pi may include the parameter setting GUI 911pi#4 by which the values of the parameters that define the size of the pipe at the start point Po, the size of the pipe at the intermediate point P1, the size of the pipe at the intermediate point P2, and the size of the pipe at the end point Pe can be set.

In the present example embodiment, the parameter setting GUI 911pi#4 may be a GUI for setting a value of a parameter that defines the size of a cross-section of at least a part of the pipe. For example, as illustrated in FIG. 8, the parameter setting GUI 911pi#4 may be a GUI by which the values of parameters that define the size of the cross-section of the pipe at the start point Po, the size of the cross-section of the pipe at the intermediate point P1, the size of the cross-section of the pipe at the intermediate point P2, and the size of the cross-section of the pipe at the end point Pe can be set. Note that the cross-section of at least a part of the pipe may mean a cross-section that intersects with (typically, is perpendicular to) the direction along which the pipe extends.

The size of the cross-section of at least a part of the pipe may include a size of the cross-section along a first direction that is along the cross-section (in other words, a first direction that intersects with the centerline C of the pipe). For example, as illustrated in FIG. 8, the parameter setting GUI 911pi#4 may include a parameter setting GUI 911pi#41 by which the values of the parameters that define the size of the cross-section of the pipe along the first direction (in the example illustrated in FIG. 8, a longitudinal direction) at the start point Po, the size of the cross-section of the pipe along the first direction at the intermediate point P 1, the size of the cross-section of the pipe along the first direction at the intermediate point P2, and the size of the cross section of the pipe along the first direction at the end point Pe can be set.

The size of the cross-section of at least a part of the pipe may include a size of the cross-section along a second direction that is along the cross-section and that intersects with (typically, is perpendicular to) the first direction. For example, as illustrated in FIG. 8, the parameter setting GUI 911pi#4 may include a parameter setting GUI 911pi#42 by which the values of the parameters that define the size of the cross-section of the pipe along the second direction (in the example illustrated in FIG. 8, a lateral direction) at the start point Po, the size of the cross-section of the pipe along the second direction at the intermediate point P1, the size of the cross-section of the pipe along the second direction at the intermediate point P2, and the size of the cross section of the pipe along the second direction at the end point Pe can be set.

Incidentally, when the shape of the cross-section of the pipe is a rectangular shape, the size of the cross-section of the pipe along the first direction may mean a distance (a length) between two outer surfaces of the pipe (outer walls of the pipe) facing each other along the first direction, and the size of the cross-section of the pipe along the second direction may mean a distance (a length) between two outer surfaces of the pipe (outer walls of the pipe) facing each other along the second direction. When the shape of the cross-section of the pipe is a circular shape, the size of the cross-section of the pipe along each of the first and second directions may mean a diameter of the outer surface of the pipe. In both cases, the size of the cross-section of the pipe along each of the first and second directions may be referred to as an outer diameter of the pipe.

The size of the cross-section of at least a part of the pipe may include a thickness of a wall (in other words, a pipe wall) of the pipe along the cross-section. For example, as illustrated in FIG. 8, the parameter setting GUI 911pi#4 may include a parameter setting GUI 911pi#43 by which the values of the parameters that define the thickness of the wall of the pipe at the start point Po, the thickness of the wall of the pipe at the intermediate point P1, the thickness of the wall of the pipe at the intermediate point P2, and the thickness of the wall of the pipe at the end point Pe can be set. Note that the thickness of the wall of the pipe may mean a distance (a length) between an inner surface of the pipe (namely, a side surface of the pipe facing toward the centerline C side, and an inner wall) and an outer surface of the pipe (namely, a side surface of the pipe facing toward a side opposite to the centerline C side, and an outer wall).

When the size of the cross-section of at least a part of the pipe along the first direction, the size of the cross-section of at least a part of the pipe along the second direction, and the thickness of the wall of at least a part of the pipe are determined, each of an inner diameter of the pipe (namely, a diameter of the inner surface of the pipe or a distance (a length) between two inner side faces of the pipe facing each other) and the outer diameter of the pipe (namely, the diameter of the outer surface of the pipe) is determined. Therefore, setting the value of the parameter that defines the size of the cross-section of at least a part of the pipe along the first direction, the value of the parameter that defines the size of the cross-section of at least a part of the pipe along the second direction, and the value of the parameter that defines the thickness of the wall of at least a part of the pipe may be regarded to be equivalent to setting a value of a parameter that defines the inner diameter of the pipe and the value of the parameter that defines the outer diameter of the pipe. Alternatively, the parameter setting GUI 911pi#4 may include a parameter setting GUI 911 for directly setting the value of the parameter that defines the inner diameter of at least a part of the pipe. The parameter setting GUI 911pi#4 may include a parameter setting GUI 911 for directly setting the value of the parameter that defines the outer diameter of at least a part of the pipe.

As illustrated in FIG. 8, the input screen 91pi may include a parameter setting GUI 911pi (hereinafter, it is referred to as a "parameter setting GUI 911pi#5") for setting a value of a parameter that defines an angle (a rotational angle) of at least a part of the pipe. Namely, the parameter that defines the shape of the pipe may include the parameter that defines the angle of at least a part of the pipe. In the present example embodiment, the rotational angles of the pipe at the positions of the plurality of points P through which the pipe passes are used as the parameters each of which defines the rotational angle of at least a part of the pipe. Here, the rotational angle of the pipe at the position of point P may mean the rotational angle (specifically, the rotation angle relative to a reference altitude) of the cross-section of the pipe at the point P around an axis that is along the centerline C of the pipe at the position of the point P. Specifically, when the pipe passes from the start point Po through the intermediate points P1 and P2 in sequence to thereby reach the end point Pe as illustrated in FIG. 9, the input screen 91pi may include the parameter setting GUI 911 pi#5 by which the values of the parameters that define the rotational angle of the cross-section of the pipe at the start point Po, the rotational angle of the cross-section of the pipe at the intermediate point P1, the rotational angle of the cross-section of the pipe at the intermediate point P2, and the rotational angle of the cross-section of the pipe at the end point Pe can be set. Incidentally, when the cross-section of the pipe is an infinitely rotationally symmetric cross-section, such as an exact circle, the parameter setting GUI 911pi#5 may be displayed in a display aspect that does not allow the terminal user to set (input) the setting value of the parameter. For example, a part of the parameter setting GUI 911pi#5 may be displayed in a gray out state.

Incidentally, in the above-described example, when each of the size of at least a part of the pipe and the rotational angle of at least a part of the pipe each changes, the shape of the cross-section of at least a part of the pipe changes. Thus, each of the parameter that defines the size of at least a part of the pipe and the parameter that defines the rotational angle of at least a part of the pipe may be referred to as a cross-sectional parameter (a section parameter) related to the cross-section of at least a part of the pipe.

As illustrated in FIG. 8, the input screen 91pi includes a parameter setting GUI 911pi (hereinafter, it is referred to as a "parameter setting GUI 911pi#6") for setting a value of a parameter that defines a presence or absence of a branch of at least a part of the pipe. Namely, the parameters that defines the shape of the pipe may include the parameter that defines the presence or absence of the branch of at least a part of the pipe. In the present example embodiment, parameters that define the presence or absence of the branch of the pipe at the positions of the plurality of points P through which the pipe passes are used as the parameters each of which defines the presence or absence of the branch of at least a part of the pipe. Specifically, when the pipe passes from the start point Po through the intermediate points P1 and P2 in sequence to thereby reach the end point Pe as illustrated in FIG. 9, the input screen 91pi may include the parameter setting GUI 911pi#6 by which the values of the parameters that define the presence or absence of the branch of the pipe at the start point Po, the presence or absence of the branch of the pipe at the intermediate point P1, the presence or absence of the branch of the pipe at the intermediate point P2, and the presence or absence of the branch of the pipe at the end point Pe can be set. Namely, the input screen 91pi may include the parameter setting GUI 911pi#6 by which the parameters that define whether or not the pipe is branched at the start point Po, whether or not the pipe is branched at the intermediate point P1, whether or not the pipe is branched at the intermediate point P2, and whether or not the pipe is branched at the end point Pe can be set. Incidentally, when the setting value of the parameter that defines the presence or absence of the branch of the pipe is set to a value indicating the presence of the pipe in the parameter setting GUI 91 1pi#6, an input screen that is used by the terminal user to set at least one of the cross-sectional parameter, the trajectory parameter, and an edge part parameter related to the branched pipe. In this case, the input screen for setting the edge part parameter may display at least one of a screen for setting the edge part parameter related to a start edge part and a screen for setting the edge part parameter related to an end edge part.

As illustrated in FIG. 8, the input screen 91pi may include a parameter setting GUI 911pi (hereinafter, it is referred to as a "parameter setting GUI 911pi#7") for setting a value of a parameter that defines a presence or absence of a merge of at least a part of the pipe (namely, the merge of plurality of branched pipe conduits). Namely, the parameters that define the shape of the pipe may include the parameter that defines the presence or absence of the merge of at least a part of the pipe. In the present example embodiment, the parameters that define the presence or absence of the merge of at least a part of the pipe at the positions of the plurality of points P through which the pipe passes are used as the parameters each of which defines the presence or absence of the merge of at least a part of the pipe. Specifically, when the pipe passes from the start point Po through the intermediate points P1 and P2 in sequence to thereby reach the end point Pe as illustrated in FIG. 9, the input screen 91pi may include the parameter setting GUI 911pi#7 by which the values of the parameters that define the presence or absence of the merge of the pipe at the start point Po, the presence or absence of the merge of the pipe at the intermediate point P1, the presence or absence of the merge of the pipe at the intermediate point P2, and the presence or absence of the merge of the pipe at the end point Pe can be set. Namely, the input screen 91pi may include the parameter setting GUI 911pi#7 by which the parameters that define whether or not the plurality of branched pipe conduits are merged at the start point Po, whether or not the plurality of branched pipe conduits are merged at the intermediate point P1, whether or not the plurality of branched pipe conduits are merged at the intermediate point P2, and whether or not the plurality of branched pipe conduits are merged at the end point Pe can be set. Incidentally, when the setting value of the parameter that defines the presence or absence of the merge of the pipe is set to a value indicating the presence of the merge of the pipe in the parameter setting GUI 911pi#7, an input screen that is used by the terminal user to set at least one of the cross-sectional parameter, the trajectory parameter, and the edge part parameter related to the merged pipe. In this case, the input screen for setting the edge part parameter may display at least one of a screen for setting the edge part parameter related to the start edge part and a screen for setting the edge part parameter related to the end edge part.

As illustrated in FIG. 8, the input screen 91pi may include a parameter setting GUI 911pi (hereinafter, it is referred to as a "parameter setting GUI 911pi#8") for setting a value of a parameter that defines a multiple structure of at least a part of the pipe. Namely, the parameter that defines the shape of the pipe may include the parameter that defines the multiple structure of at least a part of the pipe. In the present example embodiment, parameters that define the multiple structure of the pipe at the positions of the plurality of points P through which the pipe passes are used as the parameters each of which defines the multiple structure of at least a part of the pipe. Specifically, when the pipe passes from the start point Po through the intermediate points P1 and P2 in sequence to thereby reach the end point Pe as illustrated in FIG. 9, the input screen 91pi may include the parameter setting GUI 911pi#8 by which the values of the parameters that define the multiple structure of the pipe between the start point Po and the intermediate point P1, the multiple structure of the pipe between the intermediate point P1 and the intermediate point P2, and the multiple structure of the pipe between the intermediate point P2 and the end point Pe can be set. Namely, the input screen 91pi may include the parameter setting GUI 911pi#8 by which the value of the parameter that defines whether the pipe is a multiple pipe (for example, a double pipe) or a single pipe between the start point Po and the intermediate point P1, the value of the parameter that defines whether the pipe is the multiple pipe or the single pipe between the intermediate point P1 and the intermediate point P2, and the value of the parameter that defines whether the pipe is the double pipe or the single pipe between the intermediate point P2 and the end point Pe can be set.

Incidentally, in the above-described example, the presence or absence of the branch, the presence or absence of the merge, and the multiple structure of at least a part of the pipe are all related to the structure of the pipe. Thus, each of the parameter that defines the presence or absence of the branch of at least a part of the pipe, the parameter that defines the presence or absence of the merge of at least a part of the pipe, and the parameter that defines the multiple structure of at least a part of the pipe may be referred to as a structural parameters related to the structure of at least a part of the pipe.

As illustrated in FIG. 8, the input screen 91pi may include an icon selection GUI 912pi (hereinafter, it is referred to as an "icon selection GUI 912pi#1") including a plurality of icons each of which is selectable to set the shape of the cross-section of at least a part of the pipe (namely, a shape of an opening, and a shape of the pipe in a plane intersecting with the direction along which the pipe extends) to be a specific type of shape. For example, FIG. 8 illustrates an example in which the icon selection GUI 912pi#1 includes: an icon 9121#11 that is selectable to set the shape of the cross-section of at least a part of the pipe to be a rectangular shape; an icon 9121#12 that is selectable to set the shape of the cross-section of at least a part of the pipe to be an oval shape (alternatively, a circular shape); an icon 9121#13 that is selectable to set the shape of the cross-section of at least a part of the pipe to be a triangular shape; an icon 9121#14 that is selectable to set the shape of the cross-section of at least a part of the pipe to be a rectangular shape, wherein a pipe conduit is divided into a plurality of compartments by a compartment wall; and an icon 9121#15 that is selectable to set the shape of the cross-section of at least a part of the pipe to be an oval shape (alternatively, a circular shape), wherein a pipe conduit is divided into a plurality of compartments by a compartment wall. Namely, FIG. 8 illustrates an example in which the icon selection GUI 912pi#1 includes the plurality of icons related to the plurality of cross-sections of the pipe (namely, the plurality of icons related to a plurality different shapes of the cross-section). The terminal user may set the shape of the cross-section of at least a part of the pipe to be a specific type of shape corresponding to the selected icon by selecting any one of the icons 9121#11 through 9121#15. Namely, the terminal user sets the shape information related to the shape of the cross-section of at least a part of the pipe by using the icon selection GUI 912pi#1 to select the icon related to the plurality of cross-sections of the pipe (namely, to select a desired icon from the plurality of icons related to the plurality of different shapes of the cross-section).

In the present example embodiment, the shapes of the cross-section of the pipe at each of the positions of the plurality of points P through which the pipe passes are used as the shape of the cross-section of at least a part of the pipe. Specifically, when the pipe passes from the start point Po through the intermediate points P1 and P2 in sequence to thereby reach the end point Pe as illustrated in FIG. 9, the terminal user may use the icon selection GUI 912pi#1 to set the shape of the cross-section of the pipe at the start point Po, the shape of the cross-section of the pipe at the intermediate point P1, the shape of the pipe at the intermediate point P2, and the shape of the cross-section of the pipe at the end point Pe. Namely, the terminal user may use the icon selection GUI 912pi#1 to select the icon that designates each of the cross-sections of the pipe at the plurality of points.

Incidentally, in the above-described example, each of the size of at least a part of the pipe, the rotational angle of at least a part of the pipe, and the type of the shape of the cross-section of at least a part of the pipe each changes, the shape of the cross-section of at least a part of the pipe changes. Thus, each of the parameter that defines the size of at least a part of the pipe, the parameter that defines the rotational angle of at least a part of the pipe, and the type of the shape of the cross-section of at least a part of the pipe may be referred to as the cross-sectional parameter (the section parameter) related to the cross-section of at least a part of the pipe.

The terminal user may set the shape information by using at least one of the parameter setting GUI 911 and the icon selection GUI 912 so that the shapes of the cross-sections of the pipe at the plurality of points P through which the pipe passes are all the same type of shapes. Note that the "type of shape" here may mean, for example, a type of shape of the cross-section that is allowed to be selected by using the icon selection GUI 912pi#1. Thus, a state in which the shapes of the cross-sections of the pipe at the plurality of points P are all the same type of shape may mean a state in which the shapes of the cross-sections of the pipe at the plurality of points P are set to one type of shape associated with one icon.

Alternatively, the terminal user may set the shape information by using at least one of the parameter setting GUI 911 and the icon selection GUI 912 so that the shapes of the cross-sections of the pipe at at least two of the plurality of points P through which the pipe passes are different types of shapes. Note that a state in which the shapes of the cross-sections of the pipe at at least two points P are different types of shapes may mean a state in which the shape of the cross-section of the pipe at a first point P is set to be a first type of shape associated with a first icon and the shape of the cross-section of the pipe at a second point P is set to be a second type of shape associated with a second icon. For example, the terminal user may set the shape of the cross-section of the pipe at the first point P (for example, any one of the start point Po, the intermediate point P1, the intermediate point P2, and the end point Pe) among the plurality of points P through which the pipe passes to be a first shape (for example, a rectangular shape) and set the shape of the cross-section of the pipe at the second point P (for example, other one of the start point Po, the intermediate point P1, the intermediate point P2, and the end point Pe) to be a second shape (for example, a circular shape) that is different from the first shape. In this case, the shape of the cross-section of the pipe changes from the first shape to the second shape between the first point P and the second point P. Therefore, the output screen 92 may also display the three-dimensional model of the pipe in which the shape of the cross-section changes from the first shape to the second shape between the first point P and the second point P. For example, when the shape information is set so that the shape of the cross-section of the pipe at the first point P is the first shape and then the shape information is set so that the shape of the cross-section of the pipe at the second point P is the second shape, a model part of the three-dimensional model, which is displayed on the output screen 92, between the first point P and the second point P may be updated. More specifically, for example, when the value of the parameter is set so that the shape of the cross-section of the pipe at the first is the first shape and then the value of the parameter is set so that the shape of the cross-section of the pipe at the second point P is the second shape, the model part of the three-dimensional model, which is displayed on the output screen 92, between the first point P and the second point P (especially, the shape of this model part) may be updated depending on the setting of the value of the parameter that defines the shape of the pipe at the second point P2. For example, when the icon is selected so that the shape of the cross-section of the pipe at the first is the first shape and then the icon is selected so that the shape of the cross-section of the pipe at the second point P is the second shape, the model part of the three-dimensional model, which is displayed on the output screen 92, between the first point P and the second point P (especially, the shape of this model part) may be updated depending on the selection of the icon to set the shape of the pipe at the second point P. However, not only in a case where the shapes of the cross-sections of the pipe at at least two of the plurality of points P are different types of shapes but also in a case where the shape information is set so that the shape of the cross-section of the pipe at the first point P is the first shape and then the shape information is set so that the shape of the cross-section of the pipe at the second point P is the second shape, the model part of the three-dimensional model, which is displayed on the output screen 92, between the first point P and the second point P (especially, the shape of this model part) may be updated

Incidentally, in the example illustrated in FIG. 8, the icon selection GUI 912pi#1 includes the plurality of icons each of which is selectable to collectively set the shapes of the cross-sections of both of the inner surface and the outer surface of at least a part of the pipe to be a specific type of shape. However, the icon selection GUI 912pi#1 may separately include a plurality of icons each of which is selectable to set the shape of the cross-section of the inner surface of at least a part of the pipe to be a specific shape and a plurality of icons each of which is selectable to set the shape of the cross-section of the outer surface of at least a part of the pipe to be a specific shape. In this case, the terminal user may separately set the shape of the cross-section of the inner surface of at least a part of the pipe and the shape of the cross-section of the outer surface of at least a part of the pipe. The terminal user may select the icons so that the shape of the cross-section of the inner surface of at least a part of the pipe is different from the shape of the cross-section of the outer surface of at least a part of the pipe.

As illustrated in FIG. 8, the input screen 91pi may include an icon selection GUI 912pi (hereinafter, it is referred to as an "icon selection GUI 912pi#2") including a plurality of icons each of which is selectable to set a shape of the edge part of the pipe to be a specific type of shape. Note that the shape of the edge part of the pipe may be referred to as the edge part parameter related to the edge part of the pipe. The edge part of the pipe may include, for example, at least one of the start edge part of the pipe and the end edge part of the pipe. The start edge part of the pipe may include a part of the pipe located between the start point Po and a position that is away from the start point Po by a predetermined distance along the direction along which the pipe extends. The end edge part of the pipe may include a part of the pipe located between the end point Pe and a position that is away from the end point Pe by a predetermined distance along the direction along which the pipe extends. For example, FIG. 8 illustrates an example in which the icon selection GUI 912pi#2 includes: an icon 9121#21 that is selectable to set the shape of the edge part of the pipe to be a first shape in which the inner diameter of the pipe between the edge part and a position that is away from the edge part by a predetermined distance gradually decrease toward the edge part and the edge part is a closed edge; an icon 9121#22 that is selectable to set the shape of the edge part of the pipe to be a second shape in which the inner diameter of the pipe between the edge part and a position that is away from the edge part by a predetermined distance gradually decreased toward the edge part, the inner diameter is constant near the edge part, and the edge part is an opened edge; an icon 9121#23 that is selectable to set the shape of the edge part of the pipe to be a third shape in which the inner diameter of the pipe between the edge part and a position that is away from the edge part by a predetermined distance gradually decrease toward the edge part, the edge part is a closed edge, and a threaded projecting part (namely, a part corresponding to an external screw or a screw part) is formed on the edge part; and an icon 9121#24 that is selectable to set the shape of the edge part of the pipe to a fourth shape in which the inner diameter of the pipe between the edge part and a position that is away from the edge part by a predetermined distance gradually decrease toward the edge part, the inner diameter is constant near the edge part, the edge part is an opened edge, and an inner surface of the pipe near the edge part is threaded (namely, the edge part is an internal screw or a screw hole). The terminal user may set the shape of the edge part of the pipe to be the specific shape corresponding to the selected icon by selecting any one of the icons 9121#21 to 9221#24.

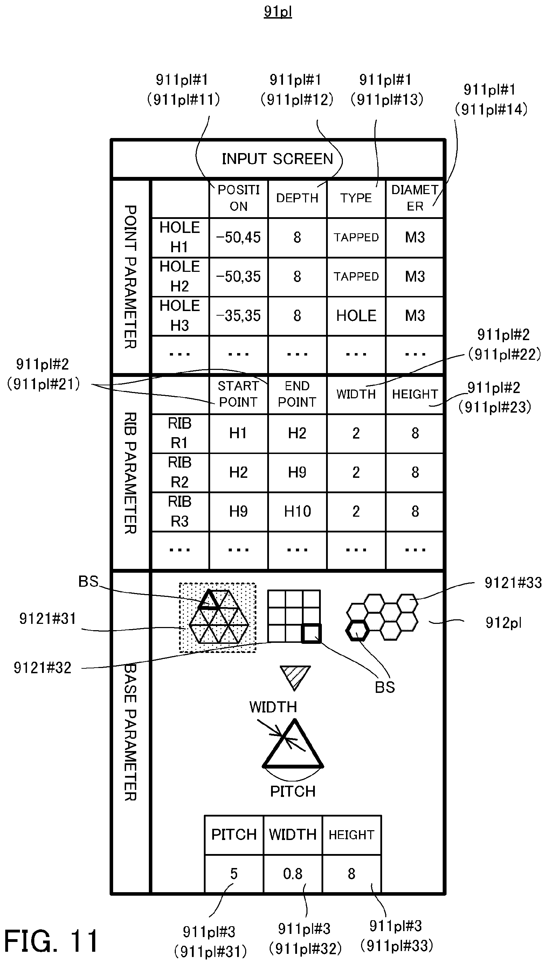

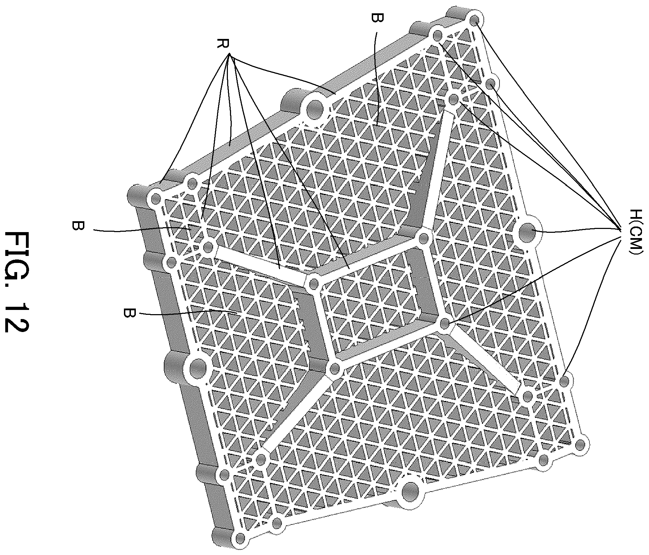

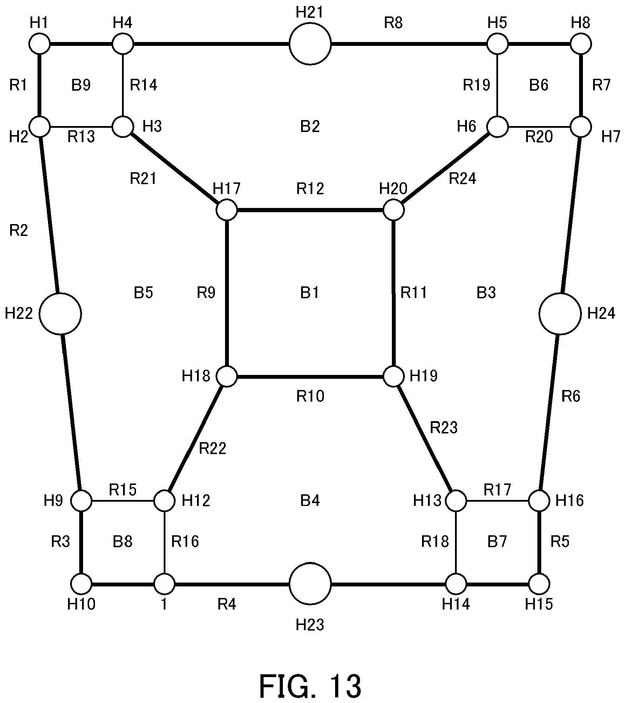

Next, FIG. 11 illustrates an example of the input screen 91 for setting the shape information related to the shape of the plate (hereinafter, it is referred to as an "input screen 91pl"). Incidentally, the present example embodiment describes the input screen 91pl that is used when the plate includes: a cylindrical part CM for forming at least one hole (namely, a hole formed in the plate so as to extend along a thickness direction of the plate) H; a rib-shaped rib part (an extending part) R extending from the hole H (namely, the cylindrical part CM) along a surface of the plate; and a base part B formed in an area surrounded by the rib part R, as illustrated in FIG. 12 that is a perspective view illustrating one example of the plate. More specifically, as illustrated in FIG. 13 that illustrates a simplified wireframe model of the plate in a form of a solid model illustrated in FIG. 12, the input screen 91pl will be described, which is used when the plate includes: cylindrical parts CM1 to CM24 that form holes H1 to H24, respectively; rib parts R1 to R24 each of which extends from one of the holes H1 to H24 to another one of the holes H1 to H24; and a base parts B1 to B8 formed in an area surrounded by at least four of the rib parts R1 to R24 is described. Note that the number of holes H, the number of rib parts R, and the number of base parts B are not limited to the examples illustrated in FIG. 12 and FIG. 13. The terminal user may add a new holes H (a new cylindrical part CM) or delete an existing hole H (an existing cylindrical part CM) by using the input screen 91pl. The terminal user may add a new rib part R or delete an existing rib part R by using the input screen 91pl. The terminal user may add a new base part B or delete an existing base part B by using the input screen 91pl. Moreover, when the shape information related to the shape of the plate is set, each of the three-dimensional model of the plate corresponding to the solid model illustrated in FIG. 12 and the three-dimensional model of the plate corresponding to the wire frame model illustrated in FIG. 13 may be displayed on the output screen 92.

As illustrated in FIG. 11, the input screen 91pl may include a parameter setting GUI 911pl (hereinafter, it is referred to as a "parameter setting GUI 911pl#1") for setting a value of a parameter defining a hole H (more specifically, the cylindrical part CM forming a hole H) corresponding to at least a part of the plate. In this case, the terminal user may use the parameter setting GUI 911pl#1 to set a plurality of parameters that define the plurality of holes H formed respectively at a plurality of points of the plate. Namely, the terminal user may use the parameter setting GUI 911pl#1 to set values of the parameters for the plurality of points of the plate. Note that the hole H is formed at a certain point on the plate. Thus, the parameter that defines the hole H may be referred to as a point parameter.

The parameter setting GUI 911pl#1 may include a parameter setting GUI 911pl#11 for setting a value of a parameter that defines a position of the hole H (namely, a position of the cylindrical part CM). For example, as illustrated in FIG. 11, the parameter setting GUI 911pl#1 may include the parameter setting GUI 911pl#11 by which the value of the parameter that defines the position of each of the holes H1 to H24 (namely, the position of each of the cylindrical parts CM1 to CM24) can be set.

The parameter setting GUI 911pl#1 may include a parameter setting GUI 911pl#12 for setting a value of a parameter that defines a depth of the hole H (namely, a size of the hole H along the thickness direction of the plate, and it is equivalent to a height of the cylindrical part CM along the thickness direction of the plate). For example, as illustrated in FIG. 11, the parameter setting GUI 911pl#12 may include the parameter setting GUI 911pl#12 by which the value of the parameter that defines the depth of each of the holes H1 to H24 (namely, the height of each of the cylindrical parts CM1 to 24) can be set as the value of the parameter that defines the shape of the hole H.

The parameter setting GUI 911pl#1 may include a parameter setting GUI 911pl#13 for setting a value of a parameter that defines a type of shape of the inner surface facing the hole H (namely, the inner surface of the cylindrical part CM). For example, as illustrated in FIG. 11, the parameter setting GUI 911pl#1 may include the parameter setting GUI 911pl#13 by which the type of shape of each of the inner surfaces facing the holes H1 to H24 can be set as the value of the parameter that defines the shape of hole H. Note that each of a tapped shape with a threaded inner surface and a hole shape with an unthreaded inner surface is one example of the type of shape of the inner surface facing the hole H. Thus, the terminal user may use the parameter setting GUI 911pl#13 to set the type of shape of the inner surface facing hole H to either one of the tapped shape and the hole shape.

The parameter setting GUI 911pl#1 may include a parameter setting GUI 911pl#14 for setting a value of a parameter that defines a diameter of the hole H (namely, a size of the hole H in the direction along the surface of the plate, and it is equivalent to a size of the cylindrical part CM in the direction along the surface of the plate). For example, as illustrated in FIG. 11, the parameter setting GUI 911pl#1 may include the parameter setting GUI 911pl#14 by which the diameter of each of the holes H1 to H24 (namely, the size of each of the cylindrical parts CM1 to CM24) can be set as the value of the parameter that defines the shape of the hole H.

As illustrated in FIG. 11, the input screen 91pl may include a parameter setting GUI 911pl (hereinafter, it is referred to as a "parameter setting GUI 911pl#2") for setting a value of a parameter that defines the rib part R corresponding to at least a part of the plate. In this case, the terminal user may use the parameter setting GUI 911 pl#2 to set the values of the plurality of parameters that define the plurality of rib parts R that are formed respectively at a plurality of points of the plate. Namely, the terminal user may use the parameter setting GUI 911pl#2 to set the values of the parameters for the plurality of points of the plate. The parameter that defines the rib part R may be referred to as a rib parameter.

The parameter setting GUI 911pl#2 may include a parameter setting GUI 911pl#21 for setting a value of a parameter that defines a position of the rib part R. For example, as illustrated in FIG. 11, the parameter setting GUI 911pl#2 may include the parameter setting GUI 911pl#11 by which the value of the parameter that defines the position of each of the rib parts R1 to R24 can be set. More specifically, in the present example embodiment, the rib part R extends from one hole H to another hole H (namely, from one cylindrical part CM to another cylindrical part CM). Therefore, in the present example embodiment, a parameter that defines the hole H located at a start point of the rib part R and a parameter that defines the hole H located at an end point of the rib part R may be used as the parameters that define the position of the rib part R. Namely, the parameter setting GUI 911pl#2 may include the parameter setting GUI 911pl#21 by which the values of the parameters that define the holes H located at the start point and the holes H located at the end point of each of the rib parts R1 to R24 can be set.

The parameter setting GUI 911pl#2 may include a parameter setting GUI 911pl#22 for setting a value of a parameter that defines a width of the rib part R (namely, a size of the rib part R in a direction that is along the surface of the plate and that intersects with the direction along which the rib part R extends). For example, as illustrated in FIG. 11, the parameter setting GUI 911pl#2 may include the parameter setting GUI 911pl#22 by which the value of the parameter that defines the width of each of the rib parts R1 to R24 can be set as the value of the parameter that defines the shape of the rib part R.

The parameter setting GUI 911pl#2 may include a parameter setting GUI 911pl#23 for setting a value of a parameter that defines a height of the rib part R (namely, a size of the rib part R along the thickness direction of the plate). For example, as illustrated in FIG. 11, the parameter setting GUI 911pl#2 may include the parameter setting GUI 911pl#23 by which the value of the parameter that defines the height of each of the rib parts R1 to R24 can be set as the value of the parameter that defines the shape of the rib part R.

As illustrated in FIG. 11, the input screen 91pl may include an icon selection GUI 912pl including a plurality of icons each of which is selectable to set a structure (namely, a shape) of the base part B, which corresponds to at least a part of the plate, to be a specific type of structure. The base part B is formed in an area surrounded by the plurality of rib parts R, as described above. In this case, the base part B may be regarded to be a part for filling the area surrounded by the plurality of rib parts R. Thus, the structure of the base part B may mean a structure for filling the area surrounded by the plurality of rib parts R. For example, FIG. 11 illustrates an example in which the icon selection GUI 912pl includes: an icon 9121#31 that is selectable to set the structure of base part B to be a first structure which is filled with a plurality of base structures BS along the surface of the plate, wherein a shape of a cross-section of the base structure BS along the surface of the plate is a triangular shape; an icon 9121#32 that is selectable to set the structure of base part B to be a second structure which is filled with a plurality of base structures BS along the surface of the plate, wherein a shape of a cross-section of the base structure BS along the surface of the plate is a rectangular shape; and an icon 9121#32 that is selectable to set the structure of base part B to be a third structure which is filled with a plurality of base structures BS along the surface of the plate, wherein a shape of a cross-section of the base structure BS along the surface of the plate is a hexagonal shape. The terminal user may set the type of structure of the base part B to be the specific structure corresponding to the selected icon by selecting any one of the icons 9121#31 to 9121#33. Note that the base structure BS is a structure in which a rib-shaped part extending along the surface of the plate constitutes each side of the base structure BS (specifically, each side of the cross-section of the base structure BS along the surface of the plate).

As described above, the plate may include the plurality of base parts B (see FIG. 13). In this case, the terminal user may use the icon selection GUI 912pl to set the structure of each of the base parts B1 to B8. Namely, the terminal user may select icons for a plurality of points of the plate.

As illustrated in FIG. 11, the input screen 91pl may include a parameter setting GUI 911pl (hereinafter, it is referred to as a "parameter setting GUI 911pl#3") for setting a value of a parameter that defines the size of the base part B corresponding to at least a part of the plate. In this case, the terminal user may use the parameter setting GUI 911pl#3 to set the values of the plurality of parameters that define the shape of the plurality of base parts B that are formed respectively in a plurality of points of the plate. The parameter that defines the size of the base parts B may be referred to as a base parameter. Similarly, the type of structure (shape) of the base part B set by the icon selection GUI 912pl may also be referred to as the base parameter.

The parameter setting GUI 911pl#3 may include a parameter setting GUI 911pl#31 for setting a value of a parameter that defines a pitch of the base structure BS that constitutes the base part B. For example, as illustrated in FIG. 11, the parameter setting GUI 911pl#3 may include the parameter setting GUI 911 pl#31 by which the value of the parameter that defines the pitch of the base structure BS that constitutes each of the base parts B1 to B8 can be set. The pitch of the base structure BS may be equivalent to an array interval between the base structures BS. When the pitch of the base structure BS is determined, a size of one side of the base structure BS (for example, a size of one side of a triangle, a rectangle or a hexagon) is determined. Therefore, setting the pitch of the base structure BS may be regarded to be equivalent to setting the size of one side of the base structure BS. Note that a distance between vertices, which face toward each other, of the base structure BS may be used as the pitch of the base structure BS. A distance between sides, which face toward each other, of the base structure BS may be used as the pitch of the base structure BS.

The parameter setting GUI 911pl#3 may include a parameter setting GUI 911pl#32 for setting a value of a parameter that defines a width of the base structure BS that constitutes the base part B (namely, a size of the base structure BS in a direction along the surface of the plate, specifically, a size of rib-shaped part in a direction that is along the surface of the plate and that intersects with a direction along which the rib-shaped part, which constitutes the base structure BS, extends). For example, as illustrated in FIG. 11, the parameter setting GUI 911pl#3 may include the parameter setting GUI 911pl#32 by which the value of the parameter that defines the width of the base structure BS that constitutes each of the base parts B1 to B8 can be set.

The parameter setting GUI 911pl#3 may include a parameter setting GUI 911pl#33 for setting a value of a parameter that defines a height of the base structure BS that constitutes the base part B (namely, a size of the base structure BS along the thickness direction of the plate). For example, as illustrated in FIG. 11, the parameter setting GUI 911pl#33 may include the parameter setting GUI 911pl#33 by which the value of the parameter that defines the height of the base structure BS that constitutes each of the base parts B1 to B8 can be set.

Again in FIG. 6, the data generation unit 213 of the data generation server 2 determines whether or not the operation of setting the shape information using the setting GUI 9 has been completed (a step S15). For example, the data generation unit 213 may determine that the operation of setting the shape information using the setting GUI 9 has been completed when the terminal user instructs, by using the input apparatus 34 of the terminal apparatus 3, to complete the operation of setting the shape information.

As a result of the determination at the step S15, when it is determined that the operation of setting the shape information using the setting GUI 9 has not been completed (the step S15: No), the operation of setting the shape information using the setting GUI 9 is continued. Namely, the build system SYS continues the operation from the step S13 to the step S14.

On the other hand, when it is determined that the operation of setting the shape information using the setting GUI 9 has been completed (the step S15: Yes), the data generation unit 213 generates, based on the latest shape information obtained by the information obtaining unit 212 at the step S13, the three-dimensional model of the three-dimensional structural object having the shape defined by the shape information set by the terminal user (a step S16).

The format of the three-dimensional model data may be any format. For example, the data generation unit 213 may generate the three-dimensional model data compliant with a STL (Standard Triangulated Language) file format. For example, the data generation unit 213 may generate the three-dimensional model data compliant with a STEP (Standard for Exchange of Product Model Data) file format. For example, the data generation unit 213 may generate the three-dimensional model data compliant with an IGES (Initial Graphics Exchange Specification) file format. For example, the data generation unit 213 may generate the three-dimensional model data compliant with ta DWG file format. For example, the data generation unit 213 may generate the three-dimensional model data compliant with a DXF (Drawing Exchange Format) file format. For example, the data generation unit 213 may generate the three-dimensional model data compliant with a VRMI, (Virtual Reality Modeling Language) file format. For example, the data generation unit 213 may generate the three-dimensional model data compliant with an ISO 10303 file format.

The data generation unit 213 may store the generated three-dimensional model data in the storage apparatus 22. Alternatively, the data generation unit 213 may store, in addition to or instead of the generated three-dimensional model data, the shape information used to generate the three-dimensional model data (namely, the shape information such as the parameter set by the terminal user) in the storage apparatus 22. When the storage apparatus 22 stores the shape information, the data generation unit 213 may generate the three-dimensional model data based on the shape information stored in the storage apparatus 22. The data generation unit 213 may regenerate (namely, restore) the generated three-dimensional model data based on the shape information stored in the storage apparatus 22. The data generation unit 213 may generate, based on the restored three-dimensional model data, new three-dimensional model data representing a new three-dimensional structural object that is obtained by adding a new part (for example, a screw part and the like) to the three-dimensional structural object represented by the restored three-dimensional model data. Namely, the data generation unit 213 may modify the restored three-dimensional model data.

Moreover, the data generation unit 213 may store the set shape information in the storage apparatus 22 after it is determined that the operation of setting the shape information using the setting GUI 9 has been completed. The data generation unit 213 may also store the shape information that has been set up to that time (the shape information in the process of being set) in the storage apparatus 22 before it is determined that the operation of setting the shape information using the setting GUI 9 has been completed. For example, the data generation unit 213 may store the shape information that has been set up to that time (the shape information in the process of being set) in the storage apparatus 22 when the terminal user wants to temporarily suspend the operation of setting the shape information using the setting GUI 9, although the operation of setting the shape information using the setting GUI 9 has not been completed. In this case, when the terminal user resumes setting the shape information, the display control unit 211 may display on the display apparatus 35 the setting GUI 9 used by the terminal user to continue setting the shape information from where he suspended based on the shape information in the process of being set.

Then, the data generation unit 213 transmits the three-dimensional model data generated at the step S16 to the build apparatus 1 by using the communication apparatus 23. Note that the data generation unit 213 may transmit the three-dimensional model data to the build apparatus 1 based on an instruction from the server user (alternatively, the terminal user or the build user). Alternatively, the data generation unit 213 may automatically transmit the three-dimensional model data to the build apparatus 1 without waiting for the instruction from the server user (alternatively, the terminal user or the modeling user). The control apparatus 17 of the build apparatus 1 receives (obtains) the three-dimensional model data transmitted from the data generation server 2 by using the communication apparatus 18. Then, the control apparatus 17 generates the build control information that specifies a detail of the operation of the build apparatus 1 based on the three-dimensional model data (a step S18). Specifically, the control apparatus 17 generates, based on the three-dimensional model data, the build control information that specifies a detail of the operation of the build apparatus 1 to build the three-dimensional structural object represented by the three-dimensional model data (namely, the three-dimensional structural object having a shape defined by the shape information set by the terminal user). Namely, the control apparatus 17 generates, based on the three-dimensional model data, the build control information that allows the build apparatus 1 to operate to build the three-dimensional structural object represented by the three-dimensional model data.

The build control information may include path information that indicates a moving trajectory of the processing head 121 relative to the stage 131. As the processing head 121 moves, an irradiation position of the processing light EL from the irradiation optical system 1211 and a supply position of the build materials M from the material nozzle 1212 also move. Thus, the path information may be regarded to indicate a movement trajectory of each of the irradiation position of the processing light EL and the supply position of the build materials M relative to to the stage 131.

Then, the control apparatus 17 controls the operation of the build apparatus 1 to build the three-dimensional structural object (namely, the three-dimensional structural object having the shape set by the terminal user) based on the build control information (the step S18). As a result, the three-dimensional structural obj ect having the shape set by the terminal user is built.

Note that a control information generation apparatus that is different from the control apparatus 17 of the build apparatus 1 may generate the build control information. In this case, the data generation unit 213 may transmit the three-dimensional model data generated at the step S16 to the control information generation apparatus. The control information generation apparatus 17 may receive (obtain) the three-dimensional model data transmitted from the data generation server 2. Then, the control information generation apparatus may generate the build control information based on the three-dimensional model data. Then, the control information generation apparatus may transmit the generated build control information to the build apparatus 1 (the control apparatus 17). Then, the control apparatus 17 may control the operation of the build apparatus 1 based on the build control information generated by the control information generation apparatus.

### (3) Effect of Build System SYS

As described above, in the build system SYS in the present example embodiment, the terminal user can generate the three-dimensional model data by setting the value of the parameter and / or selecting the icon that defines the shape of the three-dimensional structural object. Namely, the terminal user can generate the three-dimensional model data without using a software that requires highly specialized knowledge such as a three-dimensional CAD (Computer Aided Design) software. Namely, the data generation server 2 is capable of appropriately assisting the user to generate the three-dimensional model data by providing the setting GUI 9 to the terminal user.

Especially, the data generation server 2 provides, to the terminal user, the setting GUI 9 according to the type of the three-dimensional structural object so that the terminal user can set appropriate shape information according to the type of the three-dimensional structural object to be additively built by the build apparatus 1. Thus, the terminal user can generate the three-dimensional model data regardless of the type of the three-dimensional structural object. For example, the terminal user can generate the three-dimensional model data representing the three-dimensional model of the three-dimensional structural object including at least one of the pipe and the plate.

Moreover, the terminal user can intuitively generate the three-dimensional model data because the three-dimensional model based on the shape information currently set by the terminal user is displayed on the output screen 92 included in the setting GUI 9.

### (4) Modified Example

### (4-1) First Modified Example

In the above-described description, the terminal user sets the value of the parameter that defines the position of at least a part of the three-dimensional structural object by using the input screen 91. On the other hand, in a first modified example, the data generation unit 213 of the data generation server 2 may set the value of the parameter that defines the position of at least a part of the three-dimensional structural object. Specifically, the data generation unit 213 may automatically set the value of the parameter that defines the position of one part of the three-dimensional structural object, even when the terminal user has not set the value of the parameter that defines the position of the one part. The data generation unit 213 may automatically set the value of the parameter that defines the position of one part of the three-dimensional structural object without the terminal user setting the value of the parameter that defines the position of the one part. In this case, the data generation unit 213 generates the three-dimensional model data based on the value of the parameter set by the terminal user using the setting GUI 9 and the value of the parameter automatically set by the data generation unit 213.

For example, as described above, the terminal user uses the input screen 91pi to set the values of the parameters that define the positions of the plurality of points P through which the pipe passes. In the first modified example, the data generation unit 213 may set the value of the parameter that defines the position of one point P that has not been set by the terminal user. The data generation unit 213 may automatically set the value of the parameter that defines the position of the one point P even when the terminal user has not set the value of the parameter that defines the position of the one point P. For example, in a situation where the terminal user has already set the values of the parameters that define the respective positions of the start point Po and the end point but has not set the values of the parameters that define the respective positions of the intermediate point P1 and the intermediate point P2, the data generation unit 213 may automatically set the value of the parameter that defines the position of at least one of the intermediate point P1 and the intermediate point P2. For example, in a situation where the terminal user has already set the values of the parameters that define the respective positions of the start point Po, the intermediate point P1, the intermediate point P2, and the end point as described above, the data generation unit 213 may automatically set the value of the parameter that defines the position of a new point P which is different from the start point Po, the intermediate point P1, the intermediate point P2, and the end point Pe, and through which the pipe passes.

For example, as described above, the terminal user uses the input screen 91pl to set the value of the parameter that defines the position of the cylindrical part CM constituting the plate (namely, the position of the hole H). In the first modified example, the data generation unit 213 may set the value of the parameter that defines the position of one cylindrical part CM that has not been set by the terminal user. The data generation unit 213 may automatically set the value of the parameter that defines the position of the one cylindrical part CM even when the terminal user has not set the value of the parameter that defines the position of the one cylindrical part CM. For example, in a situation where the terminal user has not set the value of the parameter that defines the position of one cylindrical part CM among the cylindrical parts CM1 to CM24 as described above, the data generation unit 213 may automatically set the value of the parameter that defines the position of the one cylindrical part CM among the cylindrical parts CM1 to CM24. For example, in a situation where the terminal user has already set the value of the parameter that defines the position of each of the cylindrical parts CM1 to CM24 as described above, the data generation unit 213 may automatically set the value of the parameter that defines the position of a new cylindrical part CM that is different from the cylindrical parts CM1 to CM24 and that forms the hole H to be formed in the plate.

For example, as described above, the terminal user uses the input screen 91pl to set the value of the parameter that defines the position of the rib member R constituting the plate. In the first modified example, the data generation unit 213 may set the value of the parameter that defines the position of one rib part R that has not been set by the terminal user. The data generation unit 213 may automatically set the value of the parameter that defines the position of the one rib part R even when the terminal user has not set the value of the parameter that defines the position of the one rib part R. For example, in a situation where the terminal user has not set the one rib part R among the rib parts R1 to R24 as described above, the data generation unit 213 may automatically set the value of the parameter that defines the position of the one rib part R among the rib parts R1 to R24. For example, in a situation where the terminal user has already set the value of the parameter that defines the position of each of the rib parts R1 to R24 as described above, the data generation unit 213 may automatically set the value of the parameter that defines the position of a new rib part R that is different from the rib parts R1 to R24 and that constitutes the plate.

The data generation unit 213 may set, as a value of a parameter that defines a position of a second part of the three-dimensional structural object that has not been set by the terminal user, a position that is away from a first part of the three-dimensional structural object, which has the shape defined by the shape information set by the terminal user, by a predetermined distance (a first distance) D. Specifically, the data generation unit 213 may automatically set, as the value of the parameter that defines the position of the second part of the three-dimensional structural object, the position that is away from the first part of the three-dimensional structural object by the predetermined distance D after the terminal user has set the value of the parameter that defines the position of the first part of the object. In this case, the data generation unit 213 may determine the position of the first part of the three-dimensional structural object set by the terminal user based on the shape information (especially, the value of the parameter that defines the position of the first part) obtained from the terminal apparatus 3. Then, the data generation unit 213 may set, as the value of the parameter that defines the position of the second part of the three-dimensional structural object, the position that is away from the determined position of the first part of the three-dimensional structural object by the predetermined distance D. Namely, the data generation unit 213 may set the value of the parameter that defines the position of the second part of the three-dimensional structural object based on the value of the parameter that defines the position of the first part of the three-dimensional structural object. The data generation unit 213 may set, as to the value of the parameter that defines the position of the second part of the three-dimensional structural object, the position determined based on the value of the parameter that defines the position of the first part of the three-dimensional structural object.

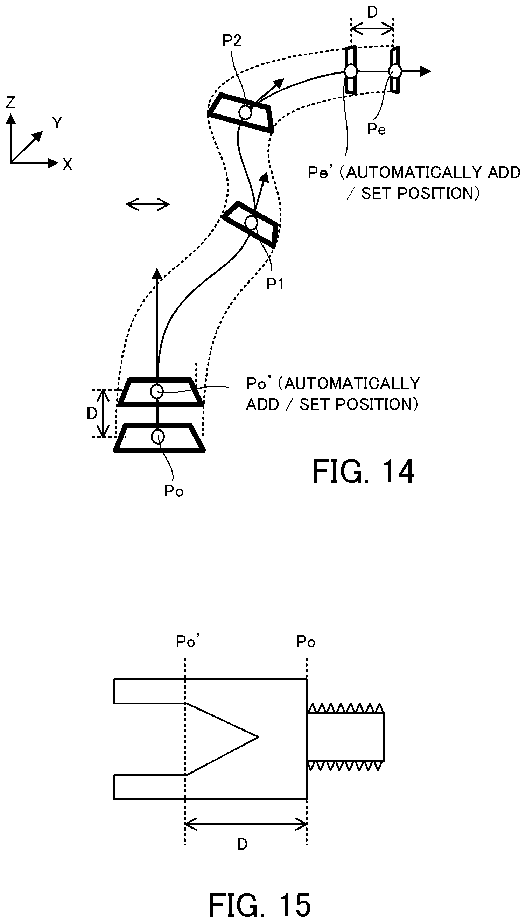

As one example, as described above, the terminal user uses the input screen 91pi (especially, the parameter setting GUI 911pi#1) to set the parameter that defines the position of the start point Po through which the start edge part of the pipe passes. In this case, as illustrated in FIG. 14 that is a schematic diagram illustrating the plurality of points P through which the pipe passes, the data generation unit 213 may set, as a value of a parameter that defines a position of a new point P through which a part of the pipe passes (hereafter, this point P is referred to as an "intermediate point Po"'), a position that is away from the position of the start point Po by the predetermined distance D. The position that is away from the position of the start point Po by the predetermined distance D may mean a position that is away from the position of the start point Po by the predetermined distance D along the centerline C of the pipe. In this case, it can be said that the data generation unit 213 newly adds the intermediate point Po' that has not been added by the terminal user, and sets the value of the parameter that defines the position of the newly added intermediate point Po'. Note that setting the value of the parameter that defines the position of the intermediate point Po' may be regarded to be equivalent to setting the value of the parameter that defines the position of a part of the pipe that is away from the start edge part of the pipe by the predetermined distance D (namely, an intermediate part of the pipe between the start edge part and the end edge part).

The start point Po and the intermediate point Po' may satisfy such a condition that their positions along any one of the X-axis direction, the Y-axis direction, and the Z-axis direction are different from each other and their positions along the remaining two of the X-axis direction, the Y-axis direction, and the Z-axis direction are same as each other. Namely, the data generation unit 213 may set the value of the parameter that defines the position of the intermediate point Po' to satisfy such a condition that the position of the start point Po along a first axis among the X-axis direction, the Y-axis direction, and the Z-axis direction is different from the position of the intermediate point Po' along the first axis, the position of the start point Po along a second axis among the X-axis direction, the Y-axis direction, and the Z-axis direction is the same as the position of the intermediate position Po' along the second axis, and the position of the start point Po along a third axis among the X-axis direction, the Y-axis direction, and the Z-axis direction is the same as the position of the intermediate position Po' along the third axis. In an example illustrated in FIG. 14, the position of the start point Po along the Z-axis direction is different from the position of the intermediate point Po' in the Z-axis direction, the position of the start point Po along the X-axis direction is the same as the position of the intermediate point Po' along the X-axis direction, and the position of the start point Po along the Y-axis direction is the same as the position of the intermediate point Po' along the Y-axis direction. In this case, a line part of the centerline C of the pipe that connects the start point Po and the intermediate point Po' may be a straight line along the first axis (a straight line along the Z-axis in the example illustrated in FIG. 14). Moreover, the value of other parameter related to the intermediate point Po' (for example, at least one of the value of the parameter that defines the thickness, the value of the parameter that defines the angle, the value of the parameter that defines the direction, and the value of the parameter that represents the strength of the curvature) may be the same as the value of other parameter related to the start point Po. However, as long as a necessary margin is maintained, the position of the start point Po along the second axis may be different from the position of the intermediate point Po' along the second axis, the position of the start point Po along the third axis may be different from the position of the intermediate point Po' along the third axis, and the value of other parameter related to the intermediate point Po' may be different from the value of other parameter related to the start point Po.

As one example, as described above, the terminal user uses the input screen 91pi (especially, the parameter setting GUI 911pi#1) to set the parameter that defines the position of the end point Pe through which the end edge part of the pipe passes. In this case, as illustrated in FIG. 14, the data generation unit 213 may set, as a value of a parameter that defines a position of a new point P through which a part of the pipe passes (hereafter, this point P is referred to as an "intermediate point Pe"'), a position that is away from the position of the end point Pe by the predetermined distance D. The position that is away from the position of the end point Pe by the predetermined distance D may mean a position that is away from the position of the end point Pe by the predetermined distance D along the centerline C of the pipe. In this case, it can be said that the data generation unit 213 newly adds the intermediate point Pe' that has not been added by the terminal user, and sets the value of the parameter that defines the position of the newly added intermediate point Pe'. Note that setting the value of the parameter that defines the position of the intermediate point Pe' may be regarded to be equivalent to setting the value of the parameter that defines the position of a part of the pipe that is away from the end edge part of the pipe by the predetermined distance D (namely, an intermediate part of the pipe between the start edge part and the end edge part).

The end point Pe and the intermediate point Pe' may satisfy such a condition that their positions along any one of the X-axis direction, the Y-axis direction, and the Z-axis direction are different from each other and their positions along the remaining two of the X-axis direction, the Y-axis direction, and the Z-axis direction are same as each other. Namely, the data generation unit 213 may set the value of the parameter that defines the position of the intermediate point Pe' to satisfy such a condition that the position of the end point Pe along a fourth axis among the X-axis direction, the Y-axis direction, and the Z-axis direction is different from the position of the intermediate point Pe' along the fourth axis, the position of the end point Pe along a fifth axis among the X-axis direction, the Y-axis direction, and the Z-axis direction is the same as the position of the intermediate position Po' along the fifth axis, and the position of the end point Pe along a sixth axis among the X-axis direction, the Y-axis direction, and the Z-axis direction is the same as the position of the intermediate position Po' along the sixth axis. In the example illustrated in FIG. 14, the position of the end point Pe along the Z-axis direction is different from the position of the intermediate point Pe' in the Z-axis direction, the position of the end point Pe along the X-axis direction is the same as the position of the intermediate point Pe' along the X-axis direction, and the position of the end point Pe along the Y-axis direction is the same as the position of the intermediate point Pe' along the Y-axis direction. In this case, a line part of the centerline C of the pipe that connects the end point Pe and the intermediate point Pe' may be a straight line along the fourth axis (a straight line along the X-axis in the example illustrated in FIG. 14). Moreover, the value of other parameter related to the intermediate point Pe' (for example, at least one of the value of the parameter that defines the thickness, the value of the parameter that defines the angle, the value of the parameter that defines the direction, and the value of the parameter that represents the strength of the curvature) may be the same as the value of other parameter related to the end point Pe. However, as long as a necessary margin is maintained, the position of the end point Pe along the fifth axis may be different from the position of the intermediate point Pe' along the fifth axis, the position of the end point Pe along the sixth axis may be different from the position of the intermediate point Pe' along the sixth axis, and the value of other parameter related to the intermediate point Pe' may be different from the value of other parameter related to the end point Pe.

As described above, the shape of the edge part of the pipe is set to be the specific type of shape by using the icon selection GUI 912pi. In this case, the predetermined distance D that is used by the data generation unit 213 to set the value of the parameter defining the position of each of the intermediate points Po' and Pe' may be determined based on the shape (namely, the structure) of the edge part of the pipe. Specifically, as illustrated in FIG. 15 that is a cross-sectional view illustrating the start edge part of the pipe, the shape of the edge part of the pipe is such that the inner diameter of the pipe gradually decreases as it approaches the edge part. In this case, the predetermined distance D may be set to be a value that can realize the pipe whose inner diameter begins to decrease at each of the intermediate points Po' and Pe'. Namely, the predetermined distance D may be set to be a value that can realize a state in which the position of each of the intermediate points Po' and Pe' is the same as the position at which the inner diameter of the pipe begins to decrease.

When the position of the intermediate point Po' is the same as the position at which the inner diameter of the pipe begins to decrease, the shape of the pipe between the intermediate point Po' and the start point Po becomes the specific type of shape set by using the icon selection GUI 912pi. Namely, an area in which a part having the specific type of shape set by using the icon selection GUI 912pi is formed is included in a range in which a distance from the position of the start edge part of the pipe is shorter than the predetermined distance D. More specifically, in the range in which the distance from the position of the start edge part of the pipe is shorter than the predetermined distance D, a part of the pipe that includes the area in which the part having the specific type of shape set by using the icon selection GUI 912pi is formed and that extends along the centerline C is included. Incidentally, as an example of the part having the specific type of shape, there is a part at which an external screw (a screw part) or an internal screw (a screw hole part) is formed in the above-described description. In this case, the data generation unit 213 may set the value of the parameter that defines the shape of the pipe between the start point Po and the intermediate point Po' based on the value of the parameter that defines the position of the intermediate point Po' set by the data generation unit 213, the value of the parameter that defines the position of the start point Po set by the terminal user, and the icon selected by using the icon selection GUI 912pi (namely, the type of the shape of the start edge part of the pipe). Specifically, the data generation unit 213 may automatically set the value of the parameter that defines the shape of the pipe between the start point Po and the intermediate point Po' so that the shape of the pipe between the start point Po and the intermediate point Po' is the specific type of shape associated with the selected icon. Namely, the data generation unit 213 may automatically set a value of a parameter that defines a shape of a part of the pipe between the start edge part and an intermediate part corresponding to the intermediate point Po' so that the shape of the pipe between the start edge part of the pipe and the intermediate part of the pipe corresponding to the intermediate point Po' is the specific type of shape associated with the selected icon. Moreover, although a detailed description is omitted, the data generation unit 213 may set the value of the parameter that define the shape of the pipe between the end point Pe and the intermediate point Pe' in the same manner as it sets the value of the parameter that defines the shape of the pipe between the start point Po and the intermediate point Po'. Namely, terms of the start point Po, the intermediate point Po', and the start edge part in the description of this paragraph may be replaced by the terms of the end point Pe, the intermediate point Pe', and the end edge part, respectively.

Since the shape of the pipe between the intermediate point Po' and the start point Po is the specific type of shape set by using the icon selection GUI 912pi, a new point P through which the pipe passes may not be added between the intermediate point Po' and the start point Po. Thus, the input screen 91pi may be configured so that the terminal user is not allowed to add a new point P through which the pipe passes between the intermediate point Po' and the start point Po. The input screen 91pi may be configured so that the terminal user is not allowed to designate the position between the intermediate point Po' and the start point Po as the value of the parameter that defines the position of the new point P through which the pipe passes (namely, a point P that has not been added by the user, and for example, a point P that is different from the intermediate point Po' or the intermediate point Po'). The input screen 91pi may be configured so that the terminal user is not allowed to designate the position between the intermediate point Po' and the start point Po as the value of the parameter that defines the position of the existing point P through which the pipe passes (namely, a point P that the user has already added). For the same reason, the input screen 91pi may be configured so that the terminal user is not allowed to add a new point P through which the pipe passes between the intermediate point Pe' and the end point Pe. The input screen 91pi may be configured so that the terminal user is not allowed to designate the position between the intermediate point Pe' and the end point Pe as the value of the parameter that defines the position of the new point P through which the pipe passes. The input screen 91pi may be configured so that the terminal user is not allowed to designate the position between the intermediate point Pe' and the end point Pe as the value of the parameter that defines the position of the existing point P through which the pipe passes.

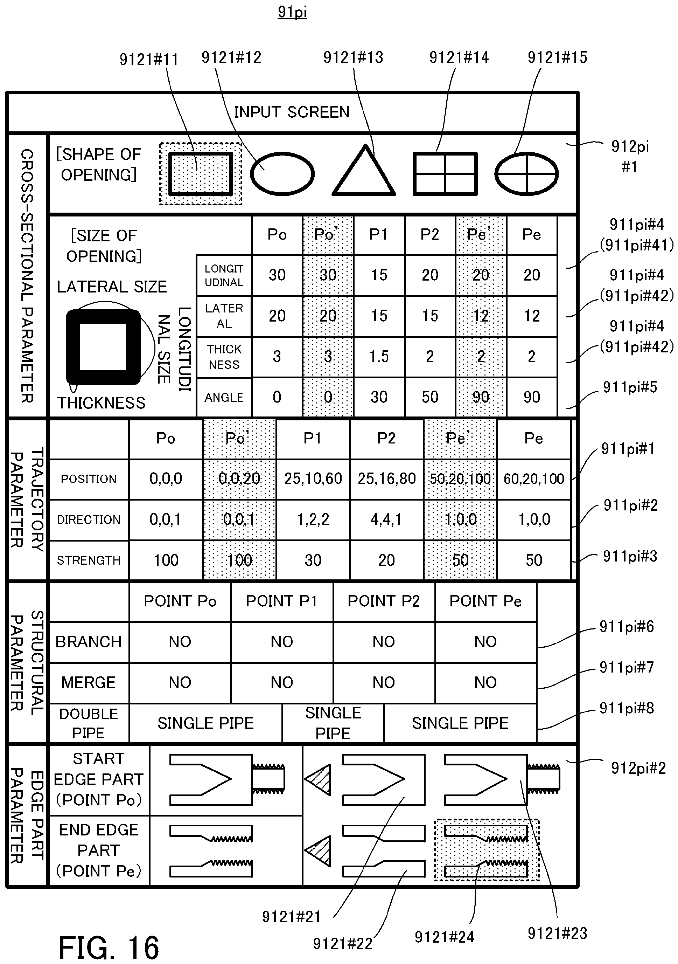

On the input screen 91, the value of the parameter set by the data generation unit 213 may be displayed. For example, FIG. 16 illustrates one example of the input screen 91pi displayed when the data generation unit 213 inputs the value of the parameter that defines the position of each of the intermediate points Po' and Pe' through which the pipe passes. As illustrated in FIG. 16, the input screen 91pi may display the value of the parameter that defines the position of each of the intermediate points Po' and Pe'. Furthermore, as illustrated in FIG. 16, the input screen 91pi may display the value of any parameter (for example, at least one of the cross-sectional parameter and the trajectory parameter) related to each of the intermediate points Po' and Pe'. In this case, a display aspect of the value of the parameter set by the data generation unit 213 may be different from a display aspect of the value of the parameter set by the terminal user. The value of the parameter set by the data generation unit 213 may be displayed in a display aspect in which the terminal user is not allowed to set it. For example, the value of the parameter set by the data generation unit 213 may be displayed in a gray out state to indicate that the terminal user is not allowed to set it. As a result, the value of the parameter set by the data generation unit 213 is not erroneously changed by the terminal user. Incidentally, in the output screen 92, the three-dimensional model based on the value of the parameter set by the data generation unit 213 may be displayed.

In this first modified example, even when the terminal user does not set a part of the shape information, the data generation server 2 sets a part of the shape information that has not been set by the terminal user. Therefore, the data generation server 2 is capable of appropriately assisting the user in generating the three-dimensional model data.

Incidentally, in the above-described description, the terminal user sets the value of the parameter that defines the position of the start point Po through which the start edge part of the pipe passes, and the data generation unit 213 sets the value of the parameter that defines the position of the intermediate point Po' based on the position of the start point Po. However, the terminal user may set the value of the parameter that defines the position of the intermediate point Po', and the data generation unit 213 may set the value of the parameter that defines the position of the start point Po based on the position of the intermediate point Po'. Similarly, the terminal user may set the value of the parameter that defines the position of the intermediate point Pe', and the data generation unit 213 may set the value of the parameter that defines the position of the end point Pe based on the position of the intermediate point Pe'.

### (4-2) Second Modified Example

In the above-described description, the terminal user sets the shape information related to the shape of the object by using the input screen 91, and the output screen 92 displays the three-dimensional model based on the shape information set by the terminal user using the input screen 91. On the other hand, in a second modified example, the terminal user may set the shape information by performing a change operation for changing a shape of the three-dimensional model displayed on the output screen 92. Namely, in the second modified example, the terminal user may set the shape information related to the shape of the object by using the output screen 92. The terminal user may perform an operation for setting the shape information by using the output screen 92. The terminal user may input, to the terminal apparatus 3, information for setting the shape information by using the output screen 92.

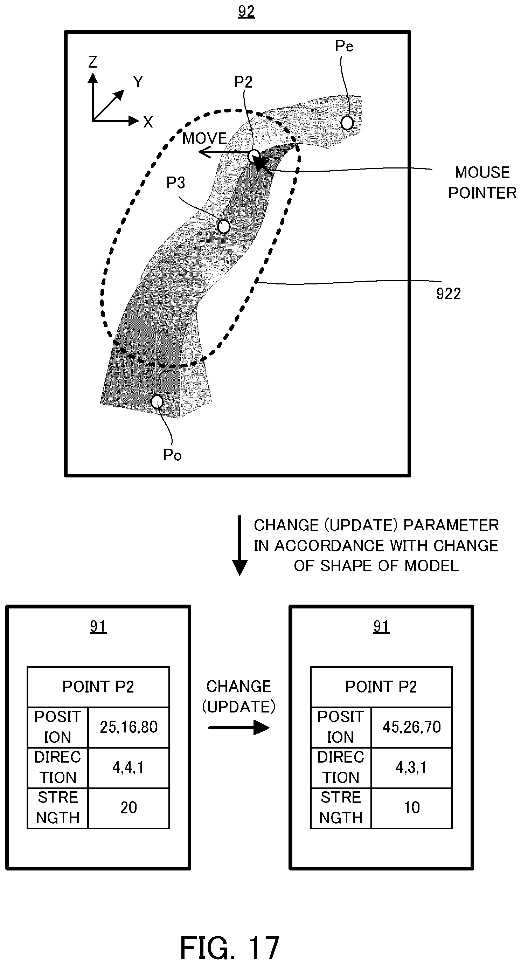

Specifically, as illustrated in FIG. 17 that illustrates the three-dimensional model displayed on the output screen 92, the terminal user performs, by using the input apparatus 34 such as a mouse or a touch panel, the change operation for changing the shape of the three-dimensional model displayed on the output screen 92. As a result, the output screen 92 displays the three-dimensional model whose shape has been changed by the change operation.

The change operation for changing the shape of the three-dimensional model may include an operation for moving at least a part of the three-dimensional model. For example, FIG. 17 illustrates an example in which the change operation for changing the shape of the three-dimensional model is performed by moving one point P (a point P2 in an example illustrated in FIG. 17) among the plurality of points P through which the pipe passes by using a mouse pointer displayed on the output screen 92. Namely, FIG. 17 illustrates an example in which the change operation for changing the shape of the three-dimensional model is performed by moving one part of the pipe corresponding to the one point P by using the mouse pointer displayed on the output screen 92.

The operation for moving at least a part of the three-dimensional model (namely, the change operation for changing the shape of the three-dimensional model) may be an operation for changing a position of at least a part of the three-dimensional model. For example, as illustrated in FIG. 17, the operation for moving one point P of the plurality of points P through which the pipe passes may be an operation for changing a position of one part of the pipe corresponding to the one point P. Namely, the operation for moving one point P of the plurality of points P through which the pipe passes may be an operation for changing the value of the parameter that defines the position of one part of the pipe corresponding to the one point P.

The operation for moving at least a part of the three-dimensional model (namely, the change operation for changing the shape of the three-dimensional model) may be an operation for changing a size of at least a part of the three-dimensional model. For example, the operation for moving a part of the outer surface of the pipe may be an operation for changing the outer diameter (namely, the size) of the pipe. Namely, the operation for moving a part of the outer surface of the pipe may be an operation for changing the parameter that defines the outer diameter (namely, the size) of the pipe.

The change operation for changing the shape of the three-dimensional model may include an operation for dragging and dropping the icon included in the icon selection GUI 912 on the input screen 91 to the output screen 92. The operation for dragging and dropping the icon to the output screen 92 may be an operation for designating a value of a parameter that defines a position of the icon on the output screen 92. The operation for dragging and dropping the icon to the output screen 92 may be an operation for setting the shape of at least a part of the three-dimensional model displayed at a position to which the icon is dragged and dropped on the output screen 92 to be the specific shape associated with the dragged and dropped icon.

The three-dimensional model displayed on the output screen 92 is a three-dimensional model represented in a display coordinate system that is a three-dimensional coordinate system in which an X-axis, a Y-axis, and a Z-axis are perpendicular to one another. Note that the display coordinate system may be the same as the build coordinate system used to describe the positional relationships of the various components of the build apparatus 1. The display coordinate system may be a coordinate system associated with the build coordinate system. The display coordinate system may be a coordinate system unrelated to the build coordinate system. In this case, the terminal user may perform the change operation for changing the shape information related to the X-axis (for example, the parameter defining the position along the X-axis) of a part of the three-dimensional model by moving a part of the three-dimensional model along the X-axis. The terminal user may perform the change operation for changing the shape information related to the Y-axis (for example, the parameter defining the position along the Y-axis) of a part of the three-dimensional model by moving a part of the three-dimensional model along the Y-axis. The terminal user may perform the change operation for changing the shape information related to the Z-axis (for example, the parameter defining the position along the Z-axis) of a part of the three-dimensional model by moving a part of the three-dimensional model along the Z-axis.

However, there is a possibility that it is difficult for the terminal user to intuitively understand a moving aspect of the three-dimensional model in the two-dimensional display screen 92, because the output screen 92 displaying the three-dimensional model is a two-dimensional display screen. Thus, the display control unit 211 of the data generation server 2 may generate the GUI information to display, on the display apparatus 35, the setting GUI 9 in which the three-dimensional model viewed from any one of the X-axis, the Y-axis, and the Z-axis, and the change operation for changing the shape information related to remaining two of the X-axis, the Y-axis, and the Z-axis is allowed to be performed on the output screen 92. In this case, the terminal user can perform the operation for moving a part of the three-dimensional model in the two-dimensional display screen 92 along the desired direction while intuitively understanding that a part of the three-dimensional model is indeed moving along the desired direction.

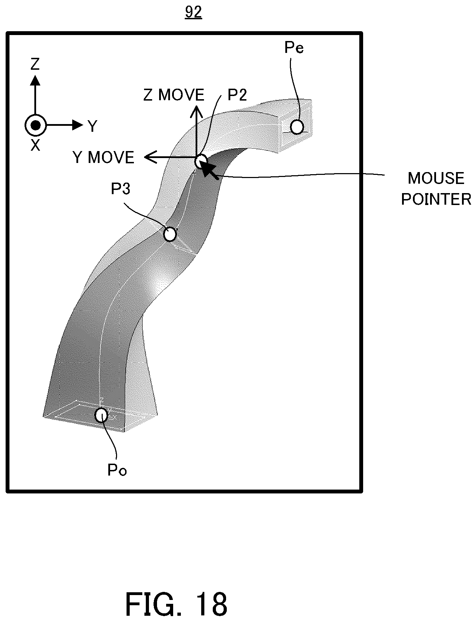

For example, as illustrated in FIG. 18 that illustrates the three-dimensional model displayed on the output screen 92, the three-dimensional model viewed from the X-axis may be displayed on the output screen 92. Namely, the three-dimensional model observed from a viewpoint perpendicular to the YZ plane may be displayed on the output screen 92. In this case, the terminal user may perform the change operation for changing each of the shape information related to the Y-axis and the shape information related to the Z-axis on the output screen 92. For example, the terminal user may perform, as the change operation, each of the operations for moving a part of the three-dimensional model along the Y-axis and the operation for moving a part of the three-dimensional model along the Z-axis on the output screen 92. Namely, the terminal user may perform, as the change operation, the operation for moving a part of the three-dimensional model along the YZ plane on the output screen 92. On the other hand, the terminal user may not perform the change operation for changing the shape information related to the X-axis on the output screen 92. Namely, the terminal user may not perform, as the change operation, the operation for moving a part of the three-dimensional model along the X-axis on the output screen 92. Alternatively, the change operation for changing the shape information related to the X-axis may be prohibited on the output screen 92.

For example, the three-dimensional model viewed from the Y-axis may be displayed on the output screen 92. Namely, the three-dimensional model observed from a viewpoint perpendicular to the ZX plane may be displayed on the output screen 92. In this case, the terminal user may perform the change operation for changing each of the shape information related to the X-axis and the shape information related to the Z-axis on the output screen 92. For example, the terminal user may perform, as the change operation, each of the operations for moving a part of the three-dimensional model along the X-axis and the operation for moving a part of the three-dimensional model along the Z-axis on the output screen 92. Namely, the terminal user may perform, as the change operation, the operation for moving a part of the three-dimensional model along the ZX plane on the output screen 92. On the other hand, the terminal user may not perform the change operation for changing the shape information related to the Y-axis on the output screen 92. Namely, the terminal user may not perform, as the change operation, the operation for moving a part of the three-dimensional model along the Y-axis on the output screen 92. Alternatively, the change operation for changing the shape information related to the Y-axis may be prohibited on the output screen 92.

For example, the three-dimensional model viewed from the Z-axis may be displayed on the output screen 92. Namely, the three-dimensional model observed from a viewpoint perpendicular to the XY plane may be displayed on the output screen 92. In this case, the terminal user may perform the change operation for changing each of the shape information related to the X-axis and the shape information related to the Y-axis on the output screen 92. For example, the terminal user may perform, as the change operation, each of the operations for moving a part of the three-dimensional model along the X-axis and the operation for moving a part of the three-dimensional model along the Y-axis on the output screen 92. Namely, the terminal user may perform, as the change operation, the operation for moving a part of the three-dimensional model along the XY plane on the output screen 92. On the other hand, the terminal user may not perform the change operation for changing the shape information related to the Z-axis on the output screen 92. Namely, the terminal user may not perform, as the change operation, the operation for moving a part of the three-dimensional model along the Z-axis on the output screen 92. Alternatively, the change operation for changing the shape information related to the Z-axis may be prohibited on the output screen 92.

Note that the change operation for changing the shape of the three-dimensional model displayed on the output screen 92 may be allowed to be performed only in each of a case where the three-dimensional model viewed from the X-axis is displayed on the output screen 92, a case where the three-dimensional model viewed from the Y-axis is displayed on the output screen 92, and a case where the three-dimensional model viewed from the Z-axis is displayed on the output screen 92. Namely, the change operation for changing the shape information may be prohibited on the output screen 92, when the three-dimensional model displayed on the output screen 92 is not the three-dimensional model viewed from the X-axis, the three-dimensional model viewed from the Y-axis, and the three-dimensional model viewed from the Z-axis.

There is such a constraint in some cases that the terminal user is not allowed to change the shape of another part of the three-dimensional model while the terminal user is allowed to change the shape of a part of the three-dimensional model. Namely, There is such a constraint in some cases that the terminal user is not allowed to change the shape information related to the shape of another part of the three-dimensional structural object while the terminal user is allowed to change the shape information related to the shape of a part of the three-dimensional structural object. In this case, a first model part of the three-dimensional model whose shape is allowed to be changed may be displayed on the output screen 92. Namely, the first model part of the three-dimensional model representing a part of the three-dimensional structural object whose shape information is allowed to be changed may be displayed on the output screen 92. For example, a display object indicating the first model part (for example, a display object 922 surrounding the first model part illustrated in FIG. 17) may be displayed on the output screen 92. As a result, the terminal user can recognize the first model part of the three-dimensional model whose shape can be changed, and can perform the change operation for changing the shape of at least a part of the first model part.

On the other hand, a second model part of the three-dimensional model whose shape is not allowed to be changed may also be displayed on the output screen 92. Namely, the second model part of the three-dimensional model representing a part of the three-dimensional structural object whose shape information is not allowed to be changed may be displayed on the output screen 92. However, the second model part may be displayed so that a display aspect of the second model part is different from a display aspect of the first model part. As a result, the terminal user can recognize the first model part of the three-dimensional model whose shape is allowed to be changed and the second model part of the three-dimensional model whose shape is not allowed to be changed. Thus, the terminal user can perform the change operation for changing the shape of at least a part of the first model part. The terminal user will not erroneously perform the change operation for changing the shape of at least a part of the second model part. Alternatively, the second model part of the three-dimensional model whose shape is not allowed to be changed may not be displayed on the output screen 92. Even in this case, the terminal user will not erroneously perform the change operation for changing the shape of at least a part of the second model part.

Operation information indicating a detail of the change operation is transmitted from the terminal apparatus 3 to the data generation server 2. The data generation unit 213 of the data generation server 2 determines, based on the operation information transmitted from the terminal apparatus 3, the shape of the three-dimensional model whose shape has been changed by the change operation. Then, the data generation unit 213 sets the shape information based on the shape of the three-dimensional model whose shape has been changed by the change operation. Specifically, the data generation unit 213 may change (in other words, update) the shape information that has already been set (namely, the shape information related to the shape of the three-dimensional model before the shape was changed by the change operation) based on the shape of the three-dimensional model whose shape has been changed by the change operation. As one example, the value of the parameter that defines the shape of the three-dimensional model may be changed from the already set value to the value corresponding to the shape of the three-dimensional model whose shape has been changed by the change operation.

The change of the shape information may be reflected in the input screen 91 displayed on the display apparatus 35 of the terminal apparatus 3. Specifically, the display control unit 211 of the data generation server 2 may generate the GUI information related to the setting GUI 9 including the input screen 91 on which the shape information changed by the change operation is displayed. For example, the display control unit 211 may generate the GUI information related to the setting GUI 9 including the parameter setting GUI 911 in which the value of the parameter changed by the change operation is displayed. As a result, the display apparatus 35 displays the input screen 91 on which the shape information changed by the change operation is displayed. Namely, as illustrated in a lower part of FIG. 17, the input screen 91 displayed by the display apparatus 35 is changed from the input screen 91 on which the shape information that has not been changed by the change operation is displayed to the input screen 91 in which the shape information that has been changed by the change operation is displayed.

In the second modified example, the terminal user can set the shape information by performing the change operation for directly changing the shape of at least a part of the three-dimensional model. Thus, the terminal user can set the shape information intuitively.

### (4-3) Third Modified Example

In the above-described description, the terminal user sets the value of the parameter that defines the shape of at least a part of the three-dimensional structural object by using the input screen 91. In a third modified example, when the user changes (namely, sets again) at least one of a value of a first parameter that defines a first type of shape of at least a part of the three-dimensional structural object and a value of a second parameter that defines a second type of shape of at least a part of the three-dimensional structural obj ect, the data generation unit 213 of the data generation server 2 may automatically set at least one of the values of the first and second parameters again. Specifically, the data generation unit 213 may automatically set at least one of the values of the first and second parameters so that a value of a third parameter that defines a third type of shape of at least a part of the three-dimensional structural object is maintained even when the user changes at least one of the values of the first and second parameters. In this case, the data generation unit 213 generates the three-dimensional model data based on the value of the parameter set by the terminal user using the setting GUI 9 and the value of the parameter automatically set by the data generation unit 213.

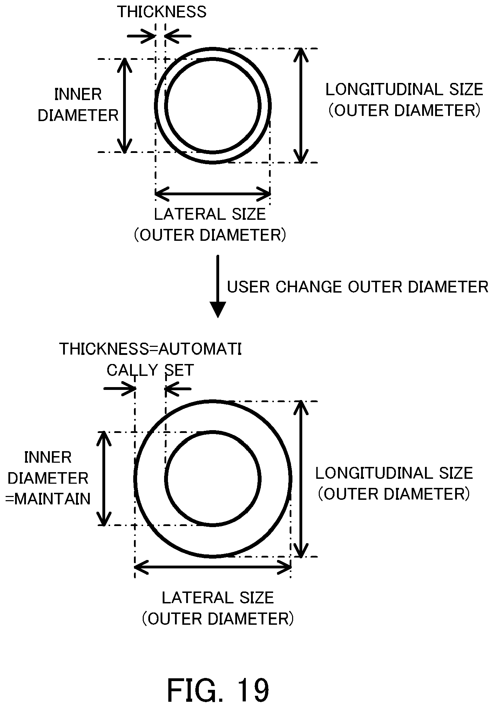

As an example, when the three-dimensional structural object is a pipe, for example, the terminal user may set the value of the parameter that defines the size of the cross-section of the pipe (for example, the size in the longitudinal direction and the lateral direction, which is substantially equivalent to the outer diameter of the pipe) and the value of the parameter that defines the thickness of the wall of the pipe, as described above. In this case, as illustrated in FIG. 19, when the value of the parameter that defines the outer diameter of the pipe (hereinafter, it is referred to as an "outer diameter parameter") is set again by the terminal user, the data generation unit 213 may automatically set the value of the parameter that defines thickness of the wall of the pipe (hereinafter, it is referred to as a "thickness parameter") so that the value of the parameter that defines the inner diameter of the pipe (hereinafter, it is referred to as an "inner diameter parameter") is maintained (namely, is not changed). Alternatively, when the value of the thickness parameter is set again by the terminal user, the data generation unit 213 may automatically set the value of the outer diameter parameter so that the value of the inner diameter parameter is maintained.

In the third modified example, the terminal user can set the shape information related to the shape of the three-dimensional structural object while relatively easily satisfying such a shape constraint condition that a certain type of shape (for example, the inner diameter of the pipe in an example illustrated in FIG. 19) is maintained. Thus, the terminal user can set the shape information that satisfies the shape constraint condition more easily, compared to a case where the shape information needs to be set by the terminal user to satisfy the shape constraint condition.

### (4-4) Fourth Modified Example

In a fourth modified example, the data generation unit 213 may generate, based on the generated three-dimensional model data, object information related to the three-dimensional structural object to be additively built by the build apparatus 1. For example, the data generation unit 213 may generate weight information related to a weight of the three-dimensional structural object as the object information based on the three-dimensional model data. For example, the data generation unit 213 may generate strength information related to a strength of the three-dimensional structural object as the object information based on the three-dimensional model data. For example, the data generation unit 213 may generate build time information related to a time required to additively build the three-dimensional structural object as the object information based on the three-dimensional model data.

Incidentally, in order to generate the build time information, the data generation unit 213 may generate the build control information described above based on the three-dimensional model data and calculate the time required to additively build the three-dimensional structural object based on the generated build control information. Alternatively, the data generation unit 213 may obtain the build control information generated by the control apparatus 17 from the control apparatus 17 of the build apparatus 1 that transmits the three-dimensional model data. In this case, the data generation unit 213 may calculate the time required to additively build the three-dimensional structural object based on the build control information obtained from the control apparatus 17.

The object information generated by the data generation unit 213 may be provided to the terminal user via the setting GUI 9. Namely, the setting GUI 9 including the object information may be displayed on the display apparatus 35 of the terminal apparatus 3. Thus, the display control unit 211 may generate the GUI information related to the setting GUI 9 including the object information based on the object information generated by the data generation unit 213.

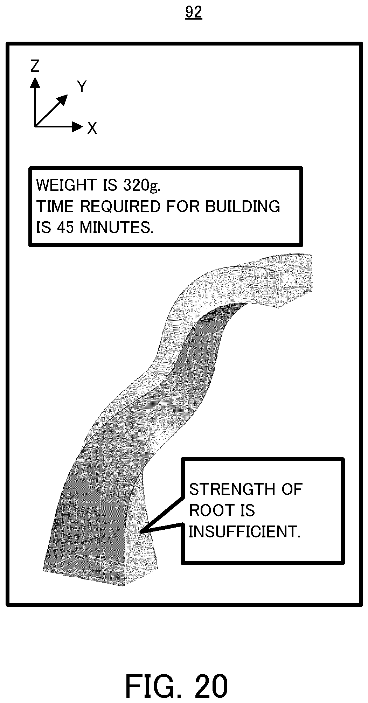

FIG. 20 illustrates one example of the setting GUI 9 including the object information. As illustrated in FIG. 20, the setting GUI 9 indicating the weight information related to the weight of the three-dimensional structural object by using a text message (or other display object) may be displayed. The setting GUI 9 indicating the strength information related to the strength of the three-dimensional structural object by using a text message (or other display object) may be displayed. The setting GUI 9 indicating the build time information related to the time required to additively build the three-dimensional structural object by using a text message (or other display object) may be displayed.

In the fourth modified example, the terminal user can recognize the object information related to the three-dimensional structural object to be additively built by the build apparatus 1. Thus, the terminal user can set the shape information related to the shape of the three-dimensional structural object while referring to the object information. For example, the terminal user may set the shape information by referring to the weight information included in the object information so that the weight of the three-dimensional structural object becomes a desired weight. For example, the terminal user may set the shape information by referring to the strength information included in the object information so that the strength of the three-dimensional structural object becomes a desired strength. For example, the terminal user may set the shape information by referring to the build time information included in the object information so that the time required to build the three-dimensional structural object becomes a desired time.

### (4-5) Other Modified Example of Setting GUI 9

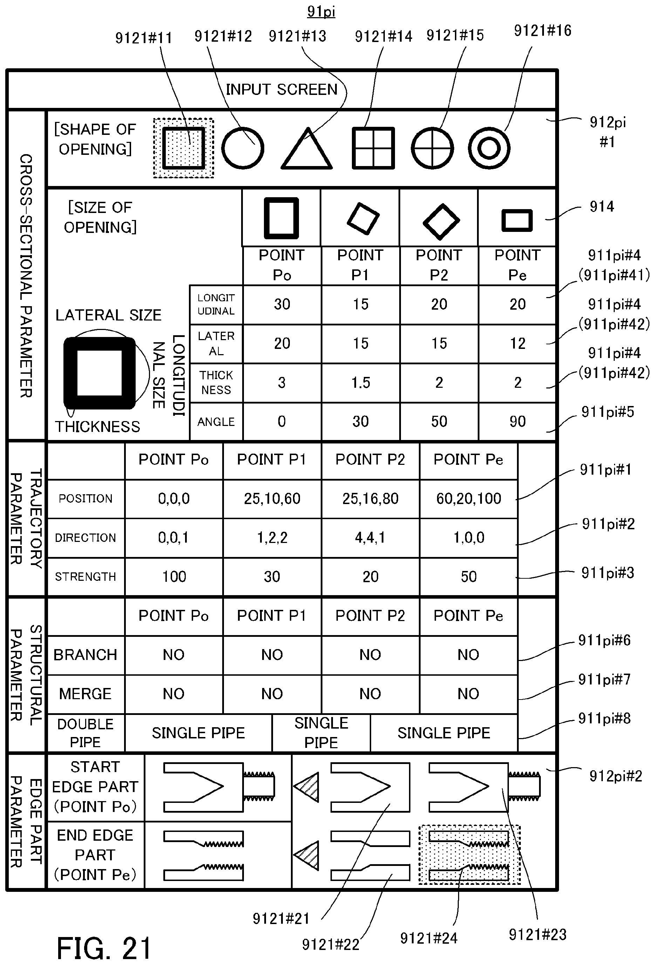

As illustrated in FIG. 21 that illustrates another example of the input screen 91pi for setting the shape information related to the shape of the pipe, the input screen 91pi may include a display GUI 914 for schematically displaying a state (for example, at least one of the size, the shape and the angle) of the cross-section of at least a part of the pipe. For example, in the present example embodiment, the input screen 91pi is used to set the parameter that defines the shape of the cross-section of the pipe at the positions of the plurality of points P through which the pipe passes as described above. In this case, as illustrated in FIG. 21, the display GUI 914 may include a display object indicating a state of the cross-section of the pipe at the start point Po, a display object indicating a state of the cross-section of the pipe at the intermediate point P1, a display object indicating a state of the cross-section of the pipe at the intermediate point P2, and a display object indicating a state of the pipe at the end point Pe. The state of the cross-section of the pipe displayed on the display GUI 914 may be updated each time the shape information is updated by using at least one of the input screen 91pi and the output screen 92.

In the above-described description, the parameter setting GUI 911pi#8 (see FIG. 8) is used to set the parameter that defines the multiple structure of at least a part of the pipe. On the other hand, as illustrated in FIG. 21 that illustrates another example of the input screen 91pi for setting the shape information related to the shape of the pipe, the icon selection GUI 912 may be used to set the multiple structure of at least a part of the pipe. In an example illustrated in FIG. 21, the icon selection GUI 912pi#1 may include an icon 9121#16 that is selectable to set the shape of the cross section of at least a part of the pipe to be a shape corresponding to the multiple pipe (for example, the double pipe).

In the above-described description, the icon selection GUI 912pi#1 includes the icons 9121#14 and 9121#15 each of which is selectable to set the shape of the cross-section of at least a part of the pipe to a shape by which the pipe conduit is divided into the plurality of compartments by the compartment wall. When the icon 9121#14 or 9121#15 is selected, the terminal user may use the input screen 91pi to set the number of divisions of the pipe conduit (namely, the number of compartments formed in the pipe conduit). For example, the input screen 91pi may include the parameter setting GUI 911 for setting the parameter that defines the number of divisions of the pipe conduit (namely, the number of compartments formed in the pipe conduit).

In the above-described description, the terminal user may use the input screen 91pi to add new point through which the pipe passes. On the other hand, depending on a positional relationship between the existing point P already set by the terminal user or the data generation server 2 and the new point P added by the terminal user, there is a possibility that the shape of the pipe passing through both of the existing point P and the new point P an unnatural, unfeasible or unbuildable shape. For example, when a new point that has been added to define the shape of the pipe passing through an existing first point P, the new point P, and an existing second point P is far from the existing first and second points P too much, there is a possibility that the shape of the pipe passing through both of the existing first and second points P and the new point P is an unnatural, unfeasible or unbuildable shape. In this case, the data generation server 2 (for example, the data generation unit 213) may automatically add another new point P so that the shape of the pipe becomes a natural, feasible or buildable shape. Namely, after the terminal user sets the parameter that defines the position of the new point P, the data generation server 2 (for example, the data generation unit 213) may automatically add another point P through which the pipe passes so that the shape of the pipe passing through the new point P added by the terminal user is a natural, feasible, or buildable shape. Alternatively, after the terminal user sets the parameter that defines the position of the new point P, the data generation server 2 (for example, the data generation unit 213) may present, to the terminal user by using the setting GUI 9, a plan for modifying the position of the new point P added by the terminal user so that the shape of the pipe passing through the new point P added by the terminal user is a natural, feasible, or buildable shape. Alternatively, after the terminal user sets the parameter that defines the position of the new point P, the data generation server 2 (for example, the data generation unit 213) may correct the value of the parameter that defines the position of the new point P added by the terminal user so that the shape of the pipe passing through the new point P added by the terminal user becomes a natural, feasible or buildable shape.

When the three-dimensional structural object is formed on the workpiece W as described above, a cutting process for separating the three-dimensional structural object from the workpiece W may be performed. When the cutting process is performed, the data generation unit 213 of the data generation server 2 may generate the three-dimensional model data so that the three-dimensional structural object is formed with a cut-out part that corresponds to a part connecting the three-dimensional structural object and the workpiece W and that corresponds to a margin part to be removed when the cutting process is performed. Namely, the data generation unit 213 may generate the three-dimensional model data representing the three-dimensional model of the three-dimensional structural object having the cut-out part even when the three-dimensional structural object having the shape defined by the shape information set by the user does not have the margin part. In this case, since the three-dimensional structural object built by the build apparatus 1 has the cut-out part, there is a lower possibility that the shape of the three-dimensional structural object separated from the workpiece W by the cutting process is a shape different from the originally expected shape. Moreover, when the three-dimensional model data representing the three-dimensional model of the three-dimensional structural object having the cut-out part is generated, the data generation unit 213 may generate the three-dimensional model data representing the three-dimensional model of the three-dimensional structural object including a marker to distinguish the cut-out part from the three-dimensional structural object. For example, the data generation unit 213 may generate the three-dimensional model data representing the three-dimensional model of the three-dimensional structural object including a line (for example, a groove) indicating a boundary between the cut-out part and the three-dimensional structural obj ect.

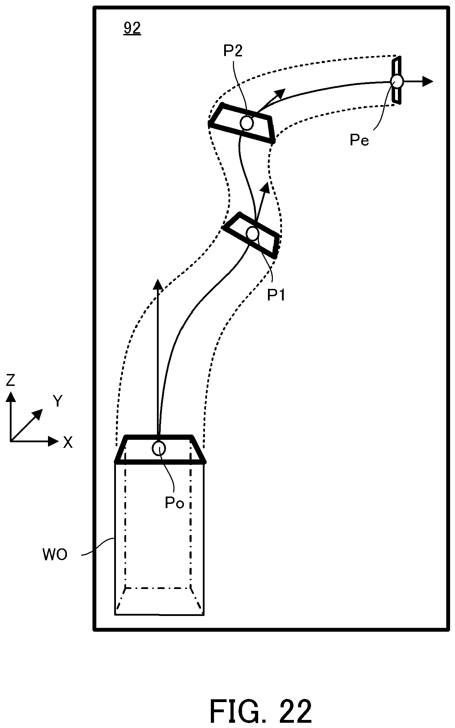

When the three-dimensional structural object is formed on the workpiece W as described above, the output screen 92 may display, in addition to the three-dimensional model based on the shape information set by the terminal user using the input screen 91, a display object WO corresponding to the workpiece W, as illustrated in FIG. 22 that illustrates one example of the output screen 92 included in the setting GUI 9. For example, the display control unit 211 may obtain information related to a shape of the workpiece W and generate the display object WO based on the obtained information related to the shape of the workpiece W. The information related to the shape of the workpiece W may include a measured result of a measurement apparatus (for example, a 3D scanner) configured to measure the shape of the workpiece W. In this case, the display control unit 211 may obtain the information related to the shape of the workpiece W from the measurement apparatus. When the display object WO is displayed in this manner, the terminal user can recognize the three-dimensional model of the three-dimensional structural object together with the workpiece W on which the three-dimensional structural object is actually formed. Thus, the terminal user can intuitively generate the three-dimensional model data.

### (4-6) Modified Example of Data Generation Server 2

In the above-described description, the data generation server 2 transmits the generated three-dimensional model data to the build apparatus 1, but does not transmit it to the terminal apparatus 3. However, the data generation server 2 may transmit the generated three-dimensional model data to the terminal apparatus 3. Namely, the data generation server 2 may provide the generated three-dimensional model data to the terminal user of terminal apparatus 3.

The data generation server 2 may provide the generated three-dimensional model data to the terminal user unconditionally. Alternatively, the data generation server 2 may provide the generated three-dimensional model data to the terminal user who satisfies a certain condition. For example, the data generation server 2 may provide the three-dimensional model data to the terminal user who has actually required the build user to build the three-dimensional structural object based on the three-dimensional model data. On the other hand, for example, the data generation server 2 may not provide the three-dimensional model data to the terminal user who does not actually require the build user to build the three-dimensional structural object based on the three-dimensional model data. Alternatively, the data generation server 2 may provide the three-dimensional model data in a first format to the terminal user who satisfies a certain condition and provide the three-dimensional model data in a second format different from the first format to the terminal user who does not satisfy a certain condition. For example, the data generation server 2 may provide the three-dimensional model data in a format that is relatively more convenient for the terminal user (for example, a STL file format) to the terminal user who has actually required the build user to build the three-dimensional structural object based on the three-dimensional model data. On the other hand, for example, the data generation server 2 may provide the three-dimensional model data in a format that is relatively less convenient for the terminal user (for example, a format representing a solid model) to the terminal user who does not actually require the build user to build the three-dimensional structural object based on the three-dimensional model data.

### (4-7) Other Modified Example

The build apparatus 1 may include a display apparatus that is configured to display the setting GUI 9 (namely, an apparatus that is configured to serve as the display apparatus 35 of the terminal apparatus 3). The build apparatus 1 may include an input apparatus that is used by the build user to operate the setting GUI 9 (namely, an apparatus that is configured to serve as the input apparatus 34 of the terminal apparatus 3). Namely, the build apparatus 1 may include at least a part of the terminal apparatus 3. In this case, the build user may set the shape information by using the setting GUI 9. Furthermore, in this case, the control apparatus 17 of the build apparatus 1 may generate the three-dimensional model data based on the shape information set by the build user. Namely, the control apparatus 17 may include at least a part of the data generation server 2.

In the above-described description, the display apparatus 35 of the terminal apparatus 3 displays the setting GUI 9 including both of the input screen 91 and the output screen 92. However, the display apparatus 35 may display either one of the input screen 91 and the output screen 92 and may not display the other one of the input screen 91 and the output screen 92. Namely, a display mode of the display apparatus 35 may be switched between a mode in which both of the input screen 91 and the output screen 92 are displayed and a mode in which either one of the input screen 91 and the output screen 92 is displayed. In this case, the display mode of the display apparatus 35 may be switched based on the terminal user's instruction.

In the above-described description, the build apparatus 1 melts the build material M by irradiating the build material M with the processing light EL. However, the build apparatus 1 may melts the build material by irradiating the build material M with any energy beam. At least one of a charged particle beam, an electromagnetic wave and the like is one example of any energy beam. At least one of an electron beam, an ion beam and the like is one example of the charged particle beam.

In the above-described description, the build apparatus 1 builds the three-dimensional structural object by performing the additive processing based on the Laser Metal Deposition. However, the build apparatus 1 may build the three-dimensional structural object by performing the additive processing based on another method by which the three-dimensional structural object is formable. Alternatively, the build apparatus 1 may build the three-dimensional structural object by performing a removal processing, in addition to or instead of performing the additive processing. The build apparatus 1 may build the three-dimensional structural object by performing a machining processing, in addition to or instead of performing at least one of the additive processing and the removal processing.

At least a part of the features of each example embodiment described above may be properly combined with at least another part of the features of each example embodiment described above. A part of the features of each example embodiment described above may not be used. Moreover, the disclosures of all publications and United States patents that are cited in each example embodiment described above are incorporated in the disclosures of the present application by reference if it is legally permitted.

The present invention is allowed to be changed, if desired, without departing from the essence or spirit of the invention which can be read from the claims and the entire specification, and a data generation method, a build contract method, a data generation apparatus, a display apparatus, a build method, a computer program and a recording medium, which involve such changes, are also intended to be within the technical scope of the present invention.

### Description of Reference Codes

- SYS: build system
- 1: build apparatus
- 2: data generation server
- 21: arithmetic apparatus
- 211: display control unit
- 212: information obtaining unit
- 213: data generation unit
- 3: terminal apparatus
- 311: display control unit
- 312: information obtaining unit
- 9: setting GUI
- 91: input screen
- 911: parameter setting GUI
- 912: icon selection GUI
- 92: output screen

## Claims

1. A data generation method of generating model data representing a three-dimensional model of a pipe that is an object additively built by a build apparatus, wherein
the data generation method comprises:
automatically setting, as a value of a parameter defining a position of an intermediate part of the pipe, a value of a parameter that is different from a value of a parameter defining a shape of the pipe designated by a user using an input screen displayed on a display apparatus and that defines a position away from a position of an edge part of the pipe by a first distance;
providing a three-dimensional model to an output screen of the display apparatus based on the value of the parameter designated by the user using the input screen and the value of the parameter automatically set; and
generating the model data based on the value of the parameter designated by the user using the input screen and the value of the parameter automatically set.

2. The data generation method according to claim 1, wherein
the data generation method further comprises obtaining a value of a parameter that defines the position of the edge part of the pipe designated by the user.

3. The data generation method according to claim 1 or 2, wherein
the position that is away from the position of the edge part of the pipe by the first distance is automatically set as the value of the parameter defining the position of the intermediate part of the pipe even when there is no designation from the user, after the user designates a value of a parameter that defines the position of the edge part of the pipe.

4. The data generation method according to any one of claims 1 to 3, wherein
the user is not allowed to designate, as the value of the parameter defining the position of the intermediate part of the pipe, a position in a range in which a distance from the edge part of the pipe is shorter than the first distance.

5. The data generation method according to any one of claims 1 to 4, wherein
an area in which a screw part or a screw hole part is formed is included in a first range in which a distance from the edge part of the pipe is shorter than the first distance.

6. The data generation method according to any one of claims 1 to 5, wherein
a column part extending along a first axial direction is included in a first range in which a distance from the edge part of the pipe is shorter than the first distance,
the column part includes an area in which a screw part or a screw hole part is formed.

7. A data generation method of generating model data representing a three-dimensional model of a pipe that is an object additively built by a build apparatus, wherein
the data generation method comprises:
providing, to an output screen of a display apparatus, a three-dimensional model based on a value of a parameter defining a shape of the pipe designated by a user using an input screen displayed on the display apparatus; and
changing the value of the parameter defining the shape of the pipe based on a change operation of the user to the output screen for changing a shape of the three-dimensional model displayed on the output screen,
the three-dimensional model is a three-dimensional model represented in a three-dimensional coordinate system in which a first axis, a second axis, and a third axis are perpendicular to one another,
the three-dimensional model viewed from the third axis is displayable on the output screen,
on the output screen on which the three-dimensional model viewed from the third axis is displayed, the user is allowed to perform the change operation for changing a value of a parameter related to the first axis and a value of a parameter related to the first axis,
a value of a parameter displayed on the input screen is changed, based on the change operation, to be the value of the parameter changed by the change operation and that defines a shape of the three-dimensional model,
the model data is generated based on the value of the parameter displayed on the input screen.

8. The data generation method according to claim 7, wherein
the three-dimensional model viewed from the first axis is further displayable on the output screen,
on the output screen on which the three-dimensional model viewed from the first axis is displayed, the user is allowed to perform the change operation for changing a value of a parameter related to the second axis and a value of a parameter related to the third axis.

9. The data generation method according to claim 8, wherein
the three-dimensional model viewed from the second axis is further displayable on the output screen,
on the output screen on which the three-dimensional model viewed from the second axis is displayed, the user is allowed to perform the change operation for changing a value of a parameter related to the third axis and a value of a parameter related to the first axis.

10. The data generation method according to any one of claims 7 to 10, wherein
the change of the value of the parameter based on the change operation of the user is allowable only in a case where the three-dimensional model viewed from the first axis is displayed on the output screen, a case where the three-dimensional model viewed from the second axis is displayed on the output screen, and a case where the three-dimensional model viewed from the third axis is displayed on the output screen.

11. A data generation method of generating model data representing a three-dimensional model of a pipe that is an object additively built by a build apparatus, wherein
the data generation method comprises:
providing, to an output screen of a display apparatus, a three-dimensional model based on a value of a parameter defining a shape of the pipe designated by a user using an input screen displayed on the display apparatus;
changing the value of the parameter defining the shape of the pipe based on a change operation of the user to the output screen for changing a shape of the three-dimensional model displayed on the output screen; and
generating the model data based on the value of the parameter designated by using the input screen and the value of the parameter changed by using the output screen,
on the output screen, a part of the three-dimensional model at which the value of the parameter defining the shape of the pipe is changeable by the change operation is displayed.

12. A data generation method of generating model data representing a three-dimensional model of a pipe that is an object additively built by a build apparatus, wherein
the data generation method comprises:
generating the model data based on an outer diameter of the pipe and a length between an outer surface and an inner surface of the pipe that are designated as a value of a parameter defining a shape of the pipe by a user using an input screen displayed on a display apparatus; and
setting the length between the outer surface and the inner surface of the pipe again so that an inner diameter of the pipe is maintained constant when the user re-designates the outer diameter by using the input screen.

13. A data generation method of generating model data representing a three-dimensional model of a pipe that is an object additively built by a build apparatus, wherein
the data generation method comprises:
generating the model data based on a length between an outer surface and an inner surface of the pipe that is designated as a value of a parameter defining a shape of the pipe by a user using an input screen displayed on a display apparatus; and
setting an outer diameter of the pipe again so that an inner diameter of the pipe is maintained constant when the user re-designates the length between the outer surface and the inner surface by using the input screen.

14. A data generation method of generating model data representing a three-dimensional model of a pipe that is an object additively built by a build apparatus, wherein
the data generation method comprises:
automatically setting a value of other parameter when a value of one parameter out of an outer diameter of the pipe and a length between an outer surface and an inner surface of the pipe, which has been set as a value of a parameter defining a shape of the pipe by a user using an input screen displayed on a display apparatus, is set again by the user using the input screen; and
generating the model data based on the value of the parameter set by the user and the value of the parameter automatically set.

15. The data generation method according to claim 14, wherein
automatically setting the value of the other parameter includes automatically setting the value of the other parameter so that an inner diameter is maintained constant.

16. A data generation method of generating model data representing a three-dimensional model of an object that is additively built by a build apparatus, wherein
the data generation method comprises:
generating the model data based on a value of a parameter defining a shape of the object designated by a user using an input screen displayed on a display apparatus; and
setting a value of a parameter defining a position away from a position of a first part of the object by a first distance.

17. The data generation method according to claim 16, wherein
the position that is away from the first part of the object by the first distance is automatically set as a value of a second parameter defining a position of a second part of the object even when there is no designation from the user, after the user designates a value of a first parameter that defines the position of the first part of the object.

18. The data generation method according to claim 16 or 17, wherein
the user is not allowed to designate, as a value of a parameter defining a position of a part of the object, a position in a range in which a distance from the position of the first part of the object is shorter than the first distance.

19. The data generation method according to any one of claims 16 to 18, wherein
an area in which a predetermined shape is formed is included in a first range in which a distance from the position of the first part of the object is shorter than the first distance.

20. The data generation method according to any one of claims 16 to 19, wherein
a column part extending along a first axial direction is included in a first range in which a distance from the position of the first part of the object is shorter than the first distance,
the column part includes an area in which a predetermined shape is formed.

21. The data generation method according to claim 17, wherein
setting the value of the second parameter includes setting the value of the second parameter based on the value of the first parameter.

22. The data generation method according to claim 17 or 21, wherein
setting the value of the second parameter includes setting the value of the second parameter without the user designating the value of the second parameter when the user designates the value of the first parameter by using the input screen,
the data generation method further comprising setting a value of a third parameter defining a shape of a third part of the object between the first part and the second part.

23. The data generation method according to claim 17, 21 or 21, wherein
setting the value of the second parameter includes setting a position determined based on the first parameter as the value of the second parameter.

24. The data generation method according to claim 22, wherein
setting the value of the third parameter includes setting the value of the third parameter so that the shape of the third part is a predetermined shape.

25. The data generation method according to any one of claims 17 and 21 to 24, wherein
the object is a pipe,
the first part includes an edge part of the pipe,
the second part includes a part of the object away from the edge part by a predetermined distance.

26. A data generation method of generating model data representing a three-dimensional model of an object that is additively built by a build apparatus, wherein
the data generation method comprises:
providing, to an output screen of a display apparatus, a three-dimensional model based on a value of a parameter defining a shape of the object designated by a user using an input screen displayed on the display apparatus;
changing the value of the parameter defining the shape of the object based on a change operation of the user to the output screen for changing a shape of the three-dimensional model displayed on the output screen; and
generating the model data based on the value of the parameter designated by using the input screen and the value of the parameter changed by using the output screen.

27. A data generation method of generating model data representing a three-dimensional model of an object that is additively built by a build apparatus, wherein
the data generation method comprises:
providing, to an output screen of a display apparatus, a three-dimensional model based on a value of a parameter defining a shape of the object designated by a user using an input screen displayed on the display apparatus;
changing, based on a change operation of the user to the output screen for changing a shape of the three-dimensional model displayed on the output screen, a value of a parameter displayed on the input screen to be the value of the parameter changed by the change operation and that defines the shape of the three-dimensional model; and
generating the model data based on the value of the parameter displayed on the input screen.

28. A data generation method of generating model data representing a three-dimensional model of an object that is additively built by a build apparatus, wherein
the data generation method comprises:
providing, to an output screen of a display apparatus, a three-dimensional model based on a value of a parameter defining a shape of the object designated by a user using an input screen displayed on the display apparatus;
changing the value of the parameter defining the shape of the object based on a change operation of the user to the output screen for changing a shape of the three-dimensional model displayed on the output screen; and
generating the model data based on the value of the parameter designated by using the input screen and the value of the parameter changed by using the output screen,
on the output screen, a part of the three-dimensional model at which the value of the parameter defining the shape of the object is changeable by the change operation is displayed.

29. The data generation method according to any one of claims 26 to 28, wherein
the change operation includes an operation capable of moving a part of the three-dimensional model in the output screen.

30. The data generation method according to any one of claims 26 to 29, wherein
the change operation includes an operation capable of moving a first part, which is a part of the three -dimensional model, along a second axial direction that is perpendicular to a first axial direction and a third axial direction that is perpendicular to the first axial direction and the second axial direction without moving the first part along the first axial direction in a three-dimensional coordinate system.

31. The data generation method according to any one of claims 26 to 30, wherein
the change operation includes an operation capable of moving a part of the three-dimensional model in a direction along a predetermined plane in the output screen.

32. The data generation method according to claim 31, wherein
the output screen displays the three-dimensional model viewed from a viewpoint intersecting with the predetermined plane.

33. The data generation method according to any one of claims 26 to 32, wherein
the three-dimensional model is a three-dimensional model represented in a three-dimensional coordinate system in which a first axis, a second axis, and a third axis are perpendicular to one another,
the three-dimensional model viewed from the third axis is displayable on the output screen,
on the output screen on which the three-dimensional model viewed from the third axis is displayed, the user is allowed to perform the change operation for changing a parameter related to the first axis and a parameter related to the first axis on a part of the object.

34. The data generation method according to claim 33, wherein
the three-dimensional model viewed from the first axis is further displayable on the output screen,
on the output screen on which the three-dimensional model viewed from the first axis is displayed, the user is allowed to perform the change operation for changing a value of the parameter related to the second axis and a value of a parameter related to the third axis.

35. The data generation method according to claim 34, wherein
the three-dimensional model viewed from the second axis is further displayable on the output screen,
on the output screen on which the three-dimensional model viewed from the second axis is displayed, the user is allowed to perform the change operation for changing the value of the parameter related to the third axis and a value of the parameter related to the first axis.

36. The data generation method according to any one of claims 33 to 35, wherein
the change of the value of the parameter defining the shape of the object based on the change operation of the user is allowable only in a case where the three-dimensional model viewed from the first axis is displayed on the output screen, a case where the three-dimensional model viewed from the second axis is displayed on the output screen, and a case where the three-dimensional model viewed from the third axis is displayed on the output screen.

37. The data generation method according to any one of claims 26 to 36, wherein
the change operation includes an operation for changing at least one of a value of a parameter related to a position of the object and a value of a parameter related to a size of the obj ect.

38. The data generation method according to any one of claims 26 to 37, wherein
the output screen displays a part of the three-dimensional model at which the value of the parameter defining the shape of the object is changeable by the change operation.

39. The data generation method according to any one of claims 26 to 38, wherein
an icon defining the shape of the object is displayable on the input screen,
a value of a parameter defining a position of the icon is set by the user dragging and dropping the icon to the output screen.

40. The data generation method according to claim 26 or 28, wherein
the value of the parameter that has been already set is displayable on the input screen,
the value of the parameter displayed on the input screen is changed, based on the change operation, to be the value of the parameter changed by the change operation and that defines the shape of the three-dimensional model.

41. A data generation method of generating model data representing a three-dimensional model of an object that is additively built by a build apparatus, wherein
the data generation method comprises:
generating the model data based on a first parameter and a second parameter, the first parameter is a parameter defining a shape of the object designated by a user using an input screen displayed on a display apparatus, the second parameter is a parameter defining the shape of the object; and
setting the second parameter, which has been designated by the user, again so that a third parameter related to the shape of the object is maintained constant when the user re-designates the first parameter by using the input screen.

42. The data generation method according to claim 41, wherein
the first parameter includes a parameter related to a first type of size of the object,
the second parameter includes a parameter related to a second type of size of the object that is different from the first type of size of the object,
the third parameter includes a parameter related to a third type of size of the object that is different from the first and second types of size of the object.

43. The data generation method according to claim 41 or 42, wherein
the object is a pipe,
the first parameter includes a parameter related to one of an outer diameter, an inner diameter, and a thickness of a pipe wall of the pipe,
the second parameter includes a parameter related to another one of the outer diameter, the inner diameter, and the thickness,
the third parameter includes a parameter related to residual one of the outer diameter, the inner diameter, and the thickness.

44. The data generation method according to any one of claims 1 to 43, wherein
the data generation method further comprises providing information related to the object additively built by the build apparatus based on the model data.

45. The data generation method according to claim 44, wherein
the information related to the object includes at least one of information related to a weight of the object, information related to a time required to additively build the object, and information related to a strength of the object.

46. The data generation method according to any one of claims 1 to 45, wherein
the parameter includes a parameter related to a size of at least a part of the object.

47. The data generation method according to any one of claims 1 to 46, wherein
the parameter includes a parameter related to a position of at least a part of the object.

48. The data generation method according to any one of claims 1 to 47, wherein
the data generation method further comprises providing information related to the object additively built by the build apparatus based on the model data.

49. The data generation method according to claim 48, wherein
the information related to the object includes at least one of information related to a weight of the object, information related to a time required to additively build the object, and information related to a strength of the object.

50. The data generation method according to any one of claims 1 to 49, wherein
the build apparatus performs an additive building based on a Laser Metal Deposition (LMD).

51. A build contract method of contracting to additively build a pipe, wherein
the build contract method comprises:
providing a display content related to an input screen to a user;
providing, to the input screen, a content of a value of a parameter defining a shape of the pipe designated by a user using an input screen displayed on a display apparatus;
automatically setting, as a value of a parameter defining a position of an intermediate part of the pipe, a value of a parameter that is different from the value of the parameter defining the shape of the pipe designated by the user using the input screen and that defines a position away from a position of an edge part of the pipe by a first distance;
providing a three-dimensional model to an output screen of the display apparatus based on the value of the parameter designated by the user using the input screen and the value of the parameter automatically set; and
providing, to an output screen of the display apparatus, a three-dimensional model based on the value of the parameter designated by the user using the input screen and the value of the parameter automatically set.

52. A build contract method of contracting to additively build a pipe, wherein
the build contract method comprises:
providing a display content related to an input screen to a user;
providing, to the input screen, a content of a value of a parameter defining a shape of the pipe designated by a user using an input screen displayed on a display apparatus;
providing, to an output screen of the display apparatus, a three-dimensional model based on the value of the parameter designated by the user; and
changing the value of the parameter defining the shape of the pipe based on a change operation of the user to the output screen for changing a shape of the three-dimensional model displayed on the output screen,
the three-dimensional model is a three-dimensional model represented in a three-dimensional coordinate system in which a first axis, a second axis, and a third axis are perpendicular to one another,
the three-dimensional model viewed from the third axis is displayable on the output screen,
on the output screen on which the three-dimensional model viewed from the third axis is displayed, the user is allowed to perform the change operation for changing a value of a parameter related to the first axis and a value of a parameter related to the first axis,
a value of a parameter displayed on the input screen is changed, based on the change operation, to be the value of the parameter changed by the change operation and that defines a shape of the three-dimensional model.

53. A build contract method of contracting to additively build a pipe, wherein
the build contract method comprises:
providing a display content related to an input screen to a user;
providing, to the input screen, a content of a value of a parameter defining a shape of the pipe designated by a user using an input screen displayed on a display apparatus;
providing, to an output screen of the display apparatus, a three-dimensional model based on the value of the parameter designated by the user; and
changing the value of the parameter defining the shape of the pipe based on a change operation of the user to the output screen for changing a shape of the three-dimensional model displayed on the output screen,
on the output screen, a part of the three-dimensional model at which the value of the parameter defining the shape of the pipe is changeable by the change operation is displayed.

54. A build contract method of contracting to additively build a pipe, wherein
the build contract method comprises:
providing a display content related to an input screen to a user;
providing, to the input screen, a content of an outer diameter of the pipe and a length between an outer surface and an inner surface of the pipe that are designated as a value of a parameter defining a shape of the pipe by a user using an input screen displayed on a display apparatus; and
setting the length between the outer surface and the inner surface of the pipe again so that an inner diameter of the pipe is maintained constant when the user re-designates the outer diameter by using the input screen.

55. A build contract method of contracting to additively build a pipe, wherein
the build contract method comprises:
providing a display content related to an input screen to a user;
providing, to the input screen, a content of a length between an outer surface and an inner surface of the pipe that is designated as a value of a parameter defining a shape of the pipe by a user using an input screen displayed on a display apparatus; and
setting an outer diameter of the pipe again so that an inner diameter of the pipe is maintained constant when the user re-designates the length between the outer surface and the inner surface by using the input screen.

56. A build contract method of contracting to additively build a pipe, wherein
the build contract method comprises:
providing a display content related to an input screen to a user;
providing, to the input screen, a content of a value of a parameter defining a shape of the pipe designated by a user using an input screen displayed on a display apparatus; and
automatically setting a value of other parameter when a value of one parameter out of an outer diameter of the pipe and a length between an outer surface and an inner surface of the pipe, which has been set as the value of the parameter defining the shape of the pipe by the user using the input screen, is set again by the user using the input screen.

57. A build contract method of contracting to additively build an object, wherein
the build contract method comprises:
providing a display content related to an input screen to a user;
providing, to the input screen, a content of a value of a parameter defining a shape of the object designated by a user using an input screen displayed on a display apparatus; and
setting a value of a parameter defining a position away from a position of a first part of the object by a first distance.

58. A build contract method of contracting to additively build an object, wherein
the build contract method comprises:
providing a display content related to an input screen to a user;
providing, to the input screen, a content of a value of a parameter defining a shape of the object designated by a user using an input screen displayed on a display apparatus;
providing, to an output screen of the display apparatus, a three-dimensional model based on the value of the parameter designated by the user; and
changing the value of the parameter defining the shape of the object based on a change operation of the user to the output screen for changing a shape of the three-dimensional model displayed on the output screen.

59. A build contract method of contracting to additively build an object, wherein
the build contract method comprises:
providing a display content related to an input screen to a user;
providing, to the input screen, a content of a value of a parameter defining a shape of the object designated by a user using an input screen displayed on a display apparatus;
providing, to an output screen of the display apparatus, a three-dimensional model based on the value of the parameter designated by the user;
changing, based on a change operation of the user to the output screen for changing a shape of the three-dimensional model displayed on the output screen, a value of a parameter displayed on the input screen to be the value of the parameter changed by the change operation and that defines the shape of the three-dimensional model; and
generating the model data based on the value of the parameter displayed on the input screen.

60. A build contract method of contracting to additively build an object, wherein
the build contract method comprises:
providing a display content related to an input screen to a user;
providing, to the input screen, a content of a value of a parameter defining a shape of the object designated by a user using an input screen displayed on a display apparatus;
providing, to an output screen of the display apparatus, a three-dimensional model based on the value of the parameter designated by the user; and
changing the value of the parameter defining the shape of the object based on a change operation of the user to the output screen for changing a shape of the three-dimensional model displayed on the output screen,
on the output screen, a part of the three-dimensional model at which the value of the parameter defining the shape of the object is changeable by the change operation is displayed.

61. A build contract method of contracting to additively build an object, wherein
the build contract method comprises:
providing a display content related to an input screen to a user;
providing, to the input screen, a content of values of a first parameter and a second parameter, the first parameter is a parameter defining a shape of the object by a user using the input screen displayed on a display apparatus, the second parameter is a parameter defining the shape of the object; and
setting the second parameter, which has been designated by the user, again so that a third parameter related to the shape of the object is maintained constant when the user re-designates the first parameter by using the input screen.

62. A data generation apparatus configured to generate model data representing a three-dimensional model of a pipe that is an object additively built by a build apparatus, wherein
the data generation apparatus is configured to:
automatically set, as a value of a parameter defining a position of an intermediate part of the pipe, a value of a parameter that is different from a value of a parameter defining a shape of the pipe designated by a user using an input screen displayed on a display apparatus and that defines a position away from a position of an edge part of the pipe by a first distance; and
provide a three-dimensional model to an output screen of the display apparatus based on the value of the parameter designated by the user using the input screen and the value of the parameter automatically set.

63. A data generation apparatus configured to generate model data representing a three-dimensional model of a pipe that is an object additively built by a build apparatus, wherein
the data generation apparatus is configured to:
provide, to an output screen of a display apparatus, a three-dimensional model based on a value of a parameter defining a shape of the pipe designated by a user using an input screen displayed on the display apparatus; and
change the value of the parameter defining the shape of the pipe based on a change operation of the user to the output screen for changing a shape of the three-dimensional model displayed on the output screen,
the three-dimensional model is a three-dimensional model represented in a three-dimensional coordinate system in which a first axis, a second axis, and a third axis are perpendicular to one another,
the three-dimensional model viewed from the third axis is displayable on the output screen,
on the output screen on which the three-dimensional model viewed from the third axis is displayed, the user is allowed to perform the change operation for changing a value of a parameter related to the first axis and a value of a parameter related to the first axis,
a value of a parameter displayed on the input screen is changed, based on the change operation, to be the value of the parameter changed by the change operation and that defines a shape of the three-dimensional model,
the model data is generated based on the value of the parameter displayed on the input screen.

64. A data generation apparatus configured to generate model data representing a three-dimensional model of a pipe that is an object additively built by a build apparatus, wherein
the data generation apparatus is configured to:
provide, to an output screen of a display apparatus, a three-dimensional model based on a value of a parameter defining a shape of the pipe designated by a user using an input screen displayed on the display apparatus; and
change the value of the parameter defining the shape of the pipe based on a change operation of the user to the output screen for changing a shape of the three-dimensional model displayed on the output screen,
on the output screen, a part of the three-dimensional model at which the value of the parameter defining the shape of the pipe is changeable by the change operation is displayed,
the data generation apparatus is configured to generate the model data based on the value of the parameter designated by using the input screen and the value of the parameter changed by using the output screen.

65. A data generation apparatus configured to generate model data representing a three-dimensional model of a pipe that is an object additively built by a build apparatus, wherein
the data generation apparatus is configured to:
generate the model data based on an outer diameter of the pipe and a length between an outer surface and an inner surface of the pipe that are designated as a value of a parameter defining a shape of the pipe by a user using an input screen displayed on a display apparatus; and
set the length between the outer surface and the inner surface of the pipe again so that an inner diameter of the pipe is maintained constant when the user re-designates the outer diameter by using the input screen.

66. A data generation apparatus configured to generate model data representing a three-dimensional model of a pipe that is an object additively built by a build apparatus, wherein
the data generation apparatus is configured to:
generate the model data based on a length between an outer surface and an inner surface of the pipe that is designated as a value of a parameter defining a shape of the pipe by a user using an input screen displayed on a display apparatus; and
set an outer diameter of the pipe again so that an inner diameter of the pipe is maintained constant when the user re-designates the length between the outer surface and the inner surface by using the input screen.

67. A data generation apparatus configured to generate model data representing a three-dimensional model of a pipe that is an object additively built by a build apparatus, wherein
the data generation apparatus is configured to:
automatically set a value of other parameter when a value of one parameter out of an outer diameter of the pipe and a length between an outer surface and an inner surface of the pipe, which has been set as a value of a parameter defining a shape of the pipe by a user using an input screen displayed on a display apparatus, is set again by the user using the input screen; and
generate the model data based on the value of the parameter set by the user and the value of the parameter automatically set.

68. A data generation apparatus configured to generate model data representing a three-dimensional model of an object that is additively built by a build apparatus, wherein
the data generation apparatus is configured to:
generate the model data based on a value of a parameter defining a shape of the object designated by a user using an input screen displayed on a display apparatus; and
set a value of a parameter defining a position away from a position of a first part of the object by a first distance.

69. A data generation apparatus configured to generate model data representing a three-dimensional model of an object that is additively built by a build apparatus, wherein
the data generation apparatus is configured to:
provide, to an output screen of a display apparatus, a three-dimensional model based on a value of a parameter defining a shape of the object designated by a user using an input screen displayed on the display apparatus;
change the value of the parameter defining the shape of the object based on a change operation of the user to the output screen for changing a shape of the three-dimensional model displayed on the output screen; and
generate the model data based on the value of the parameter designated by using the input screen and the value of the parameter changed by using the output screen.

70. A data generation apparatus configured to generate model data representing a three-dimensional model of an object that is additively built by a build apparatus, wherein
the data generation apparatus is configured to:
provide, to an output screen of a display apparatus, a three-dimensional model based on a value of a parameter defining a shape of the object designated by a user using an input screen displayed on the display apparatus;
change, based on a change operation of the user to the output screen for changing a shape of the three-dimensional model displayed on the output screen, a value of a parameter displayed on the input screen to be the value of the parameter changed by the change operation and that defines the shape of the three-dimensional model; and
generate the model data based on the value of the parameter designated by using the input screen and the value of the parameter changed by using the output screen.

71. A data generation apparatus configured to generate model data representing a three-dimensional model of an object that is additively built by a build apparatus, wherein
the data generation apparatus is configured to:
provide, to an output screen of a display apparatus, a three-dimensional model based on a value of a parameter defining a shape of the object designated by a user using an input screen displayed on the display apparatus;
change the value of the parameter defining the shape of the object based on a change operation of the user to the output screen for changing a shape of the three-dimensional model displayed on the output screen; and
generate the model data based on the value of the parameter designated by using the input screen and the value of the parameter changed by using the output screen,
on the output screen, a part of the three-dimensional model at which the value of the parameter defining the shape of the object is changeable by the change operation is displayed.

72. A data generation apparatus configured to generate model data representing a three-dimensional model of an object that is additively built by a build apparatus, wherein
the data generation apparatus is configured to:
generate the model data based on a first parameter and a second parameter, the first parameter is a parameter defining a shape of the object designated by a user using an input screen displayed on a display apparatus, the second parameter is a parameter defining the shape of the object; and
set the second parameter, which has been designated by the user, again so that a third parameter related to the shape of the object is maintained constant when the user re-designates the first parameter by using the input screen.

73. A display apparatus comprising:
an obtaining unit configured to obtain information related to the input screen from the data generation apparatus according to any one of claims 65 to 68 and 72; and
display unit configured to display the input screen based on the information obtained by the obtaining unit.

74. A display apparatus comprising:
an obtaining unit configured to obtain information related to the input screen and the output screen from the data generation apparatus according to any one of claims 62 to 64 and 69 to 71; and
display unit configured to display the input screen and the output screen based on the information obtained by the obtaining unit.

75. A build method of building an object, wherein
the build method comprises:
generating the model data by using the data generation method according to any one of claims 1 to 50; and
controlling a build apparatus to build the object based on the model data.

76. A build method of building an object, wherein
the build method comprises:
generating the model data by using the data generation apparatus according to any one of claims 62 to 72; and
controlling a build apparatus to build the object based on the model data.

77. The build method according to claim 75 or 76, wherein
controlling the build apparatus includes:
generating, based on the model data, control data for controlling the build apparatus to build the object; and
controlling the build apparatus based on the control data.

78. A computer program that allows a computer to execute the data generation method according to any one of claims 1 to 50.

79. A computer program that allows a computer to execute the build contract method according to any one of claims 51 to 61.

80. A computer program that allows a computer to execute the build method according to any one of claims 76 to 77.

81. A recording medium on which the computer program according to any one of claims 78 to 80 is recorded.
